(19) Europäisches Patentamt / European Patent Office / Office européen des brevets

(11) **EP 1 953 900 A1**

(12) **EUROPEAN PATENT APPLICATION**

(43) Date of publication:
**06.08.2008 Bulletin 2008/32**

(51) Int Cl.:
*H02K 7/12* (2006.01)     *H02K 21/14* (2006.01)
*H02K 1/27* (2006.01)

(21) Application number: **07021893.8**

(22) Date of filing: **12.11.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(30) Priority: **16.11.2006 AR P060105017** | (71) Applicant: **Farro, Jorge Eduardo**<br>**7600 Buenos Aires (AR)**<br><br>(72) Inventor: **Farro, Jorge Eduardo**<br>**7600 Buenos Aires (AR)**<br><br>(74) Representative: **Canela Giménez, Teresa**<br>**Canela Patentes y Marcas**<br>**C/ Girona, 148-1.o-2a**<br>**08037 Barcelona (ES)** |

(54) **Electric machine allowing an axial rotor displacement**

(57)    Electric motor or generator, with power coils mounted on a statoric body, being each a source/load of energy independant the one of the another and interconnectables on the machine body in partial series such that a plurality of voltage and current levels is available. Coils and its interconnections are of low impedance. The stationary bornes are connected directly to an electronic power control.

The exitation is disposed on the rotor by permanent mag-nets, which are mounted on an axial slider able to move from the outer side via a telescopic assemble and a hollow shaft.

Moreover a cylindrical coaxial hollow case out of magnetic material, into which the magnet rotor can be driven to variate the exitation for a given machine characteristics. The cooling of the machine is done by forced air by an interchange surface of radial extensions on stator laminations.

FIG.41        SECTION A-A

EP 1 953 900 A1

**Description**

FIELD OF THE INVENTION: ELECTROMECANICAL, ROTARY ELECTRIC MACHINES. ENERGY CONVERSION.

STATE OF THE TECHNOLOGY AND PROBLEMS TO SOLVE

THE STATE OF THE TECHNOLOGY RELATED TO THE ROTARY ELECTRIC MACHINES , AS MOTORS AND GENERATORS, IT IS SO THAT, THAT MAKE LITERALLY IMPOSIBLE TO REACH DESIGN ELECTRICAL AUTOMOBILES VEHICLES, WITH PERFORMANCE ENOUGH TO REPLACE THE AUTOMO BILES OF INTERNAL COMBUSTION.

THE ROTARY ELECTRIC MACHINES ON THE RANGE OF POWER SUITABLE FOR THE PROPULSION OF AUTOMOBILE VEHICLES, FEATURES THE FOLLOWING TROUBLES:

IN EXCESS DIMENSIONS;
UNACEPTABLE WEIGHT;
IN EXCESS ARISED OPERATINGS VOLTAGES;
LOW EFFICIENCY RELATED TO WEIGHT AND SIZE;
UNFEASIBLE REVERSIBILITY, SPECIALLY WHEN POWER CONTROL IS EXECUTED;
DIFFICULTLY CONTROLABILITY VIA ELECTRONIC POWER CONTROL;
HIGH DEGREE OF UNADAPTATION FOR SUPPLY VIA ELECTRICS ACUMULATORS AND SIMILAR SOURCES;

UNACCESIBLES INITIAL COSTS AND DEPENDING OF CIRCUMSTANCES, HIGH OPERATING COSTS. THESE INSUITABILITIS ARE PRESENT IN A HIGH DEGREE, IN SUCH A WAY THAT EACH ONE LONELY MAKE IMPOSSIBLE THE CONCEPTION OF AN AUTOMOBILE VEHICLE, BEING THE JOINED EFFECT TRULY CATASTROPHIC. TO DEMOSTRATE THIS, IN THE FOLLOWING IS CONSIDERED AN EXAMPLE IN THAT IS ATEMPTED THE PROPULSION OF A LITTLE AUTOMOBILE LIKE TWO DOORS CLASS BY MEANS OF MACHINES INTO THE STATE OF THE TECHNOLOGY.
IS ASSUMED FOR THIS MOVIL A WEIGT OF 500 kgf, INCLUDING TWO PASSENGERS WEIGTH. ADMITING THAT FOR A GOOD VEHICLE DOCILITY, IT IS REASONABLE TO DISPOSE 60 H.P. OF POWER PER EACH 1000kgf OF TOTAL VEHICLE WEIGTH, THEN WOULD BE REQUIRED AROUND 30 H.P FOR THE CASE, THEN WE HAVE THAT: A STANDARD TRIPHASIC A.C. MOTOR OF 50 Hz AND 22kw ABLE TO DEPLOY A POWER OF 30 H.P. AT 3000 R.P.M., WILL WEIGTH 180 kgf AROUND, AND WITH ASSEMBLY FIXTURES IT IS NEAR ENOUGHT TO 200 kgf. FURTHERMORE, CONSIDERING THAT THE SUPPLY IS GIVEN BY ACCUMULATORS, MUST BE PROVIDED THE USE OF A ELECTRONIC CONTROL o FRECUENCY VARIATOR FOR THIS MOTOR, WICH WILL WEIGTH 50kgf AROUND.

THEN, THE USE OF ONE ALONE ROTARY MACHINE AND HER CONTROLATOR ADDING 250 kgf AROUND, THIS ADDED TO THE TWO PASSEGERS WEIGTH FORESEEN AND THE BODY OF VEHICLE, ALREADY REACH THE ESTIPULATED 500 kgf, NO REMAINING CAPACITY TO CONTENT THE NECESARY ACCUMULATORS BATTERYS FOR ENERGY SUPPLY.

STILL UNDER THE HIPOTESYS THAT SHOULD BE ENOUGHT SPACE FOR DISPOSAL OF ELECTRIC ACCUMULATORS ON BOARD, THE IMPLEMENTATION OF SUCH SYSTEM MOTOR-ELECTRONIC CONTRO LATOR IS NOT ABLE TO MAKE WORK THE MOBILE ALONE, SINCE IS REQUIRED, ADDITIONALY TO THE ACCUMULATORS, AUXILIARY EQUIPMENT FOR ADAPTACION THE POORS POWER CARAC TERISTICS OF THESE FOR THE APPLICATION.

THIS IMPLIES A ADDITIONAL REQUEST OF WEIGTH ON BOARD, THAT IT IS ALREADY OVERHELMED, AND MORE COST IS ADDED.
FOR SUPPLY ENERGY TO THIS MOTOR AND CONTROLATOR ASSEMBLY, A SUPPLY VOLTAGE OF 500 V.D.C. AROUND MUST BE CONSIDERED MODERATED, BEING ABBLE TO REACH UP TO 800 V D.C. AND THE LESER VALUES OF 300 V.D.C. AROUND, THIS RESULT UNSUITABILY ARISED IN ALL CASES FOR SUPPLY DIRECTLY BY ELECTRIC ACCUMULATORS, BECAUSE THE EXCESSIVE NUMBER OF CELLS REQUIRED.
AS A SUITABLE ALTERNATIVE, THE USE OF A REASONABLE NUMBER OF CELLS MUST BE CONSIDERED, VIA A INTERMEDIATE ADAPTION EQUIPMENT, TYPE D.C. TO D.C. TRANSFORMATOR, WICH ADDS YET MORE WEIGHT AND REQUEST STILL MORE SPACE TO ALREADY TWICE OVERHELMED CAPACITY. AS WELL COST ARE YET INCREASED, AGRAVING MORE A UNSUSTAINABLE SITUATION.
ADITIONALLY, THE MOTOR-ELECTRONIC CONTROLATOR ASSEMBLY IS NOT ABLE OF REVERTING THE POWER FLUX, THIS IS, THE ROTARY MACHINE CAN ABSORBE ENERGY FROM THE SOURCE, BUT NO SEND BACK ENERGY TO THE SOURCE, BEING DISSIPATED BY THE ELECTRONIC
CONTROLATOR, IN THE SAME MOTOR OR IN A ADDITIONAL EXTERNAL DEVICE, IN THAT LAST CASE, ADDING

EP 1 953 900 A1

MORE WEIGTH AND MORE COST.

THESE INADAPTATION OF THE ROTARY MACHINE AND THE ELECTRONIC POWER CONTROL, CAUSES THE INTRODUCTION OF HEAVY LIMITATIONS AT THE HOUR OF DESIGN A IMPULSION SYSTEM, SPECIALLY FOR AUTOMOBILES, AND IN GENERAL FOR ANY SYSTEM IMPLIYING KINEMATIC ENERGY.

THE ONLY COST FOR THE MOTOR AND FRECUENCY VARIATOR AS A WHOLE, WITHOUT TAKEN IN ACCOUNT THE COSTS OF THWE MENTIONED COMPENSATION AND ADAPTATION EQUIPMENTS, NOR THE ACCUMULATORS AND THE BODY OF VEHICLE, CAN BE ESTIPULATED AS TREE FOURTH OF THE FINAL PRICE OF ONE MOBILE UNIT AS CONSIDERED IN THIS EXAMPLE, BEING A PROHIBITED COST INCIDENCE.

ALTHOUGH HAS BEEN CONSIDERED A ROTARY MACHINE OF ALTERNATIVE CURRENT, ONE OF DIRECT CURRENT WOULD ATTENUATE SOME INCONVENIENTS BUT MAKE WORSE OTHER ONES, NOT GIVING IN WHOLE GREATHER DIFFERENCES IN THE SAME CIRCUMSTANCES.

THIS BRIEF EXAMPLE, LET SEE THE AFFIRMATION MADE AT THE BEGINNING, SINCE THE ONLY WEIGHT EFFECT OF THE ROTARY MACHINE AND HER ELECTRONIC CONTROL MAKE UNFEASIBLE TO ACHIEVE A AUTOMOBILE VEHICLE, IDENTICALLY WHITH THE COSTS AND WITH THE LIMITED FEATURES OF THE MACHINE AND ELECTRONIC CONTROLATOR ASEMBLY. HEREWITH, I MIND TO HAVE ILLUSTRATED REASONABLY THE EFECTS OF THE STATE OF THE TECNOLOGY RELATED TO THE ELECTRIC ROTARY MACHINES AND DEVICES ATTACHED, WHEN IS ATTEMPTED TO APLY THEM TO THE AUTOMOBILE IMPULSION.


OBJETIVS OF THE INVENTION

IS A OBJET OF THIS INVENTION TO RESOLVE THE PROBLEM OF THE STATE OF THE THE TECHNOLOGY OF EXCESSIVE SIZE, REDUCING THE LINEAR DIMENTIONS OF THE MACHINE IN A FACTOR NEAR OF TWO RELATED THE CORRESPONDING FOR THE RESPECTIVE POWER RANGE.

IS A OBJET OF THIS INVENTION TO RESOLVE THE PROBLEM OF THE STATE OF THE THE TECHNOLOGY OF GREATH WEIGTH, REDUCING THE WEIGHT OF THE MACHINE AT LEAST FIVE TIMES RELATED THE CORRESPONDING FOR THE RESPECTIVE POWER RANGE.

IS A OBJET OF THIS INVENTION TO RESOLVE THE PROBLEM OF THE STATE OF THE TECHNOLOGY OF ARISED AND DANGEROUS OPERATING VOLTAGES, ALOWING OPERATING

VOLTAGES TEN TIMES LESSER OR STILL LESS, THAN THE USUAL FOR THE RESPECTIVE POWER RANGE.

IS A OBJET OF THIS INVENTION TO RESOLVE THE PROBLEM OF THE STATE OF THE TECHNOLOGY OF LOW EFFICIENCY RELATED TO SIZE AND WEIGTH, FURNISHING A HIGH EFFICIENCY RELATED TO SIZE AND WEIGTH FOR THE RESPECTIVE POWER RANGE.

IS A OBJET OF THIS INVENTION TO RESOLVE THE PROBLEM OF THE STATE OF THE TECHNOLOGY OF NO REVERSIBILITY OR IMPRACTICABLE, SPECIALLY UNDER ELECTRONIC POWER CONTROL, ACHIEVING A GREAT DEGREE OF REVERSIBILITY, IN SUCH A WAY THAT REVERSE FLUX OF POWER IS ALLOWING, SPECIALLY UNDER ELECTRONIC POWER CONTROL.

IS A OBJET OF THIS INVENTION TO RESOLVE THE PROBLEM OF THE STATE OF THE TECHNOLOGY OF THE NARROW MARGIN OF CONTROL OF THE ELECTRICAL MACHINES, OR ELSE IMPRACTICABLE CONTROL FOR THE PARTICULAR APPLICATION, ACHIEVING A MACHINE SPECIALLY ADAPTED FOR ELECTRONIC CONTROL OF POWER.

IS A OBJET OF THIS INVENTION TO RESOLVE THE PROBLEM OF THE STATE OF THE TECHNOLOGY OF THE HIGH DEGREE OF INADAPTATION OF THE ELECTRIC MACHINES FOR POWER SUPPLY BY ELECTRIC ACCUMULATORS AND SIMILAR SOURCES.

IS A OBJET OF THIS INVENTION TO RESOLVE THE PROBLEM OF THE STATE OF THE TECHNOLOGY OF THE IN EXCESS INITIAL COSTS OF THE ELECTRICAL MACHINES,

AND DEPENDING ON THE CASE, AS WELL ARISED OPERATING COSTS, ACHIEVING MODERATED INITIAL COSTS AND LOWER OR NO OPERATING COSTS IN A CONCURRENT WAY.


BRIEF SUMMARY OF THE INVENTION

THE PROPOSED OBJETIVES ARE ACHIEVED FOR THE INVENTION CONCEIVING A MOTOR IN WICH THE FOLLOWING NEWS ARE INTRODUCED:

WITH A DISPOSITION OF POWER COILS ON THE BODY OF THE STATOR, WHOSE ADVANTAGES RELATED THE STATE OF THE TECHNOLOGY, WICH DISPOSE IT ON THE ROTOR BODY ARE THE FOLLOWING:

AT THE HOUR OF DIMENITIONIG THE POWER COILS IS MUCH MORE AVAILABLE THE RADIAL DIMENTION OF THE MACHINE, A VERY VALUABLE FACT

WHEN THE MACHINE DIMENTIONS IN GENERAL ARE SEVERELY RESTRICTED, AS IT IS THE CASE; ALLOWING THE CONCEPTION OF EXTREMELLY EFFICIENTS POWER COILS UNDER SUCH CONDITIONS, WICH IS AN OBJECT OF THE INVENTION. THIS IS NOT POSSIBLE WHEN THESE COILS ARE DISPOSED ON THE ROTOR BODY, BECAUSE THE RADIAL DIMENSTION IS LIMITED TO A MINOR PART OF THE ROTORIC RADIO, WICH, TO MAKE THE THINGS WORSE, IS RELATIVELLY SMALL.

THAT THE EVACUATION OF THE HEAT FROM THE POWER CONVERTION IREVERSILITIES IS SUPPORTED FOR THE FACT THAT IT IS PRODUCED ON THE MOTOR PART THAT IS IN CONTACT WITH THE OUTSIDE, WICH IN COMBINATION WITH THE HIGHER EFICIENCY OF THE COILS AND THE TIGHT DESIGN OF THE STATOR, MAKES THAT THE CONDUCTION OF HEAT FROM LOSSES UP TO THE INTERCHANGE SURFACE CAUSES MODERATED DIFFERENCES OF TEMPERATURE, BEING A SINERGIC EFFECT OF THE HIGER EFFICIENCY AND SMALLER DIMENTIONS, WICH ARE TWO INVENTION OBJETIVS.

THAT PROVIDES A FAVORABLE KINEMATIC SITUATION FOR THE COILS, WHOSE HEADS ARE NOT SUBJECTED TO INTENSES CETRIFUGAL EFFORTS, THAT FAVOUR THE DISPOSAL AND INTERCONNECTION OF THE ROBUST DIMENTIONED COILS BECAUSE THE GREAT POWER AND HIGH EFFICIECY REQUESTED, WICH ARE TWO INVENTION OBJETIVS.

THAT THE SECTION OF THE MAGNETIC PATH TOWARD THE BASE OF THE TOOTHS, THAT IS AN AREA PRONE TO BE OVER-SATURATED WHEN THE MACHINE IS UNDER LOAD, IS EXPANDED, OPPOSED THE DISPOSAL OVER THE ROTOR BODY, IN WICH THIS AREA IS NARROWED.

THIS FACT ALOW A HIGHER RATE OF LOAD FOR THE SAME SIZE OF MACHINE, WICH IS A INVENTION OBJETIV.

THAT MAKES POSSIBLE THE DIRECT CONNECTION OF THE COILS TO A SOURCE OR LOAD OF ENERGY, BECAUSE THESE ARE STATIONARY RESPECT TO THE INSTALLATION, WHICH ADVANTAGE RELATED TO THE STATE OF THE TECNOLOGY IS THAT IS NOT REQUIRED NONE INTERMEDIATE DEVICE BETWEEN THE POWER SUPPLY AND THE COILS. TO APPRECIATE THIS ADVANTAGE, COME WELL THE FOLLOWING COMPARATIONS:

COMPARING WITH DIRECT CURRENT MACHINES, WITH THE TYPICAL DISPOSAL ON THE ROTOR BODY, IS AVOID A COMPLEX MECHANISM, WICH IS

THE MECHANICAL CONMUTATOR AND THE GRAPHITIC BRUSHES, BECAUSE OF WICH IS AVOIDED ITS PROHIBITIVE INITIAL COST, ITS GREAT BULKINESS, WEIGTH AND LOW EFFICIENCY IN THE POWER MANAGEMENT, AND THE NEED OF PERIODIC AND EXPENSIVE MAINTENNANCE DUE ITS WEARING. WICH CONTRIBUTES TO ACHIEVE REASONABLE INITIAL COSTS, LOWER OPERA TING COSTS, HIGH EFFICIENCY OF THE MACHINE AND TO REDUCE SIZE AND WEIGHT, WICH ARE FIVE OBJETIVS OF THE INVENTION.

COMPARING WITH ALTERNATIVE CURRENT MACHINES, IS AVOIDED THE INEFFICIENT INTERMEDIATE OPERATION TO THE CONVERTION, WICH IS THE TRANSFORMATION, BECAUSE OF WICH ARE DISPOSAL THE PRIMARY COILS, WICH CAUSES MOST OF THE MACHINE LOSSES, ABOUT 70% FROM THE WHOLE WORKING LOSSES.

AVOIDING THE CONSIDERABLE ENERGY DISSIPATION INTRODUCED BY THE INTERMEDIATE PROCCES OF TRANSFORMATION, CONTRIBUTING THE HEAT OF THE LOSSES CAN BE EVACUATED BY A VERY LIMITED EXTERNAL SURFACE, WITH MODERATED TEMPERATURE RATES; ALLOWING TO ACCHIEVE A MACHINE WITH RESTRINGED DIMENTIONS, WHICH IS A OBJECTIV OF THE INVENTION.

WITH A SPECIAL MECHANICAL SHAPE FOR THE COILS, AND A METHOD OF MANUFACTURE IT AND ASSEMBLY IT, IN SUCH A WAY THAT THE FIRST OPERATIONS OF MANUFACTURING ARE MADE ON THE WORK TABLE, AND THE FINISHING OPERATIONS ARE MADE IN A SYMULTANEOUS OPERATION WITH THE ASSEMBLY ON THE STATOR BODY, WICH ADVANTAGE RELATED THE TYPICAL OPERATIONS IS THE FOLLOWING:

THAT MAKE POSSIBLE HIGH COMPACT AND SOLID DISPOSALS OF COILS AMPLILY DIMEN SIONED, ALLOWING THE CONCEPTION OF MOTORS OF HIGH POWER WITH A RATE OF HIGH CURRENT AND LOW VOLTAGE, TO ADAPTATE THE MACHINE TO ELECTRIC ACCUMULATOR UTILI ZATION, CONCURRENTLY WITH A VERY MUCH ARISED EFFICIENCY, ABOUT 97% TO 99%, WICH ARE TWO OBJECTIVS OF THE INVENTION.

THAT MAKES POSSIBLE THE MANUFACTURING AND ASSEMBLY OF COILS WITH THE FEATURE OF VEHABING AS VOLTAGE GENERATORS OF EXTREMELLY LOW INTERNAL IMPEDANCE, THIS SIMPLE FACT IMPLIES THAT THEY ARE CAPABLE OF ADMITING CURRENT INJECTION IN ANY DIRECTION, IN ANY TIME, AND IN ANY MAGNITUDE, MAKING IT ABLE OF ADMITING DIRECT CURRENT INJECTION, MAKING THE MACHINE

IDEAL FOR DIRECT POWER CONTROL, WICH IS ONE OF THE OBJECTIVS OF THE INVENTION. IN THE OTHER HAND, THE CAPACITY OF ADMITING CURRENT IN ANY DIRECTION, MAGNITUDE AND TIME, ALLOWS THE POWER CONTROL THAT IS CONNECTED HAVE THE COMPLETELY FREEDOM FOR THE EXECUTION OF CURRENT CONTROL ALGORITHMS PROGRAMMED, WITHOUT LIMITATIONS, WICH ABROAD EXTRAORDINARILY THE MARGIN OF CONTROL OF THE MACHINE BY ELECTRONIC CONTROL, WHICH IS OTHER OBJECTIV OF THE INVENTION.

THE ADVANTAGES OF THE LAST PARAGRAPHS ARE NOT POSSIBLES IN THE ROTARY MACHINES OF THE STATE OF THE TECHNOLOGY, SINCE IT NEEDS TO SUPLY ENERGY THROW CONNECTING IT TO A VOLTAGE GENERATOR.

THAT IS INTRODUCED A IMPORTANT AREA OF INTERCHANGE OF HEAT BY MEANS THE HEADS OF THE COILS, BEING SUYTABILY DISPOSED FOR THE HEAT EVACUATION VIA FORCED VENTILATION IN CASE OF OPENED CONSTRUCTIONS, ALLOW THE SAME MACHINE DEVELOPING A POWER SUSTANTIALLY LARGER WITH THE SAME TEMPERTURE RATE, LOSSING A FEW POINTS OF EFFICIENCY, OR WELL, REDUCING THE TEMPERATURE RATE OF THE MACHINE WITH IDENTICAL POWER AND EFFICIENCY, THIS ENHANCE THE RATES OF THE MACHINE WITHOUT ENLARGING ITS SIZE, WICH IS AN OBJECTIVE OF THE INVENTION.

WITH A POLAR DISTIBUTION OF COILS IN A WAY THAT THESE VOLTAGE GENERATORS BECOME ESSENTIALY INDIVIDUALS, WHOSE ADVANTAGE IS:

THAT MAKES IT POSSIBLE THAT ONLY THE COILS SUITABILY LOCATED TO PRODUCE ENERGY CONVERTION BE CROSSED BY INTENSE CURRENTS, ALLOWING TO LEAVE COMPLETELY INACTIVE THE COILS THAT NOT ARE IN THESE CONDITIONS, INTRODUCING A LOSSES REDUCTION LARGER THAN A 30% RELATED THE SERIAL CONNECTION OR SHUNT CONNECTION OF THE STATE OF THE TECNOLOGY, IN WICH THE CURRENT CROSS UNIFORMLY TROUGH ALL THE COILS, STILL WHEN THESE ARE NOT IN CONDITIONS OF PRODUCCING MECANICAL WORK; CONTRIBUTING IN A HIGH DEGREE TO ACHIEVE A HIGHER EFFICIENCY, WICH IS OTHER OBJECTIV OF THE INVENTION.

THAT IT MAKES POSSIBLE A DIVERSITY OF INTERCONNECTIONS BETWEEN THE COILS IN THE SAME MACHINE VIA HOMOLOG SERIES, POLARS AND ANTIPOLARS, WHOSE ADVANTAGE IS THAT MAKES POSSIBLE TO CHOICE FOR THE POWER SUPPLY A VARIETY OF VOLTAGES AND CURRENTS,

WHICH CONTRIBUTES TO ADAPTATE THE MACHINE AND ITS SOURCE VOLTAGE, WHICH IS AN OTHER OBJECTIV OF THE INVENTION.

BY DISPOSAL THE EXITATION OF THE MACHINE MAGNETIC CIRCUIT ON THE ROTOR, INSTRUMENTED BY PERMANENT MAGNET, WICH IS AN ADVANTAGE RELATED THE ESTATE OF THE TECHNOLOGY, THAT ASSEMBLIES THE D.C. MACHINE POLES ON THE STATOR BODY IS:

THAT FOR IDENTICAL SURFACE OF POLAR FACES, THE MAGNETIC CIRCUIT FEATURES A VOLUME RELATIVELY SMALL, WHICH CONTRIBUTES TO MAINTAIN RESTRICTED THE MACHINE SIZE AND WEIGHT, THAT IS AN OBJECTINVE OF THE INVENTION.

BY THE SPECIFICATION FOR THE MAGNET BODY GEOMETRY, AS IT IS GIVEN IN THE DETAILED DESCRIPTION OF THE INVENTION, WHOSE ADVANTAJE IS IS:

THAT ACHIEVE INTO THE SMALL DIMENTIONS OF THE ROTOR, A STILL LESSER VOLUME AND WEIGHT FOR THE MAGNET BODY.

THAT ALLOWS HANDLING THE MAGNETIC CIRCUIT LENGTH IN SUCH A WAY THAT ITS DEMAGNETIZATION FACTOR IS EASILY CONTROLLED, WITHOUT AFFECT AT ALL THE GENERAL DIMENTIONS OF THE MACHINE, THAT CONTRIBUTES IN CONBINATION WITH THE PRECEDING TO LIMIT THE SIZE AND WEIGTH, THAT ARE TWO OBJECTIVES OF THE INVENTION.

BY THE UTILIZATION OF A FERROMAGNETIC MATERIAL OF VERY LESSER PERMEABILITY OR THE MAGNET BODY, ACHIEVING A DEEP SUPPRESSING EFFECT AGAINST THE REACTION FIELD, WHOSE ADVANTAJE RELATED THE ESTATE OF THE TECHNOLOGY IS:

THAT IS AVOIDED THE USE OF REQUIRED ELEMENTS WHEN PERMEABLE MATERIALS ARE USED, AVOIDING BULKY COMPENSATION COILS, THAT DISSIPATES ENERGY WITHOUT PERFORMS NOT ONE FUNCTION INTO CONVERSION PROCESS, AND TAKES SPACE THAT OTHERWISE WOULD BE USEFUL, CONTRIBUTING GREATLY TO MACHINE SIZE REDUCTION, WHICH IS AN INVENTION OBJECTIVIVE.

THAT IS AVOIDED THE USE OF A VARIABLE AIR GAP FOR COMPENSATION, AVOIDING A GREAT DIFFERENCE IN THE MACHINE BEHAVIOUR AS MOTOR THAT AS GENERATOR, CONTRIBUTING TO THE MACHINE SYMETRIC OPERATION, WICH IS

ALSO A INVENTION OBJECTIV.

THESE TWO ADVANTAGES CONTRIBUTES SIMULTANEOSLY TO ENHANCE THE MACHINE EFFICIENCY THAT IS OTHER INVENTION OBJECTIV.

BY THE MAGNETIC POLES FACES GEOMETRY, SHAPED IN SUCH A WAY THAT IT PRODUCES A UNIFORMING DISTRIBUTION OF MAGNETMOTIVE FORCE, THE GREATER POSSIBLE IN REGARDS THE PERMEABILITY LOSS OF THE STATOR MATERIAL, WHOSE ADVANTAGE RELATED THE STATE OF THE TECHNOLOGY IS:

THAT THE GREATHER VOLTAGE POSSIBLE IS PRODUCED DURING THE THE LONGER TIME POSIBLE. THIS, IN COMBINATION WITH A SQUARE WAVEWFORM FOR THE CURRENT, THAT IS, A CURRENT THAT HAVE THE HIGHEST VALUE POSSIBLE DURING THE LONGEST TIME POSSIBLE, GIVING THE LARGEST POWER POSSIBLE RELATED THE SIZE OF THE MACHINE, THAT IS AN OTHER INVENTION OBJECTIV.

THAT THE SIMETRY OF THE DESCRIBED MMF, ALOWS A OPERATION IDENTICALLY EFFICIENT IN A WAY FULLY INDEPENDENT OF THE LOAD DIRECTION,BE AS GENERATOR OR BE AS MOTOR, THAT IS AN OTHER OBJECTIV OF THE INVENTION.

BY THE MAGNETS DISPOSAL ON A AXIAL SLIDING CAR, AND A DISPOSAL OF A AUXILIARY ANTIDEMAGNETIZATION CASE, FIXED TO THE SAME SHAFT, ALOWING TO CHANGE EXTERNALLY ITS LOCATION INTO THE MACHINE, EXTRANTING IT OR INTRODUCING IT INTO THE STATOR, WHOSE ADVANTAGE RELATED THE STATE OF THE TECHNOLOGY OF CONTROLING EXITATION VIA CURRENT IS:

THAT ALOWS TO GET THE MAGNETIC EXITATION CONTROL,NOTWITHSTANDING THE EXITATION BY PERMANENT MAGNETS, AVOIDING THE USE OF EXITATION COILS AND THE IMPLIED ENERGY DISIPATION, CONTRIBUTING TO ENHANCE THE EFFICIENCY,THAT IS AN OTHER OF THE INVEN TION OBJECTIVS.

BY A TRANSVERSAL FLANGED FOR EXTERNAL VENTILATION OF THE STATOR BODY, INSTRUMENTED BY EXPANDED STATORIC LAMINATIONS INSERTED TO REGULAR INTERVALS ALONG THE STATOR BODY, WHICH ADVANTAGE IS:

THAT IS ACHIEVED TO EXPAND THE PERIFERIC SURFACE OF THE STATOR IN A ORDER OF FOUR TIMES, SIMULTANEOUSLY IS GUARANTEED THE TERMAL CONTACT WITH THE COOLED BODY AND DUE THAT THE EXPANDED LAMINATIONS COMPRISES PART OF THE STATOR MAGNETIC CIRCUIT AND IT IS MADE OF THE SAME MATERIAL, THEN, THE VOLUME THE EXPANSION INTRODUCES CAN BE SUBSTRACTED OF THE ORIGINAL STATOR VOLUME, RESULTING A NULL INCIDENCE IN THE MACHINE WEIGTH, WICH IS A OBJECTIV OF THE INVENTION.

BY SPECIFIYING FOR THE POWER SUPPLY FOR THE PHASES OF THIS MACHINE BY REVERSIBLE CURRENTS GENERATORS, AS ABOVE INDICATED AS IDEAL, WITH A SQUARE WAVEFORM AS ABOVE INDICATED IN THIS BRIEF SPECIFICATION, SINCRONICALLY WITH THE VOLTAGE DEELOPED ON THE PHASE, DETECTING THE VOLTAGE ANGLE BY ROTOR SHAFT POSITION, FOR CURRENT EMPHASING DEPARTING FROM CERO VELOCITY, WHOSE ADVANTAGE IS:

THAT IT ALLOWS TO PROFIT THE ENLARGED CONTROLABILITY FROM CERO VELOCITY.

THAT PROFIT THE PERFECT REVERSIBILITY OF THIS MACHINE.

THIS POWER CONTROL, FURTHERMORE TO CONTROL THE MAGNITUDE, DIRECTION AND WAVEFORM OF INJECTED CURRENT ON THE FASES, MUST CONTROL THE EXITATION OF THE MACHINE WHOSE ADVANTAGE IS;

THAT PROFIT THE FULLY VOLTAGE CONTROL OF THIS MACHINE. THAT IN COMBINATION WITH THE FULLY DOMAIN OF THE CURRENT, ALLOWS THE EXECUTION OF CERTAIN CONTROL FUNCTIONS THAT ALOWS THE ELECTRICAL HANDLING OF THE MECHANICAL ENERGY, WHOSE ADVAN TAGES ARE:

THAT ALOWS THE SUPRESSION OF MECHANICAL PARTS FOR MECHANICAL ENERGY HANDLING AS VELOCITY GEARBOXES AND CLUTCHES, THAT CONTRIBUTES TO A EFFICIENT ENERGY MANA GEMENT AND TO ELIMINATE INITIALS COSTS AND OPERATING COSTS FROM THE MOVILE THAT IS IMPULSED, BOTH ARE OBJECTIVS OF THE INVENTION.

THE POWER CONTROL THAT FULFILL THIS PREMISES IS OBJECT OF A SEPARATE PATENTING TRANSACTION, AND IS NOT DESCRIBED IN THIS DESCRIPTION MEMORY.

ALTHOUGH THE MACHINE WITH ITS ELECTRONIC CONTROLATOR IS SPECIAL FOR THE IMPULSION OF ELECTRICS AUTOMOBILES, IT IS APPLICABLE FOR IN HIGH DEGREE CONSERVATIVE MECANICAL SYSTEMS, FOR EXAMPLE:

ELEVATORS WITH RECUPERATION OF KINEMATIC ENERGY AN POTENTIAL ENERGY.

NON DISSIPATIVE CONTROL OF PRESSURE AND OIL CAUDAL IN DISTRIBUTING HIDRAULIC SYSTEMS OF FORCE, WITH THE ELIMINATION OF REGULATION VALVE AND OIL COOLERS.

IN BOTH CASES ARE AVOIDED TREMENDOUS ENERGY LOSSES.

CAN FULFILL LIMITED FUNCTIONS WITHOUT THE CURRENT CONTROL, FOR EXAMPLE, ELECTRICAL BRAKE WITH EXITATION CONTROL AND FIXED LOADS ON ITS PHASES,

AND WITHOUT EXITATION CONTROL CAN COMPLY STILL MORE LIMITED FUNCTIONS, FOR EXAMPLE, CONVERTION OF MECHANICAL ENERGY TO HEAT ENERGY AT A CONSTANT RATE.

BRIEF DESCRIPTION OF THE DRAWINGS

THE FIGURES 1a AND 1c REPRESENT RESPECTIVELY, A VIEW IN ELEVATION AND IN PROFILE OF A LAMINATION OF ALEATION [1a] FOR THE STATOR [5].

THE FIGURE 1b REPRESENTS AN ENLARGING OF A SECTOR OF LAMINATION [1a].

THE FIGURES 2a, 2b AND 2c REPRESENT A SECTOR OF THE LAMINATION [1a], INTRODUCING THE SYMBOLS THAT ARE USED IN ECUATIONS 1 TO 5 INCLUSIVELY, THAT ARE ATTACHED TO THESE FIGURES.

THE FIGURE 3a REPRESENTS A SECTOR OF THE LAMINATION [1a], INTRODUCING THE SYMBOLS THAT ARE USED IN ECUATIONS 6 TO 8 INCLUSIVELY, ATTACHED TO THE SAME.

THE FIGURES 4a AND 4b REPRESENT RESPECTIVELY, A VIEW IN ELEVATION AND A VIEW IN PROFILE OF A EXPANDED LAMINATION [1b] OF ALEATION FOR THE STATOR [5].

THE FIGURE 4c REPRESENTS A PORTION OF THE STATOR [5] IN VERTICAL SECTION VIEW ENLARGED IN A NO PROPORTIONAL WAY IN VERTICAL ORIENTATION OF THE FIGURE, TO SHOW THE DISPOSAL OF THE EXPANDED LAMINATION [1b] INTO THE STATOR [5] BODY. THE FIGURE 5a REPRESENTS A VIEW IN LONGITUDINAL SECTION A-A OF THE STATOR[5], SHOWING THE COOLING FLANGED.

THE FIGURE 5b REPRESENTS A ZONE OF THE STATOR[5], PROPORTIONALY ENLARGED, WITH THE INTRODUCTION OF SYMBOLS AND REFERENCES RELATED TO THE COOLING FLANGED.

THE FIGURE 6a REPRESENTS A ENLARGED VIEW IN A PROPORTIONAL WAY, OF A GROOVE [3] OF THE STATOR [5] WITH THE INTRODUCTION OF REFERENCES. THE FIGURE 6b REPRESENTS THE HEAT FLUX INTO THE MASS OF THE STATOR [5].

THE FIGURE 7a REPRESENTS A VIEW IN SECTION OF A SEPARATION RING [6].

THE FIGURES 7b AND 7c REPRESENTS RESPECTIVELY A VIEW IN ELEVATION AND A VIEW IN PROFILE OF A SEPARATION RING [6] FOR STIFNESS AND ASSEMBLY OF THE MACHINE.

THE FIGURE 8 REPRESENTS A VIEW IN LONGITUDINAL SECTION OF THE BODY OF THE STATOR [5], SHOWING THE DISPOSAL OF THE SEPARATOR RINGS [6] ON THE SAME.

THE FIGURE 9 REPRESENTS A VIEW IN LONGITUDINAL SECTION OF THE BODY OF THE STATOR [5], WITH THE SEPARATOR RINGS [6] ON THE SAME, THE FRONTAL [7] AND REAR [8] CARCAXS, AND THE FRONTAL [9] AND REAR [10] SHIELDS.

THE FIGURE 10a REPRESENTS A VIEW IN PERSPECTIVE OF A COIL [12] IN WHOLE, ALREADY PREPAIRED FOR OPERATION, ONLY BY WAY OF EXAMPLE, FOUR SPIRES ARE UTILICED.

THE FIGURE 10b REPRESENTS A FROT VIEW OF A COIL [12] IN WHOLE, SHOWING ITS DISPOSAL INTO THE GROOVES [3] IN THE CONDUCTION LAYERS [3i] AND [3d] IN THE STATOR [5], AS WELL THE POLAR, DISTRIBUTION.

THE FIGURE 11a REPRESENTS A VIEW IN PRESPECTIVE OF THE COIL OF THE FIGURE 10a, BREAK UP IN HALVES, AND ARE INTRODUCED REFERENCES FOR THE RESULTANT PIECES OF THIS DIVISION.

THE FIGURE 11b REPRESENTS A SCHEMA OF THE LOCATION OF THE PIECES REFERED IN THE FIGURE 11a,IN THE INSIDE OF THE GROOVES[3] AND INTO THE LAYERS [3i] AND [3d]

THE FIGURES 12a, 12b, 12c, AND 12d REPRESENT THE EXPLODED VIEW OF THE RESUL TANT PIECES OF THE TWO PART DIVISION, OR HEMISPIRES, SHOWED IN THE FIGURE 11a; POINTING MORE CLEARLY THE CORRESPONDING REFERENCES.

THE FIGURE 13a REPRESENTS A VIEW IN PERSPECTIVE OF THE COIL, INTRODUCING REFERENCES FOR THE DISTINCT GEOMETRIC ZONES OF EACH ONE OF THE PIECES OR HEMI; SPIRES.

THE FIGURE 13b SHOW A SCHEMATIC REPRESENTATION OF THE DISTINCT GEOMETRIC ZONES OF EACH ONE OF THE PIECES OR HEMISPIRES [In], [Dn].

THE FIGURES 14a AND 14b REPRESENT A PROPORTIONALLY ENLARGED VIEW OF A CONDUCTION GROOVE [3], INTRODUCING THE DEFINITION OF THE SYMBOLS UTILICED IN THE ECUATIONS 9 TO 11c INCLUSIVE, ATTACHED TO THE SAME FIGURES AND RELATED TO THE DIMENTIONS OF THE COIL[12] LEAD.

THE FIGURES 15a AND 15b, ARE TWO SCHEMES THAT INTRODUCES THE GEOMETRICAL ELEMENTS THAT DEFINING THE HELICOIDAL ZONES[17],[18],[19] AND[21] OF THE PIECES [I1] TO [In] AND [D1] TO [Dn] OF THE COIL [12].

THE FIGURES 16 , 17, 18 AND 19 REPRESENT A VIEW IN PERSPECTIVE OF THE HELICOIDAL PARTS OF THE FOUR PIECES, [In], [Dn], [I1], [D1].

THE FIGURE 20a REPRESENTS A VIEW IN PERSPECTIVE OF THE COIL [12], SHOWING THE LOCATION OF THE CONNECTION JUMPERS [Pn], [Cn] ON THE SAME.

THE FIGURE 20b REPRESENTS A VIEW IN PROFILE OF THE COIL [12], ALREADY ASSEMBLED ON THE STATOR[5] BODY, INTRODUCING THE GEOMETRICAL DEFINITION FOR THE TERMINALS [16],[22] OF THE HEMISPIRES [In] [Dn].

THE FIGURE 21a REPRESENTS A VIEW IN PERSPECTIVE OF THE COIL [12], SHOWING THE LOCATION OF THE CONNECTION JUMPERS [Pn], [Cn] IN THE SAME.

THE FIGURE 21b SHOWS A VIEW IN PERSPECTIVE OF THE COIL [12], ALREADY ASSEMBLED ON THE STATOR [5], INTRODUCING THE GEOMETRICAL DEFINITION OF THE CONNECTION JUMPERS [Cn],[Pn] TO THE TERMINALS [16],[22] OF THE HEMIESPIRAS [In], [Dn].

THE FIGURE 22a REPRESENTS A VIEW IN PERSPECTIVE OF A INTERPOLAR JUMPER [23], AND THE FOLLOWING REPRESENT ELEVATIONS VIEWS, THE FIGURE 22b A TOP VIEW, THE FIGURE 22c A BOTTOM VIEW, THE FIGURE 22b A LEFT VIEW AND THE FIGURE 22e A RIGHT VIEW, ALL THESE REFERRED TO THE READER POINT VIEW.

THE FIGURE 22f REPRESENTS A VIEW IN PERSPECTIVE OF FOUR INTEROLAR JUMPERS [23] ASSEMBLED FOR THE INTERCONNECTION OF ADJACENT PHASES, SHOWING THE FUNCTIONALITY OF ITS SHAPE.

THE FIGURE 23a REPRESENTS A VIEW IN PERSPECTIVE SHOWING THE DISPOSAL OF THE FIRST N HEMISPIRES IN THE LOWER LAYER AS THE FIRST STEP OF THE ASSEMBLY.

THE FIGURE 23b AS WELL IN PERSPECTIVE, SHOW THE DISPOSAL OF THE FIRST RIGHT HEMISPIRE IN THE UPPER LAYER AS THE SECOND STEP OF THE ASSEMBLY.

THE FIGURE 24a, AS WELL IN PERSPECTIVE, SHOW THE DISPOSAL OF THE SECOND RIGHT HEMISPIRE IN THE UPPER LAYER AS THE THIRD STEP OF THE ASSEMBLY.

THE FIGURE 24b, AS WELL IN PERSPECTIVE, SHOW THE DISPOSAL OF THE THIRD RIGHT HEMISPIRE IN THE UPPER LAYER AS THE FOURTH STEP OF THE ASSEMBLY.

THE FIGURE 24c, AS WELL IN PERSPECTIVE, SHOW THE DISPOSAL OF THE FOURTH RIGHT HEMISPIRE IN THE UPPER LAYER AS THE FIFTH AND LAST STEP OF THE ASSEMBLY FOR THE CASE OF EXAMPLE FOR FOUR SPIRES.

THE FIGURES 25a, 26a AND 27a ARE SCHEMES THAT REPRESENT THE QUANTITY OF CIRCUITS WITH ITS COMPONENTS AND THE RESULTING OPERATING VOLTAGES AND CURRENTS, ACORDING THE DIFFERENT CONNECTIONS PERFORMED BETWEEN THE PHASES.

THE FIGURES 25b , 26b y 27b REPRESENT VIEWS IN PERSPECTIVE, THAT SHOW EXAMPLES OF POSSIBLES INTERCONNECTION TYPES THAT CAN BE PERFORMED BETWEEN HOMOLOGE PHASES AND THE HOMOLOGE COUNTERPHASES, AND BETWEEN CORRESPONDENT PHASES AND CORRESPONDENT COUNTERFASES. AS WELL ARE SHOWED THE INTERCONNECTION JUMPERS THAT MUST BE EMPLOYED. IN ALL THESE FIGURES , HAS BEEN TAKEN ONLY BY WAY OF EXAMPLE, A MACHINE WITH A SPIRE COILS AND TWO PAIRS OF POLES.

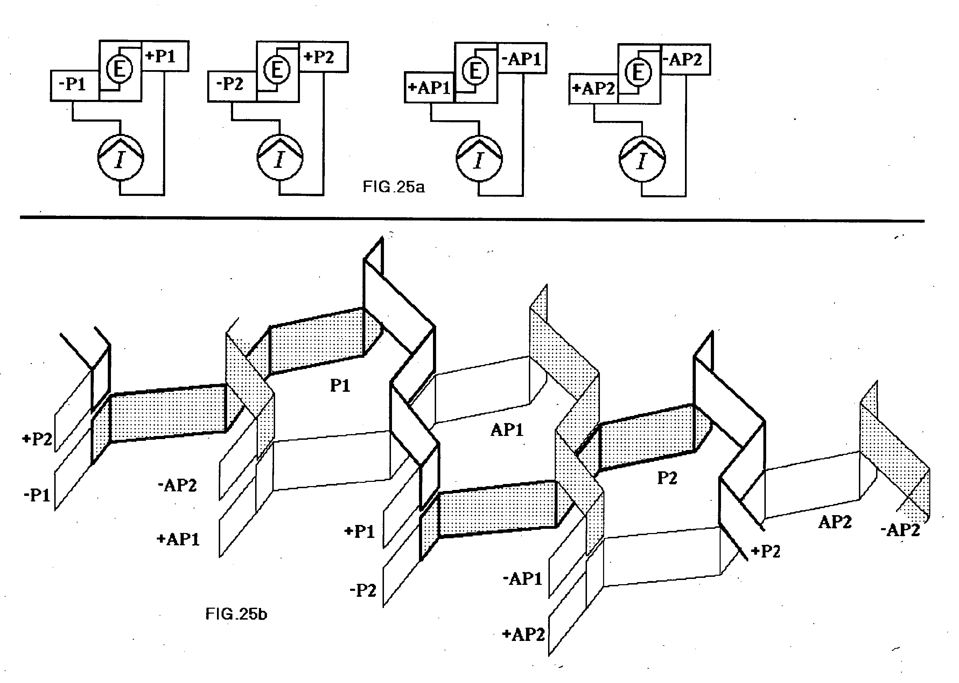

THE FIGURE 25b REPRESENTS THE COILS ALREADY ASSEMBLED, WITHOUT INTERCONNEC TIONS HAVE BEEN PERFORMED, IN THE MINIMUM VOLTAGE DISPOSAL.

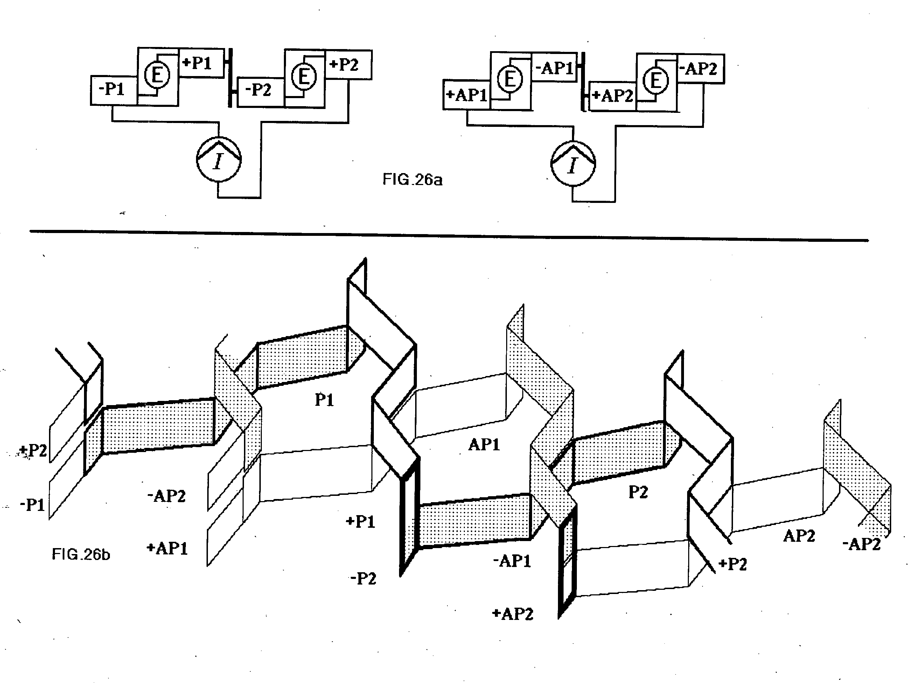

THE FIGURE 26b REPRESENTS THE COILS ALREADY ASSEMBLED, WITH INTERCONNECTIONS PERFORMED, IN HOMOLOGAL POLAR SERIES AND HOMOLOGAL ANTIPOLAR SERIES. THIS IS A INTERMEDIATE VOLTAGE DISPOSAL.

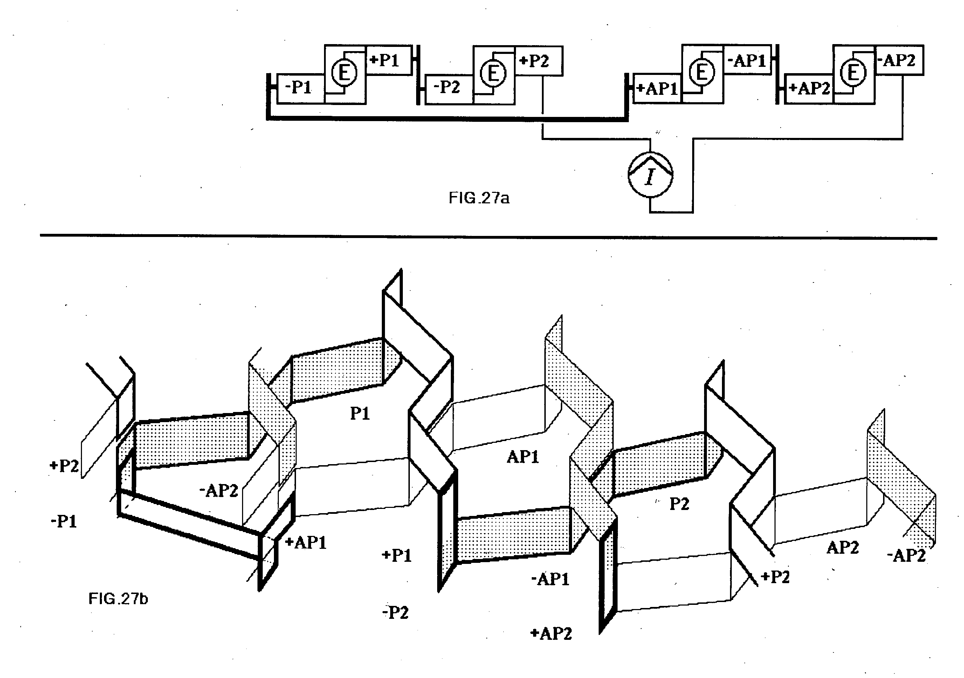

THE FIGURE 27b REPRESENTS THE COILS ALREADY ASSEMBLED, PERFORMING THE SERIAL INTERCONNECTION BETWEN THE HOMOLOGAL POLAR SERIES AND THE HOMOLOGAL ANTIPOLAR SERIES IN TH MAXIMUM VOLTAGE DISPOSAL.

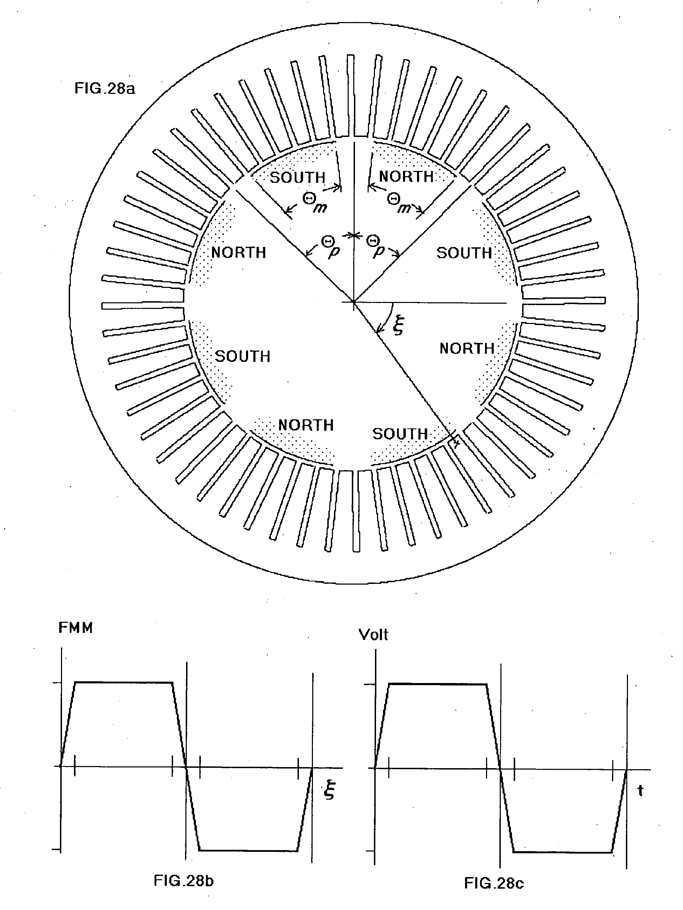

THE FIGURE 28a REPRESENTS A SECTION VIEW OF THE STATOR [5], INTRODUCING SYMBOLS AND REFERENCES RELATED TO THE DISTRIBUTION OF MMF ON THE POLAR SURFACES ON THE INSIDE CIRCUMFERENCE OF THE STATOR [5].

THE FIGURE 28b IS A GRAPHIC REPRESENTATION OF THE MMF IN FUNCTION OF THE RELATIVE ANGLE BETWEEN A PHASE, FIXED IN THE STATOR [5], AND THE ROTOR [35].

THE FIGURE 28c IS A GRAPHIC REPRESENTATION OF THE VOLTAGE ON A PHASE IN FUNCTION OF TIME, THAT RESULT OF THE MMF DISTRIBUTION PROPOSED AND THE MOVEMENT OF THE ROTOR [35].

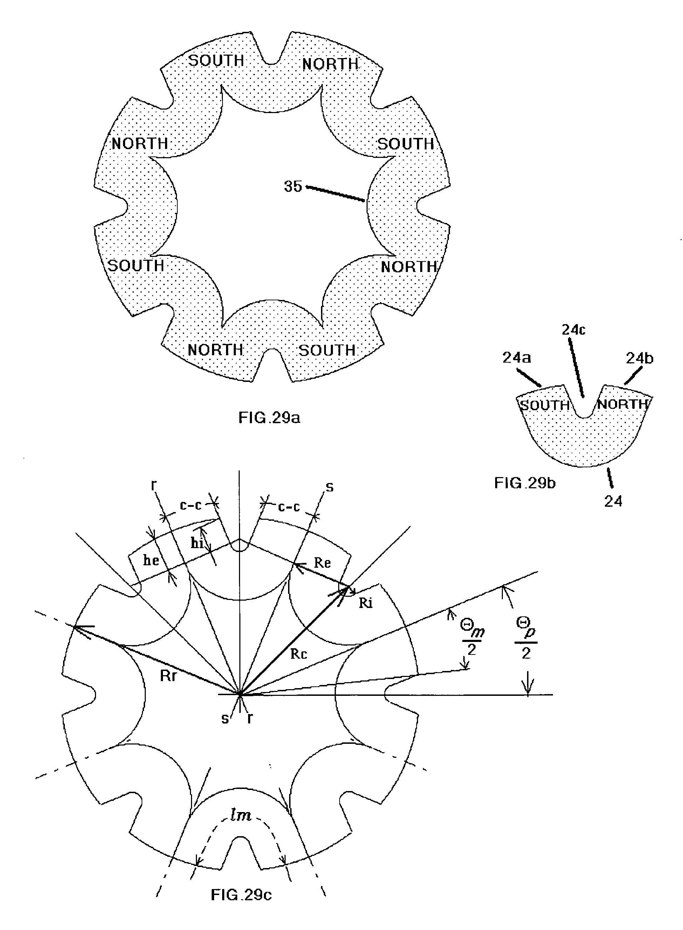

THE FIGURE 29a SHOWS THE SHAPE PROPOSED FOR A BODY OF MAGNETIC CIRCUIT THAT PRODUCE THE FLUX ASSOCIATED TO THE PROPOSED MMF.

THE FIGURE 29b SHOWS A ELEMENT OF MAGNETIC CIRCUIT, OR MAGNET [24] WICH COMPOSE THE ROTOR[5] BODY.

THE FIGURE 29c REPRESENTS A SCHEME WHIT THE INTRODUCION OF THE VARIABLES NECESSED FOR DEFINING GEOMETRICALLY THE TRANSVERSAL PROFILE OF THE MAGNET [24].

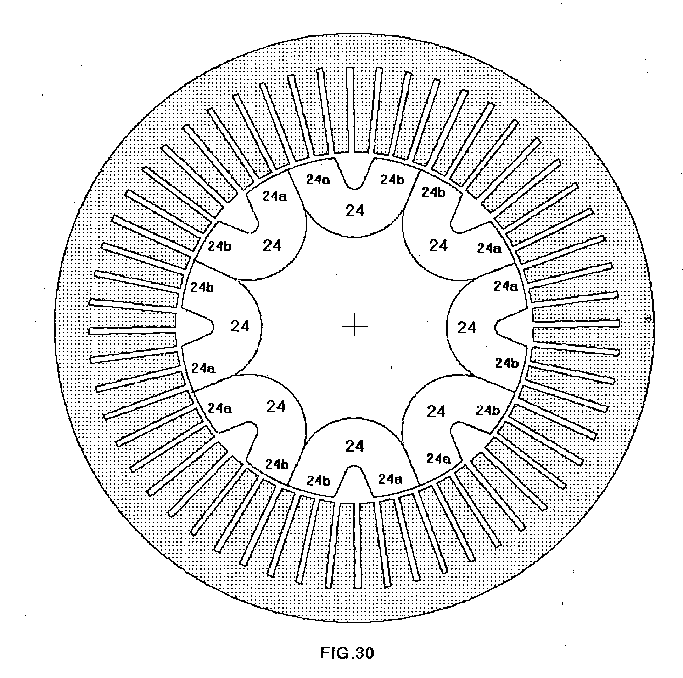

THE FIGURE 30 REPRESENTS A SECTION VIEW OF THE STATOR, SHOWING THE DISPOSAL OF THE MAGNETS [24] INSIDE OF THE STATOR[5], FOR PRODUCING THE PROPOSED MMF DISTRIBUTION BY YUXTAPOSITION.

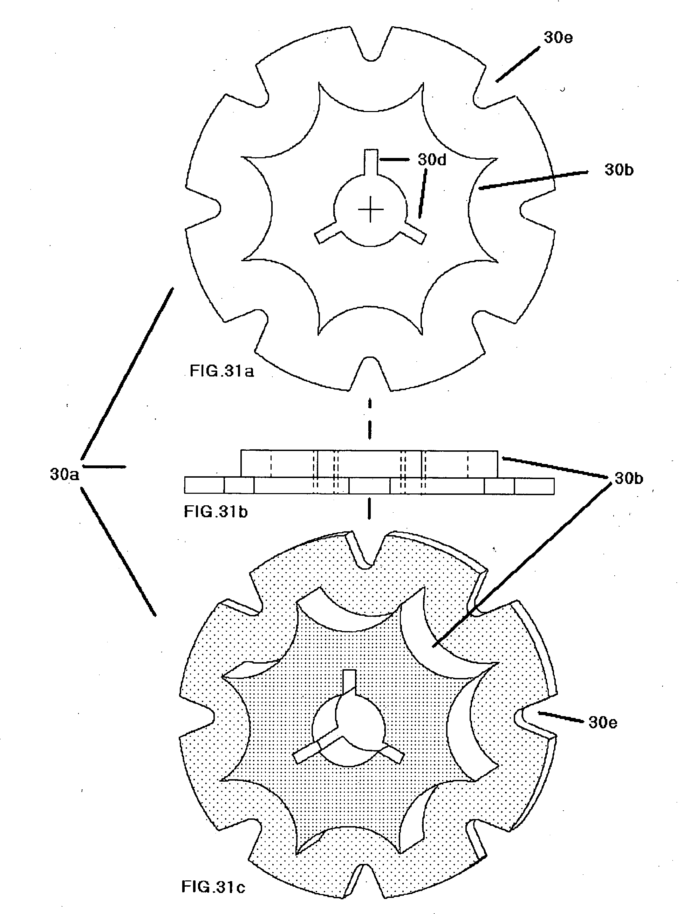

THE FIGURES 31a, 31b AND 31c REPRESENT RESPECTIVELY A VIEW IN PLAN, IN PROFILE AND IN PERSPECTIVE OF A FRAME [30a] OF THE MAGNET CARRIER CAR [30].

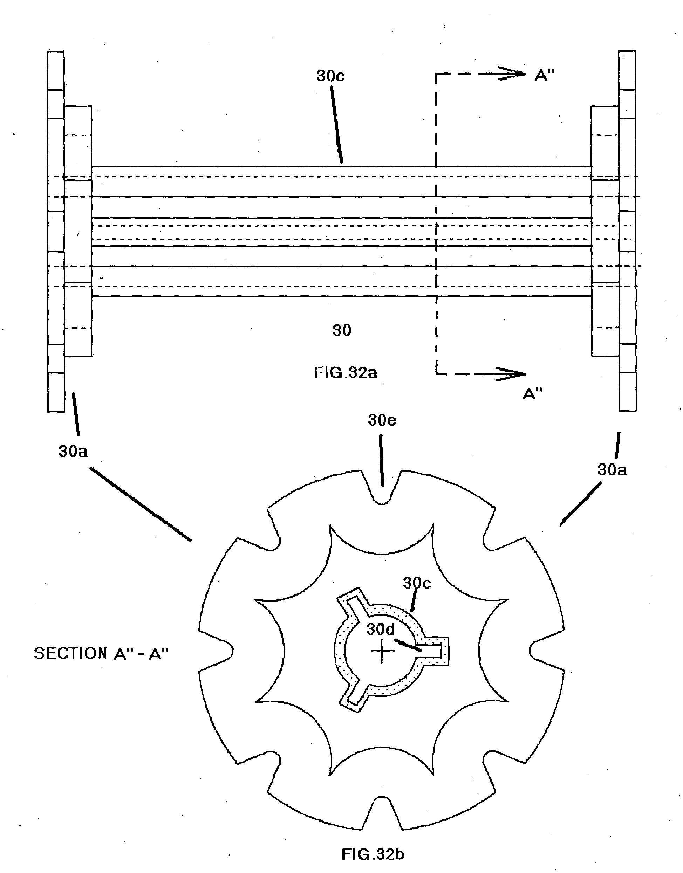

THE FIGURES 32a AND 32b REPRESENT RESPECTIVELY A VIEW IN PROFILE, AND THE TRANSVERSAL SECTION A''-A'' OF THE MAGNET CARRIER CAR [30].

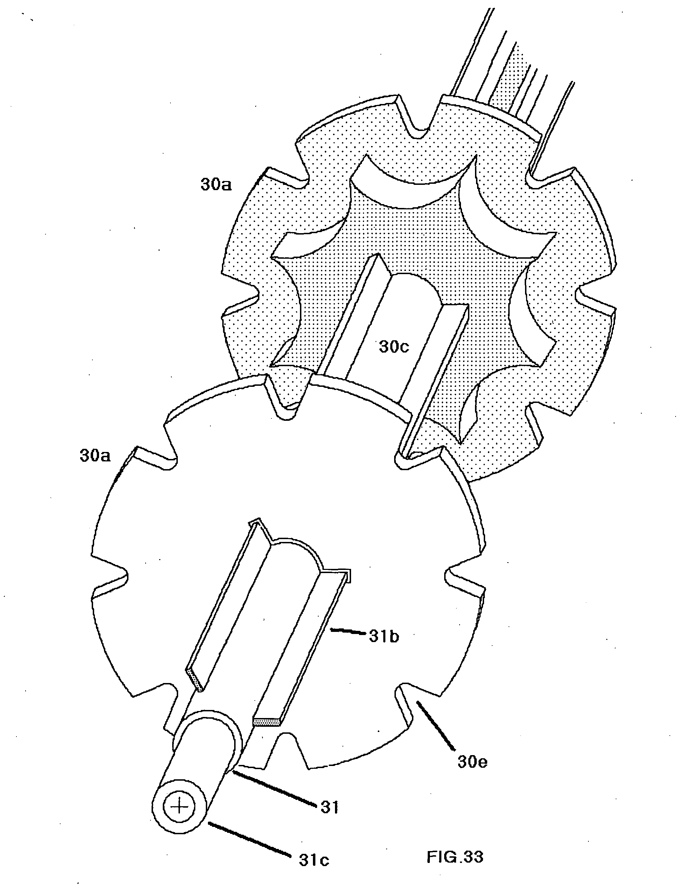

THE FIGURE 33 REPRESENTS A VIEW IN PERSPECTIVE OF THE MAGNET CARRIER CAR[30], WITHOUT THE MAGNETS [24] ASSEMBLED, IN A VIEW FROM THE FORCE INTAKE[31c] SIDE OF THE ROTORIC SHAFT [31].

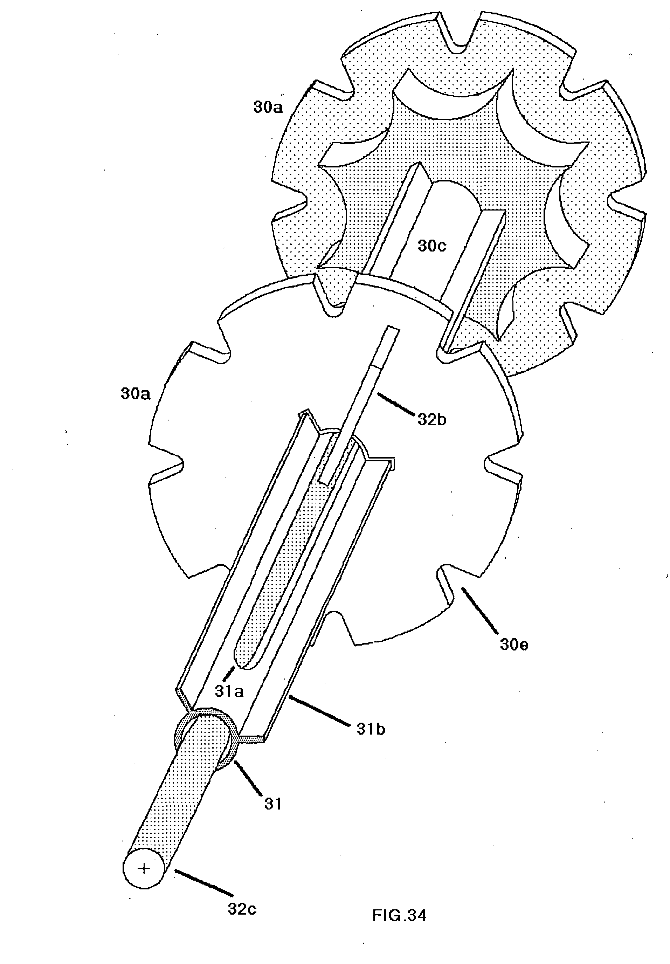

THE FIGURE 34 REPRESENTS A VIEW IN PERSPECTIVE OF THE MAGNET CARRIER CAR[30], WITH THE MAGNETS [24] ASSEMBLED, IN A VIEW FROM THE CONTROL[32c] SIDE OF THE ROTORIC SHAFT [31].

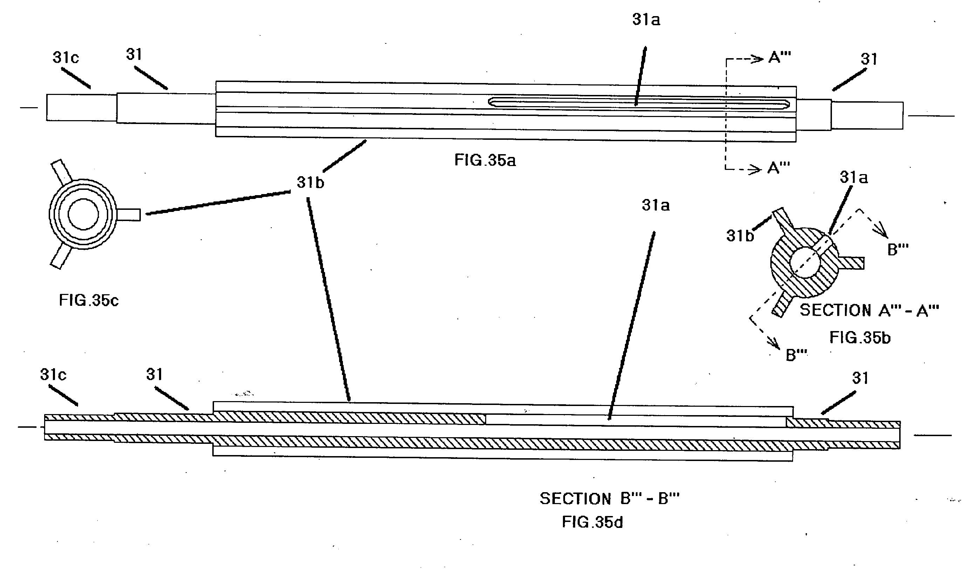

THE FIGURE 35a REPRESENTS A PROFILE VIEW OF THE ROTORIC SHAFT[31].

THE FIGURE 35b REPRESENTS THE TRANSVERSAL SECTION VIEW A'''-A''' OF THE ROTORIC SHAFT [31].

THE FIGURE 35c REPRESENTS A FRONT VIEW OF THE ROTOR SHAFT[31]

THE FIGURE 35d REPRESENTS THE LONGITUDINAL SECTION VIEW B'''-B'''OF THE ROTORIC SHAFT [31].

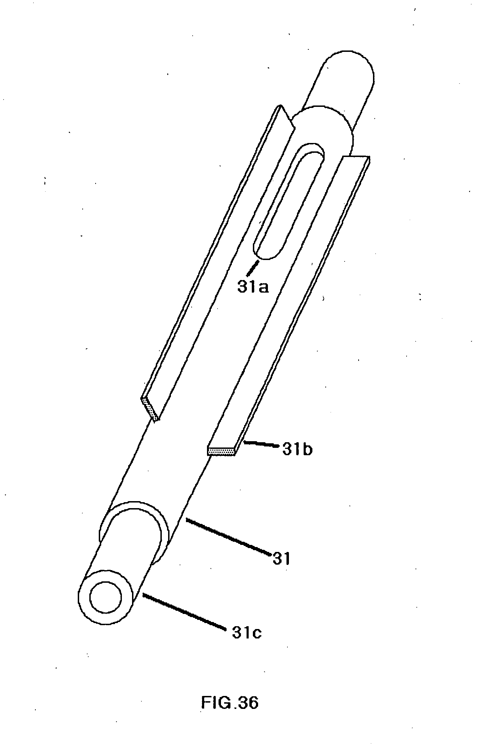

THE FIGURE 36 REPRESENTS A VIEW IN PERSPECTIVE OF THE ROTORIC SHAFT[31].

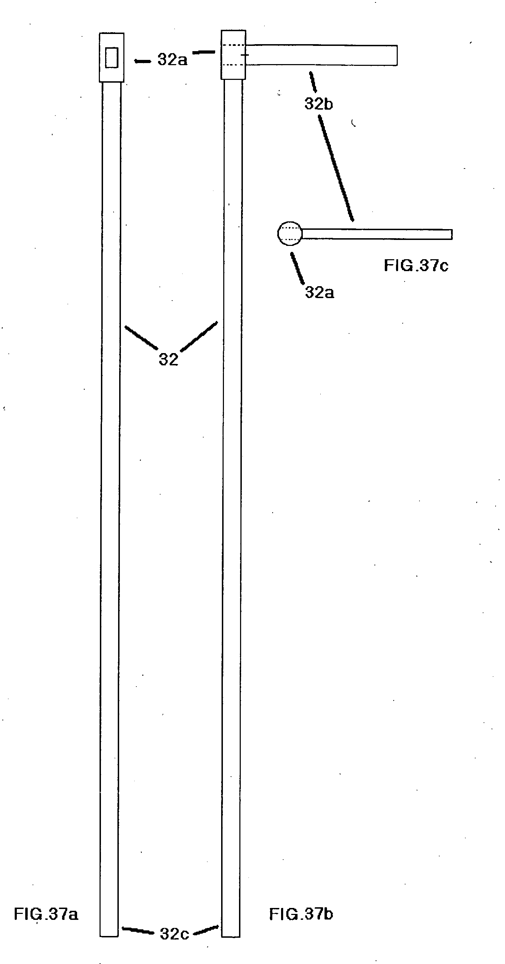

THE FIGURE 37a, 37b, 37c REPRESENTS RESPECTIVELY, THE PLAN VIEW,

THE PROFILE VIEW AND THE FRONT VIEW OF THE CONTROL STEM [32].

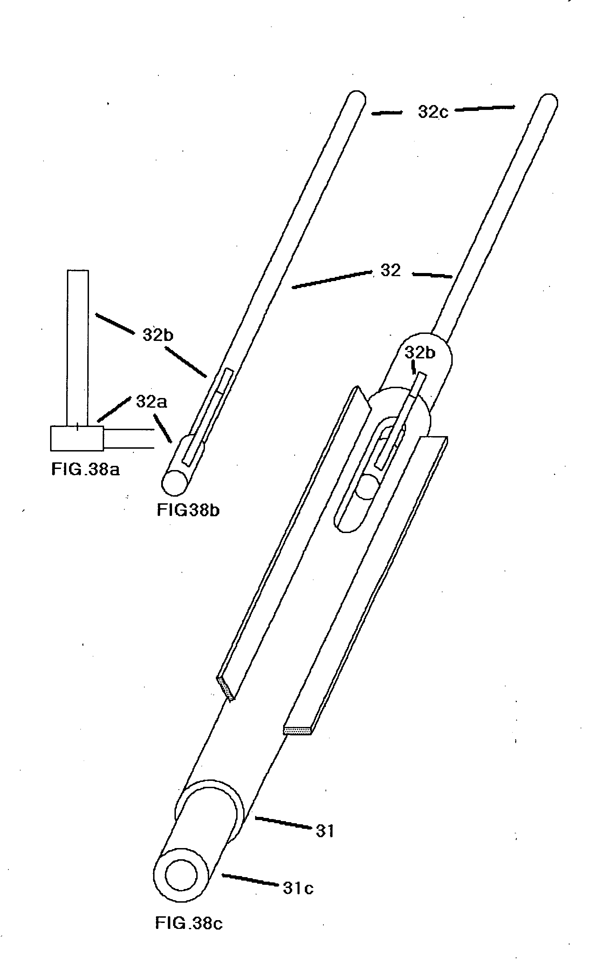

THE FIGURE 38a REPRESENTS A VIEW IN PROFILE OF THE HEAD [32a] AND THE UNION LOCK [32b] OF THE STEM[32].

THE FIGURE 38b REPRESENTS A VIEW IN PERSPECTIVE OF THE STEM[32].

THE FIGURE 38c REPRESENTS A VIEW IN PERSPECTIVE OF THE ROTORIC SHAFT[31], THE STEM[32] INTO THE SHAFT[31], AND THE UNION LOCK[32b] ALREADY ASSEMBLED.

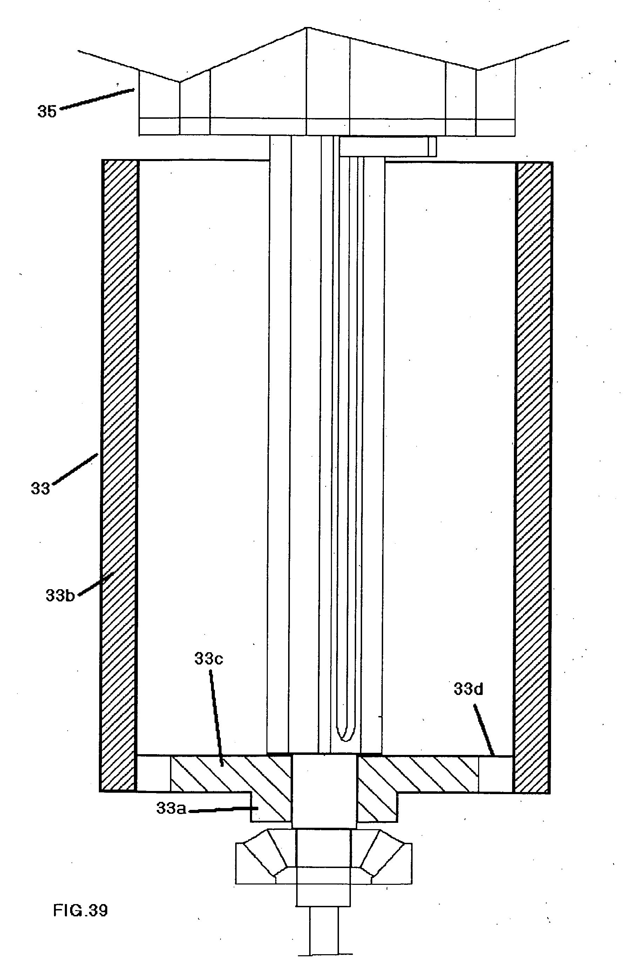

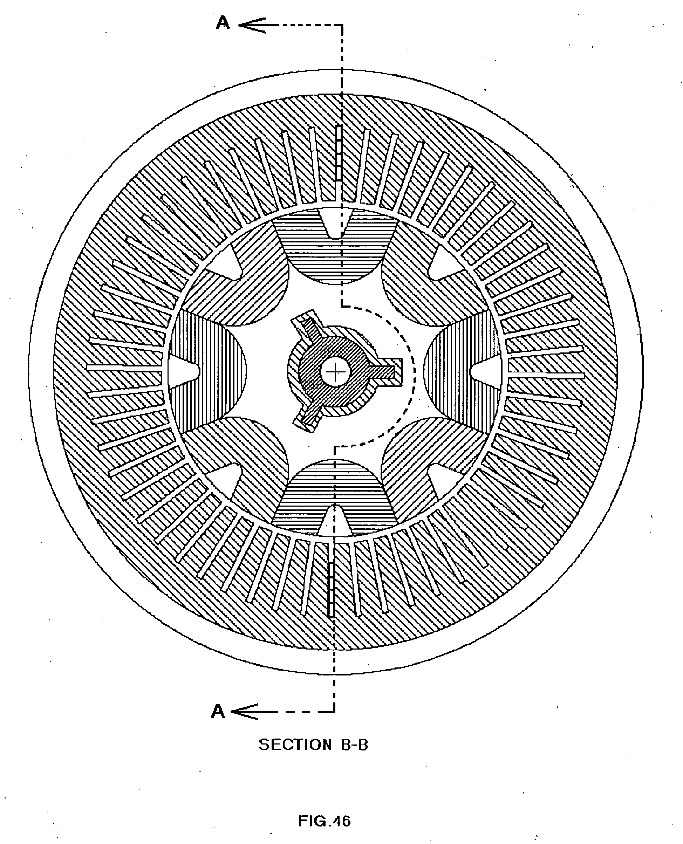

THE FIGURE 39 REPRESENTS A SECTION VIEW OF THE ANTIDEMAGNETIZATION CASE[33], ACCORDING THE CUT LINE A-A IN THE FIGUR 46.

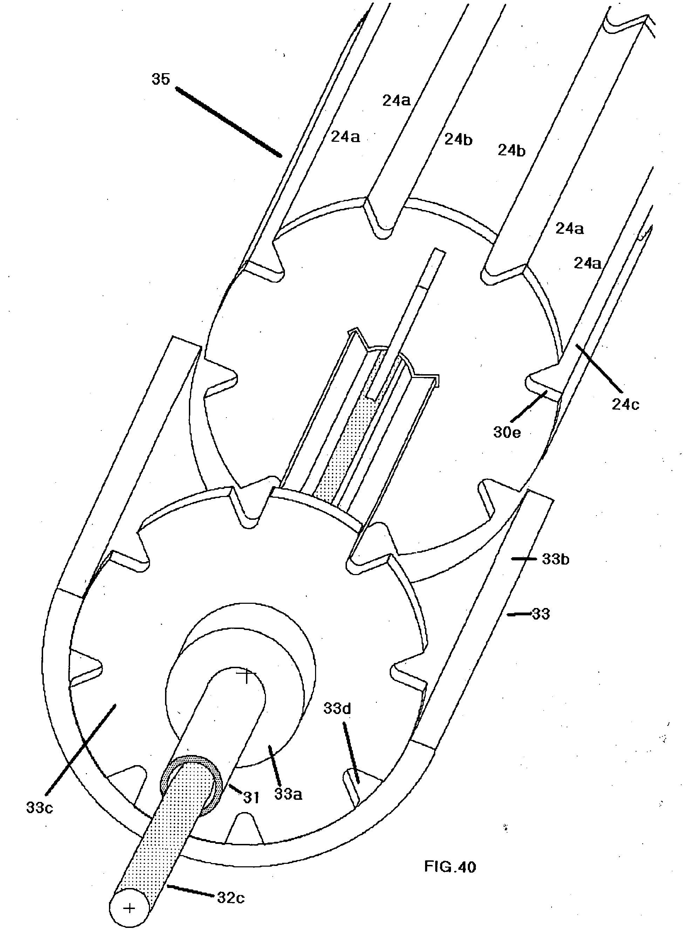

THE FIGURE 40 REPRESENTS A VIEW IN PERSPECTIVE OF THE LOGITUDINAL SECTION OF THE ANTIDEMAGNETIZATION CASE[33] ASSEMBLED ON THE ROTORIC SHAFT[31], VIEWED FROM THE CONTROL SIDE [32c], WITH THE MAGNET CARRIER CAR [30] WITH THE MAGNETS ALREADY ASSEMBLED.

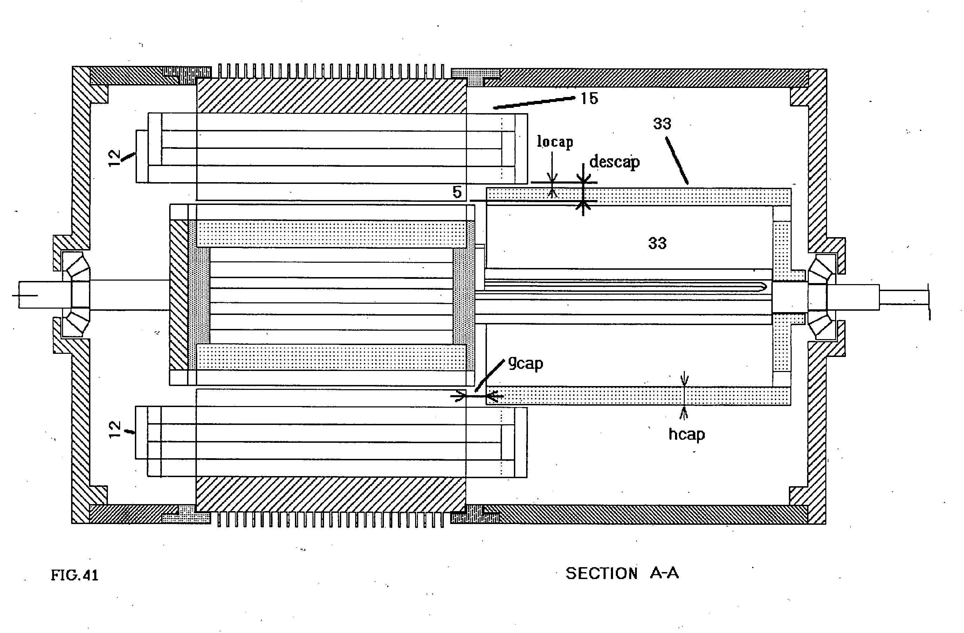

THE FIGURE 41 SHOWS THE LOGITUDINAL SECTION A-A OF THE COMPLETE MACHINE, SHOWING THE CLEARANCES NEEDED FOR THE ASSEMBLY OF THE ANTIDEMAGNETIZATION CASE[33]. WITH THE CLEARANCE FACTOR "Sigma sub-y" APPLIED TO ALL SIDES[20] OF THE COIL [12], NOT HAVE BEEN TAKEN MEASURES FOR COMPENSATING SECTION LOSSES.

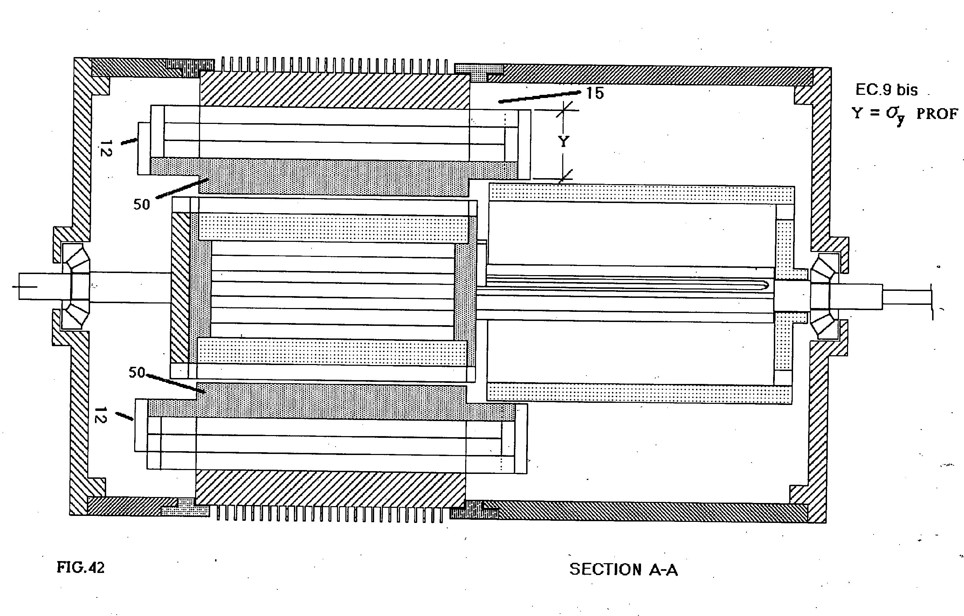

THE FIGURE 42 SHOWS THE LONGITUDINAL SECTION A-A OF THE COMPLETE MACHINE, SHOWING THE CLEARANCES NEEDED FOR THE ASSEMBLY THE ANTIDEMAGNETIZATION CASE[33].

WITH THE CLEARANCE FACTOR "Sigma sub-y" APPLIED TO ALL SIDES[20] EXCEPT FOR THE SIDE [Dn] OF THE COIL [12], FOR CLEARANCE COMPENSATION.

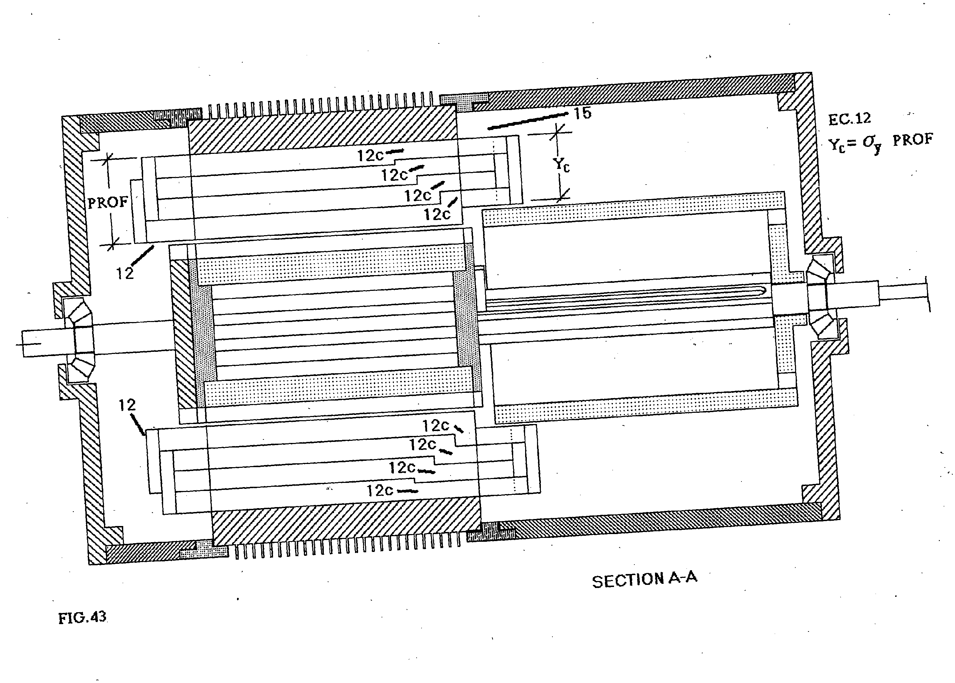

THE FIGURE 43 SHOWS THE LOGITUDINAL SECTION A-A OF THE COMPLETE MACHINE, SHOWING THE CLEARANCES NEEDED FOR THE ASSEMBLY OF THE ANTIDEMAGNETIZATION CASE[33]. WITH THE CLEARANCE FACTOR "Sigma sub-y" APPLIED IN A STEPPED WAY ON THE HEAD[15] ZONES ONLY, FOR CLEARANCE COMPENSATION.

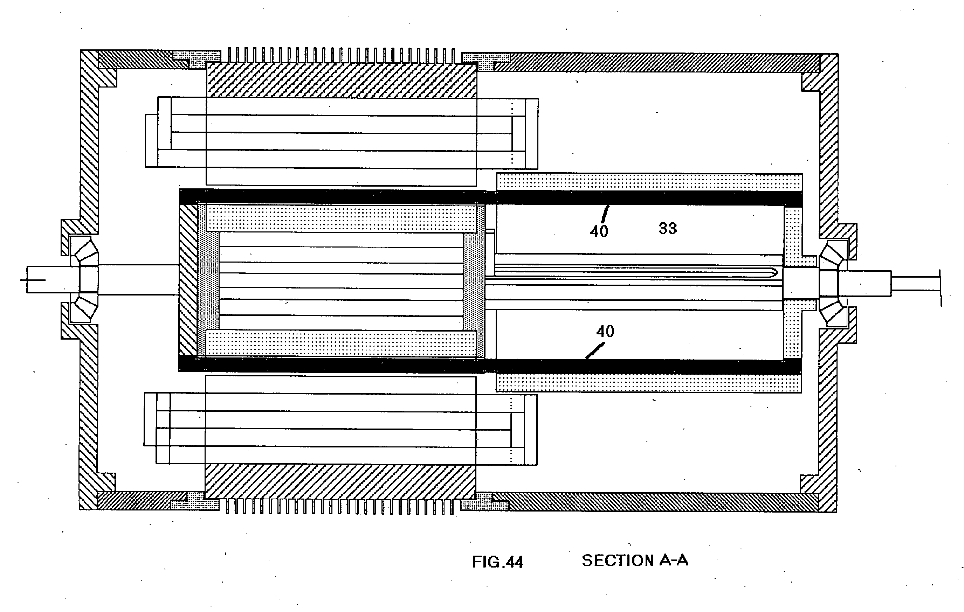

THE FIGURE 44 SHOWS THE LONGITUDINAL SECTION A-A OF THE COMPLETE MACHINE, SHOWING THE GUIDE AND STABILITATION RAILS[40] ALREADY ASSEMBLED.

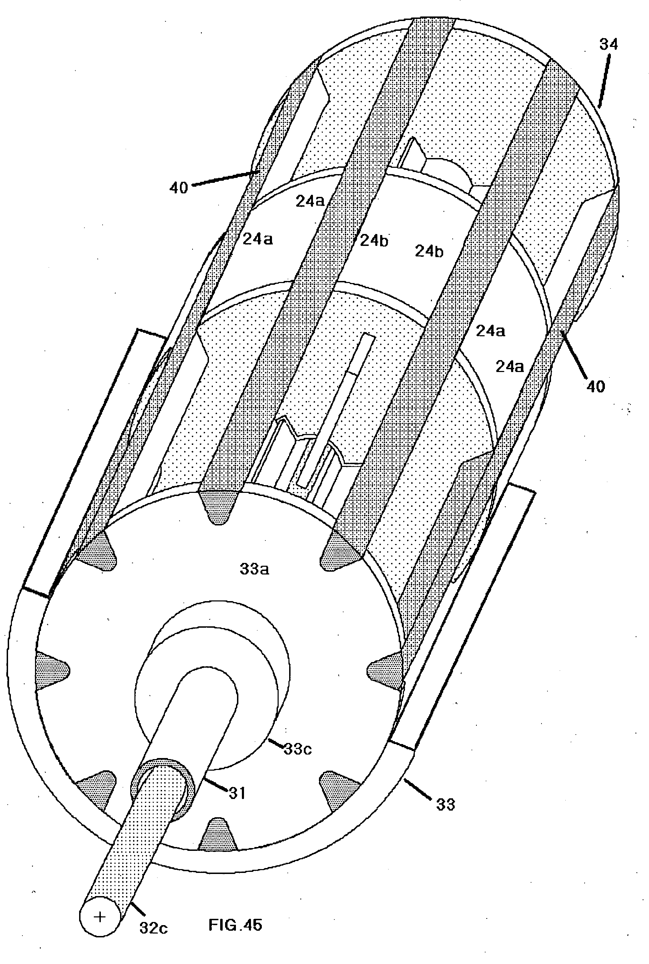

THE FIGURE 45 REPRESENTS A VIEW IN PERSPECTIVE OF A LONGITUDINAL SECTION OF THE ANTIDEMAGNETIZATION CASE[33] ASSEMBLED ON THE ROTORIC SHAFT[31], VIEWED FROM THE CONTROL[32c] SIDE, WITH THE MAGNET CARRIER CAR[30] WITH THE MAGNETS [24]

ALREADY ASSEMBLED, TO SHOW THE DISPOSAL OF THE GUIDE RAILS [40] ON THE FRAME [33c] OF THE CASE [33] AND THE TOP COUNTER-FRAME [34].

THE FIGURE 46 SHOWS THE TRANSVERSAL SECTION B-B OF THE MACHINE, WITHOUT THE GUIDE RAILS[40], AND INDICATES THE LONGITUDINAL SECTION A-A.

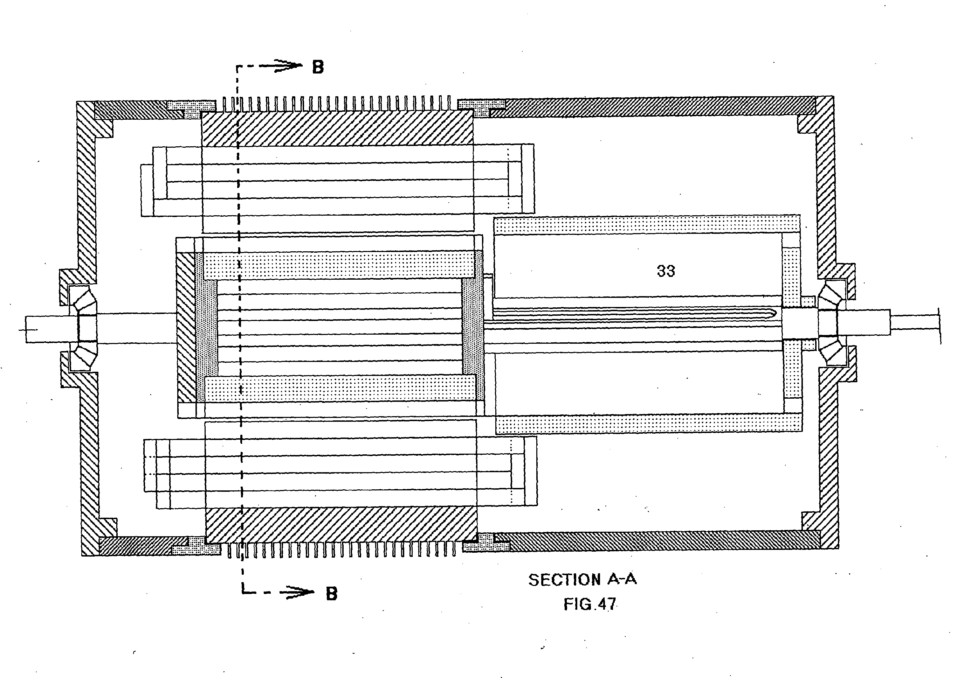

THE FIGURE 47 SHOWS THE LONGITUDINAL SECTION B-B OF THE MACHINE, WITHOUT THE GUIDE RAILS[40], AND INDICATES THE TRANSVERSAL SECTION B-B.

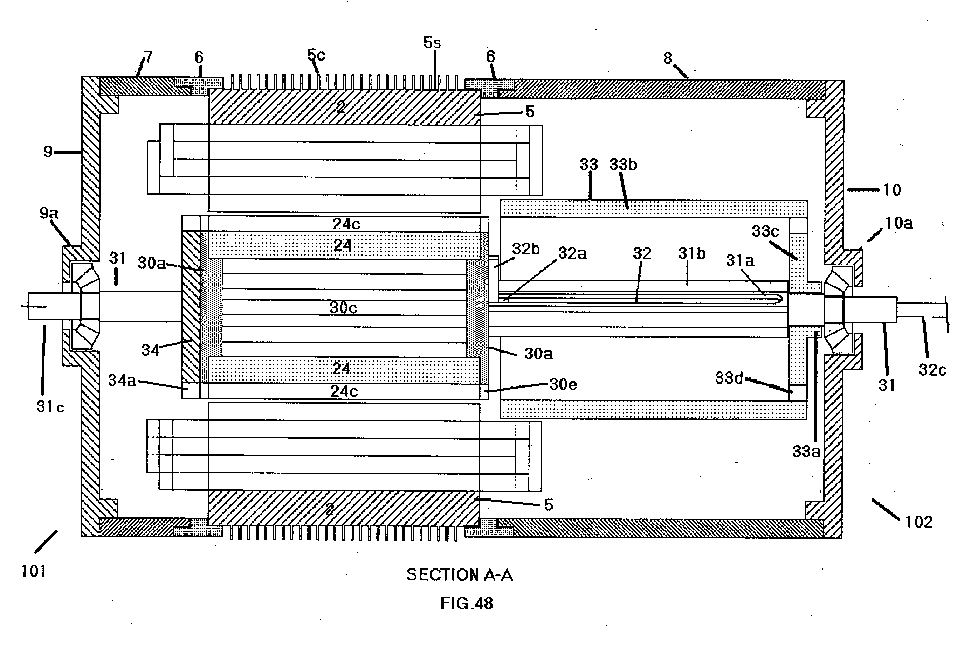

THE FIGURE 48 SHOWS THE LONGITUDINAL SECTION A-A OF THE ENTIRE MACHINE, SHOWING REFERENCES.

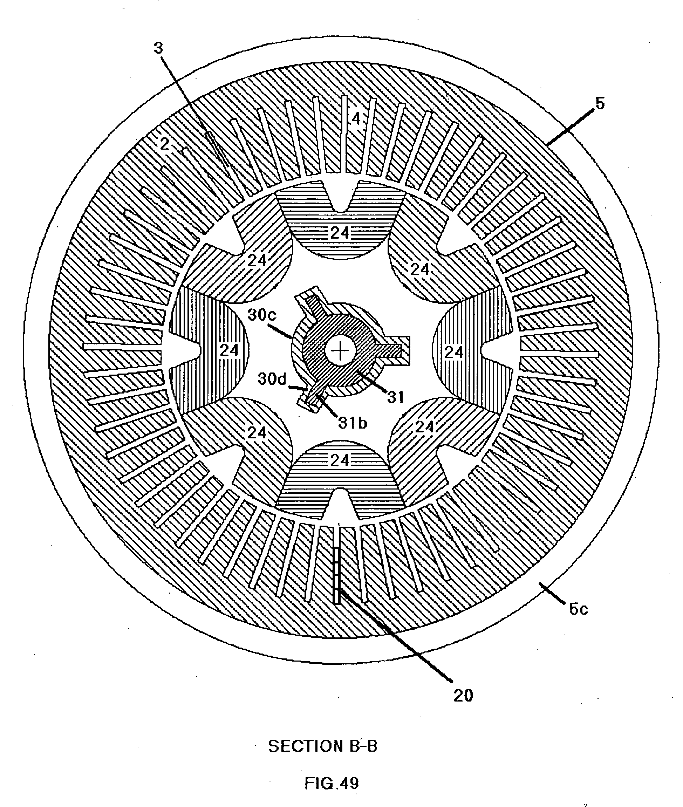

THE FIGURE 49 SHOWS THE TRANSVERSAL CUT B-B OF THE MACHINE,SHOWING REFERENCES.

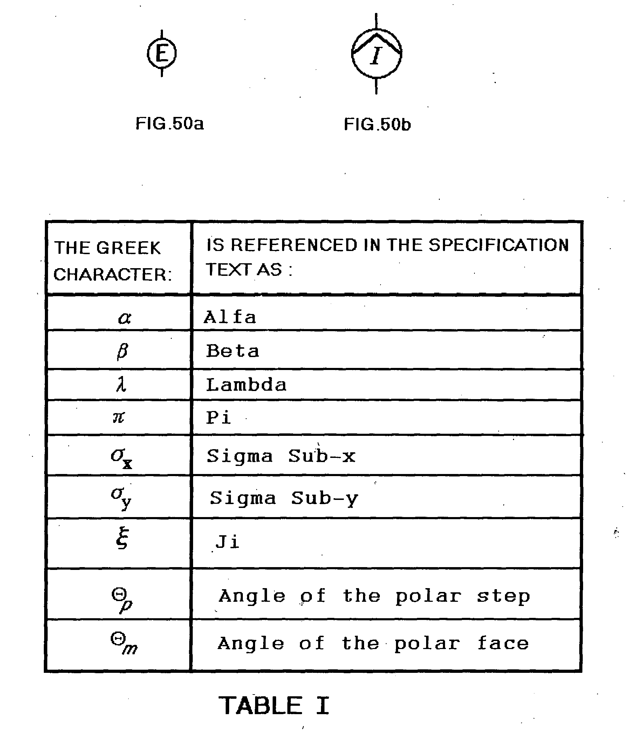

THE FIGURE 50a SHOWS THE THE SYMBOL TO REPRESENT A VOLTAGE GENERATOR.

THE FIGURE 50b SHOWS THE THE SYMBOL TO REPRESENT A CURRENT GENERATOR.

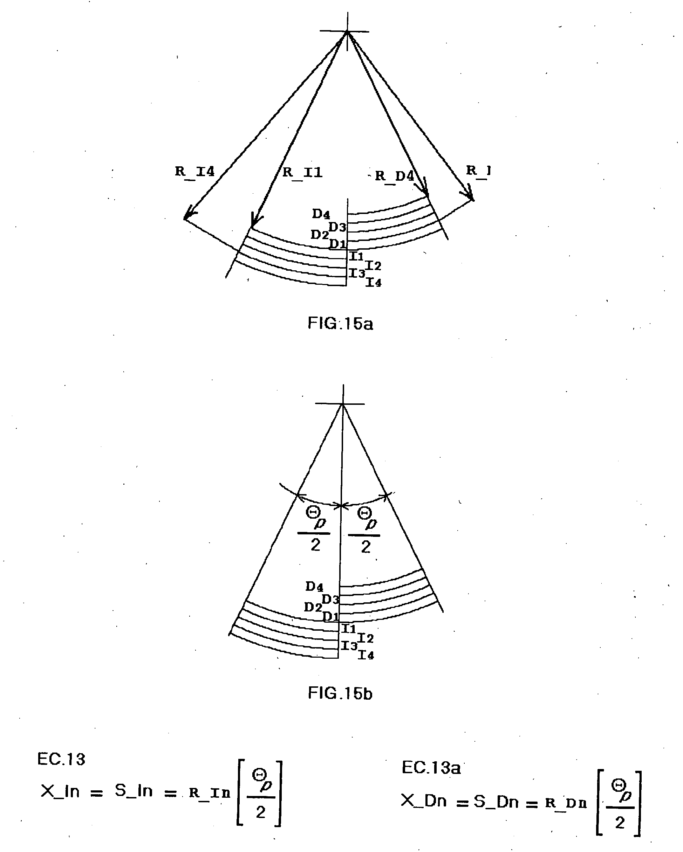

THE TABLE I, EXPLALNS HOW ARE REFERRED INTO THE TEXT THE GREEK CHARACTERS. IT IS NECESSARY TO CLARIFY THAT THE MOST FIGURES THAT REPRESENT PARTS ACTUALLY CURVES, THIS ARE SHOWED RECTIFIED FOR MAJOR CLARITY, AND ONLY THE FIGURES 15 TO 19 INCLUSIVE SHOW CURVED PARTS.


IN THIS SPECIFICATION HAS BEEN INDICATED:


WITH -1a- THE STATORIC STEEL LAMINATION OF NORMAL DIAMETER,
WITH -1b- THE STATORIC STEEL LAMINATION OF EXPANDED DIAMETER,
WITH -2- THE STATORIC FRAME,
WITH -3- THE CONDUCTION GROOVES OF THE STATOR [5],
WITH -3a- THE LESSER SIDE OF A GROOVE [3] OF THE STATOR [5],
WITH -3b- THE GREATER SIDE OF A GROOVE [3] OF THE STATOR [5],

WITH -3d- THE UPPER REGION OF A GROOVE [3] OF THE STATOR [5],

WITH -3i- THE LOWER REGION OF A GROOVE [3] OF THE STATOR [5],

WITH -4- THE TOOTH OF THE STATOR [5] BETWEEN GROOVES[3],

WITH -5- THE BODY OF THE STATOR [5],

WITH -5c- THE EXPANSION FLANGES FOR COOLING THE STATOR [5],

WITH -5s- THE CYLINDRICAL EXTERNAL SURFACE OF THE STATOR [5],

WITH -6- THE STEEL RINGS FOR STABILITATION AND STIFNESS,

WITH -6a- THE ENGRAVES FOR ENGAGE OF THE STATOR[5] WITH THE RING[6],

WITH -6b- THE ENGRAVES FOR ENGAGE OF THE THE CARCAXS [7],[8] WITH THE RING[6],

WITH -6p- THE PASSING HOLES FOR FASTENING ON THE RINGS[6],

WITH -7- THE FRONT CARCAX OF LIGHT ALEATION,

WITH -7a- THE ENGRAVE OF THE FRONT CARCAX FOR ENGAGE WITH THE RING[6],

WITH -8- THE REAR CARCAX OF LIGTH ALEATION,

WITH -8a- THE ENGRAVE OF THE REAR CARCAX FOR ENGAGE WITH THE RING[6],

WITH -9- THE FRONT SHELL,

WITH -9a- THE BEARING CASE OF THE FRONT SHELL [9],

WITH -10- THE REAR SHELL,

WITH -10a- THE BEARING CASE OF THE REAR SHELL [10],

WITH -12- THE COIL,

WITH -12b- THE INSULATION COAT OF THE LEAD OF THE COIL [12],

WITH -12c- THE STEP IN THE LONG OF THE HEMISPIRES[In],[Dn] OF THE COIL[12],

WITH -13- THE FOOT OF THE COIL[12],

WITH -14- THE MIDDLE OF THE COIL[12],

WITH -15- THE HEAD OF THE COIL[12],

WITH -16- THE TERMINAL AT THE FOOT OF THE HEMISPIRE [In],[Dn],

WITH -17- THE LEFT OPENING AT THE FOOT OF THE HEMISPIRE [In],[Dn],

WITH -18- THE CLOSING AT THE FOOT OF THE HEMISPIRE [In],[Dn],

WITH -19- THE RIGHT OPENING AT THE FOOT OF THE HEMISPIRE [In],[Dn],

WITH -20- THE SIDE OF THE HEMISPIRE [In],[Dn],

WITH -21- THE CLOSING AT THE HEAD OF THE HEMISPIRE [In],[Dn],

WITH -22- THE TERMINAL AT THE HEAD OF THE HEMISPIRE [In],[Dn],

WITH -23- THE INTERPOLAR JUMPER BETWEEN COILS[12],

WITH -23i- ONE TERMINAL OF AN INTERPOLAR JUMPER[23],

WITH -23d- THE OTHER TERMINAL OF AN INTERPOLAR JUMPER[23],

WITH -24- THE MAGNET BODY,

WITH -24a- THE SOUTH POLAR SURFACE OF THE MAGNET[24],

WITH -24b- THE NORTH POLAR SURFACE OF THE MAGNET[24],

WITH -24c- THE INTERPOLAR CHANNEL OF THE MAGNET[24],

WITH -30- THE SLIDE CAR FOR THE MAGNETS[24],

WITH -30a- THE FRAME TO SUPPORT THE MAGNETS[24],

WITH -30b- THE ENGRAVES ON THE FRAME TO FIX THE MAGNETS[24],

WITH -30c- THE HOLLOW CHANNELED BRIDGE OF THE MAGNET CARRIER CAR[30],

WITH -30d- THE PARAXIAL CHANNELS OF THE BRIDGE[30c] OF THE CARRIER CAR [30],

WITH -30e- THE PERIPHERAL ENGRAVES OF THE SUPPORT FRAMES[30a]FOR THE RAILS[40],

WITH -31- THE ROTORIC SHAFT,

WITH -31a- THE LONGITUDINAL GROOVE OF THE ROTORIC SHAFT[31],

WITH -31b- THE LONGITUDINAL TABS ON THE ROTORIC SHAFT[31],

WITH -31c- THE PRIMARY FORCE INTAKE OF THE ROTORIC SHAFT[31],

WITH -32- THE PARAXIAL STEM,

WITH -32a- THE TOP OF THE STEM[32] WITH A ENGAGE FOR THE UNION LOCK[32b],

WITH -32b- THE UNION LOCK OF THE STEM[32] TO THE SLIDE CAR[30],

WITH -32c- THE EXTERNAL TOP OF THE STEM, OR EXITATION CONTROL,

WITH -33- THE ANTIDEMAGNETIZATION CASE,

WITH -33a- THE HUB OF THE CASE[33],

WITH -33b- THE WALLS OF THE CASE[33],

WITH -33c- THE FRAME OF THE CASE[33],

WITH -33d- THE ENGRAVES OF THE CASE FRAME[33c] TO SUPPORT THE RAILS[40],

WITH -34- THE COUNTER-FRAME TO ENGAGE THE RAILS[40],

WITH -34a-THE ENGRAVES ON THE COUNTER-FRAME [34] TO ENGAGE THE RAILS[40],

WITH -35- THE ROTOR BODY,

WITH -40- THE GUIDE AND STABILITATION RAILS,

WITH -90- THE STATORIC ASSEMBLY,

WITH -100- THE ROTORIC ASSEMBLY,

WITH -101- THE FRONT OF THE MACHINE,

WITH -102- THE REAR OF THE MACHINE,

WITH "NORTH" THE INDICATION FOR A MAGNETIC POLE,

WITH "SOUTH" THE INDICATION FOR A MAGNETIC ANTIPOLE,

WITH "In" THE n-th LEFT HEMISPIRE ,

WITH "Dn" THE n-th RIGHT HEMISPIRE,

WITH "Pn" THE n-th JUMPER AT FOOT FOR THE HEMISPIRE [In],

WITH "Cn" THE JUMPERS TO THE HEAD FOR THE HEMISPIRE [In],

WITH "P1" A PHASE OF THE MACHINE,

WITH "-P1" A BORNE OF THE PHASE[P1] FOR EXTERNAL CONNECTION,

WITH "+P1" THE BORNE OF THE PHASE[P1], COMPLEMENTARY OF THE[-P1],

WITH "P2" A HOMOLOG PHASE OF THE [P1],

WITH "-P2" A BORNE OF THE PHASE[P2] FOR EXTERNAL CONNECTION,

WITH "+P2" THE BORNE OF THE PHASE[P2], COMPLEMENTARY OF THE[-P2],

WITH "AP1" THE COUNTER-PHASE OF THE [P1] AND THE [P2],

WITH "-AP1" A BORNE OF THE PHASE[AP1] FOR EXTERNAL CONNECTION,

WITH "+AP1" THE BORNE OF THE PHASE[AP1], COMPLEMENTARY OF THE[-AP1],

WITH "AP2" A COUNTER-PHASE HOMOLOG OF THE [AP1],

WITH "-AP2" A BORNE OF THE PHASE [AP2] FOR EXTERNAL CONNECTION,

WITH "+AP2" THE BORNE OF THE PHASE[AP2], COMPLEMENTARY OF THE[-AP2],

APART FROM THESE REFERENCES, IN THE ECUATIONS OF THIS SPECIFICATION AND IN THE FIGURES HAS BEEN INDICATED:

WITH "Rr" TO THE ROTOR[35] RADIO,

WITH "lo" TO THE AIR GAP LENGHT,

WITH "Restat_i" TO THE INNER RADIO OF THE STATOR[5] BODY,

WITH "Restat_e" TO THE OUTER RADIO OF THE STATOR[5] BODY,

WITH "Restat_x" TO THE STATORIC EXPANSION RADIO FOR THE FLANGES[5c],

WITH "hc" TO THE STATORIC FRAME[2] THICKNESS,

WITH "hx" TO THE HIGHT OF THE COOLING FLANGES[5c],

WITH "PROF" THE DEEP OF THE CONDUCTION GROOVE[3] ,

WITH "APE" THE OPENING OF THE CONDUCTION GROOVE[3],

WITH "PERM" THE PERMEABLE FACE OF A TOOTH[4],

WITH "hcu" TO THE HEIGHT OF A ELECTRIC LEAD OF THE COIL[12],

WITH "lcu" TO THE WIDE OR BASE OF THE ELECTRIC LEAD OF THE COIL[12],

WITH "d" TO THE THICKNES OF THE INSULATION OF THE COILS[12],

WITH "z" TO THE TO THE HALF OF THE POLAR STEP,

WITH "Rc" TO THE CENTER OF THE CIRCUMFERENCES OF RADIO Ri AND Re,

WITH "he" THE LENGHT OF THE RECTILINEOUS LATERAL OUTER SIDES OF THE MAGNET[24],

WITH "Re" TO THE RADIO OF THE EXTERNAL SPLICE ARC OF THE MAGNET[24] PROFILE,

WITH "hi" THE LENGHT OF THE RECTILINEOUS LATERAL INNER SIDES OF THE MAGNET[24],

WITH "Ri" TO THE RADIO OF THE INTERNAL SPLICE ARC OF THE MAGNET[24] PROFILE,

WITH "Cpm" TO THE ARC OF THE HALF POLAR HEAD OF THE MAGNET [24],

WITH "lm1" TO THE HALF OF THE STRAIGHT COMPONENT OF THE MAGNET[24] LENGTH,

WITH "lm2" TO THE HALF OF THE CURVE COMPONENT OF THE MAGNET[24] LENGTH,

WITH "lm" TO THE LENGHT OF THE MAGNET[24],

WITH "Vol_m" TO THE VOLUME OF THE MAGNET[24],

WITH "Desm" TO THE DEMAGNETIZATION FACTOR,

WITH "Sm" TO THE SURFACE OF A ROTORIC POLAR FACE,

WITH "Sperm" TO THE SURFACE THAT A TOOTH[3] PUT FORWARD THE SURFACE "Sm",

WITH "p" TO THE INTEGER NUMBER THAT REPRESET THE POLE PAIRS OF THE MACHINE,

WITH "F" TO THE NUMBER CALLED ACTIVE FRACTION, COMPRISED BETWEEN ZERO AND ONE,

WITH "G" TO THE TO THE TOTAL NUMBER OF GROOVES[3], TOOTHS[4] AND COILS[12],

WITH "Gp" TO THE NUMBER OF GROOVES,OR PHASES,OR COUNTERPHASES INTO A POLAR STEP,

WITH "Gm" THE NUMBER OF ACTIVE GROOVES,PHASES OR COUNTERFACES INTO A POLAR FACE,
WITH "L" TO THE LENGHT OF THE STATOR[5] AN WIDE OF THE MAGNETS[24],
WITH "Hc" TO THE HEAT FLUX DENSITY INTO THE FRAME[2] OF THE STATOR[5],
WITH "Hd" TO THE HEAT FLUX DENSITY INTO THE TOOTH[4] OF THE STATOR[5],
WITH "Hd_max" TO THE MAXIMUM HEAT FLUX DENSITY INTO THE TOOTH[4],
WITH "Hd_medio" TO THE MEAN HEAT FLUX DENSITY INTO THE TOOTH[4],
WITH "Hd_min" TO THE MINIMUN HEAT FLUX DENSITY INTO THE TOOTH[4],
WITH "Hg" TO THE HEAT FLUX DENSITY ON THE LATERAL WALLS OF THE GROOVE[3],
WITH "Wpt" TO THE TOTAL POWER LOSSES
WITH "Wpc" TO THE POWER LOSSES THAT CROSS TRHOUGH THE FRAME[2] OF THE STATOR[5],
WITH "Wpg" TO THE POWER LOSSES INTO A GROOVE[3],
WITH "ScH" TO THE SURFACE OF HEAT CONDUCTION INTO THE FRAME[2] OF STATOR[5],
WITH "SdH" TO THE SURFACE OF HEAT CONDUCTION OF THE TOOTH [3] OF THE STATOR[5],
WITH "Sg" TO THE LATERAL SURFACE [3b] OF HEAT CONDUCTION OF THE GROOVES[3],
WITH "lcon" TO THE LENGHT OF THE CONNECTION TABS OF THE HEMISPIRES[In],[Dn],
WITH "e_lam" TO THE THICKNESS OF THE STATORIC LAMINATIONS [1a],[1b]
WITH "e_aleta" TO THE THICKNESS OF THE STATORIC COOLING FLANGE [5c],
WITH "Y" TO THE CLEAR HEIGHT OF THE ROTORIC CONDUCTION GROOVE[3],
WITH "Yc" TO THE CLEAR HEIGHT OF THE HEAD[15],
WITH "hcap" TO THE THICKNESS OF THE WALL OF THE ANTIDEMAGNETIZATION CASE[33],
WITH "locap" TO THE CLEARANCE BETWEEN THE CASE[33] AND THE HEADS[15],
WITH "descap" TO THE RADIAL CLEARANCE ON THE HEADS[15] FOR THE CASE[33],
WITH "g_cap" TO THE SEPARATION BETWEEN THE CASE[33] AND THE STATOR[5],
HAS BEEN USED IN THIS SPECIFICATION SYMBOLS WITH A WELL KNOWN MEANIG INTO THE
SPECIALITY, NEVERTHELESS IS WRITE DOWN THAT HAS BEEN DESIGNED:
WITH "MMF" TO THE MAGNETOMOTIVE FORCE,
WITH "Volt" TO THE VOLTAGE ON A PHASE,
WITH "E" TO THE ELECTROKINEMATIC VOLTAGE OF A VOLTAJE GENERATOR,
WITH "I" TO THE ELECTRIC CURRENT,
WITH "t" TO THE VARIABLE TIME,
HAS BEEN USED IN THIS SPECIFICATION AS SYMBOLS IN THE FIGURES AND ECUATIONS,
IN GREEK SMALL LETTERS, WICH HAS BEEN DESIGNED:
WITH "Alfa" TO THE PROPORTIONAL FACTOR TO THE RADIO "Rr",
WITH "Beta" TO THE PROPORTIONAL FACTOR TO THE ROTORIC CIRCUMFERENCE, 2 * Pi * Rr
WITH "Pi" TO THE NUMBER "3.14159",
WITH "Ji" TO THE ANGLE SUSTAINED FOR A POINT ON THE INTERNAL STATORIC CIRCUMFE

RENCE, REFERRED TO A SYSTEM OF COORDINATES FIXED TO THE ROTOR,

WITH "Sigma" TO THE FACTOR OF CLEARED AREA OF THE GROOVE OF THE STATOR[5],
WITH "Lambda" THE PROPORTIONAL FACTOR TO ROTORIC CIRCUMFERENCE,TWO"Pi" TIMES "Rr"
WITH "Sigma sub_y " TO THE HIGHT CLEARANCE FACTOR OF THE GROOVE[3],
WITH "Sigma sub_x " TO THE WIDE CLEARANCE FACTOR OF THE GROOVE[3],
WITH "Theta sub_p" TO THE ANGLE OF THE POLAR STEP,
WITH "Theta sub_m" TO THE ANGLE SUSTAINED FOR THE POLAR HEAD,

HAS BEEN USED IN THIS SPECIFICATION AS SYMBOLS IN THE FIGURES AND ECUATIONS, IN GREEK CAPITAL
LETTERS, WHICH HAS BEEN DESIGNED:
WITH "Delta" TO THE SHAPE FACTOR FOR THE MAGNETS[24]
THE SYMBOLS RELATED TO THE COIL[12] SPIRES, HAS BEEN USED ONES THAT IN WHICH THE LETTER 'n'
(EN IN SMALL LETTER) CAN TAKE THE VALUES COMPRISED BETWEEN 1 AND "N"; HAS BEEN DESIGNED:

WITH "N" TO THE NUMBER OF SPIRES OF THE COIL[12],
WITH "In" TO THE VALUE OF n WHEN REFERS TO THE LEFT n-th HEMISPIRE,
WITH "Dn" TO THE VALUE OF n WHEN REFERS TO THE RIGHT n-th HEMISPIRE,
WITH "R_In" TO THE RADIO OF THE HELICOIDAL CLOSING OF THE LEFT HEMIESPIRE[In],
WITH "R_Dn" TO THE RADIO OF THE HELICOIDAL CLOSING OF THE RIGHT HEMIESPIRE[Dn],
WITH "ITc_In" TO THE LENGHT OF THE TERMINALS AT THE HEAD OF THE HEMISPIRE[In],

WITH "lTp_In" TO THE LENGHT OF THE TERMINALS AT THE FOOT OF THE HEMISPIRE[In],
WITH "lTc_Dn" TO THE LENGHT OF THE TERMINALS AT THE HEAD OF THE HEMISPIRE[Dn],
WITH "lTp_Dn" TO THE LENGHT OF THE TERMINALS AT THE FOOT OF THE HEMISPIRE[Dn],
WITH "l_Cn" TO THE LENGHT OF THE JUMPERS AT THE HEAD OF THE HEMISPIRA[In],
WITH "l_Pn" TO THE LENGHT OF THE JUMPERS AT THE FOOT OF THE HEMISPIRA[In],
WITH "l_PN" TO THE LENGHT OF THE INTERCONNECTION JUMPER AT THE FOOT OF THE HEMISPIRA[In],

HAS BEEN USED SPECIAL SYMBOLS FOR THE HELIXES "In", HAVING BEEN DESIGNED:

WITH "X_In" TO THE LENGHT OF A SEGMENT OF GENERATRIX ON THE CYLINDER "R_In",
WITH "S_In" TO THE LENGHT OF A ARC ON THE CYLINDER "R_In",
AS WELL FOR THE HELIXES "Dn" , HAVING BEEN DESIGNED:
WITH "X_Dn" TO THE LENGHT OF A SEGMENT OF GENERATRIX ON THE CYLINDER "R Dn",
WITH "S_Dn" TO THE LENGHT OF A ARC ON THE CYLINDER "R_Dn",

HAVING FINISHED THIS BRIEF DESCRIPTION OF THE FIGURES AND EXPLAINED THE REFEREN CES UTILICED IN ITS, IT IS NECESSARY TO MAKE SOME CLARIFY RELATED THE TERMS AND AGREEMENTS USED IN THE DETAILED SPECIFICATION.

THE TERM MACHINE MEANS SO MUCH MOTOR AS GENERATOR

THE SPAINS TERMS: BOBINA, DEVANADO, AND BOBINADO; MEANS ALL THE SAME AS THE ENGLISH TERM COIL.
THE REFERENCES TO THE FIGURES HAS BEEN INDICATED WITH COMBINATIONS OF LETTERS AND NUMBERS INTO BRACKETS.
THE REFERENCES TO THE VARIABLES INTO THE TEXT HAS BEEN PUT WITH QUOTATION MARKS.
TO REPRESENTING A LETTER OF THE APHABET INTO THE TEXT, THESE HAS BEEN PUT INTO APOSTROPHES. AS EXAMPLE WE HAVE THAT:

[Q] REPRESENTS A REFERENCE IN A FIGURE,
"Q" REFERS TO A VARIABLE,
'Q' INDICATES THE LETTER Q.

DETAILED DESCRIPTION OF THE INVENTION

THE INVENTION ASSIGN THE STATOR [5] FOR THE ELECTRICAL SIDE OF CONVERTION THEREFORE, THIS ONE MUST SUPPORT ALL THE ELECTRIC POWER OF THE MACHINE. THAT IMPLIES TO COMPLIES WITH THE SIX FOLLOWING FUNCTIONS:

TO PROVIDE A PART OF HIGH PERRMEABILITY FOR A MAGNETIC CIRCUIT,
TO PROVIDE A PART OF HIGH CONDUCTIVITY FOR A ELECTRIC CIRCUIT,
TO PROVIDE A SURFACE OF HEAT TRANSFERRING,
TO PROVIDE A LOWER THERMAL RESISTANCE TO HEAT EVACUATION,
TO PROVIDE A STATIC STRUCTURAL PART FOR SUPPORT THE REACCION COUPLE,
TO PROVIDE A SUPPORT FOR ALL THE COMPONENTS AND SUPPLY STIFFNESS FOR
THE STATORIC ASSEMBLY.

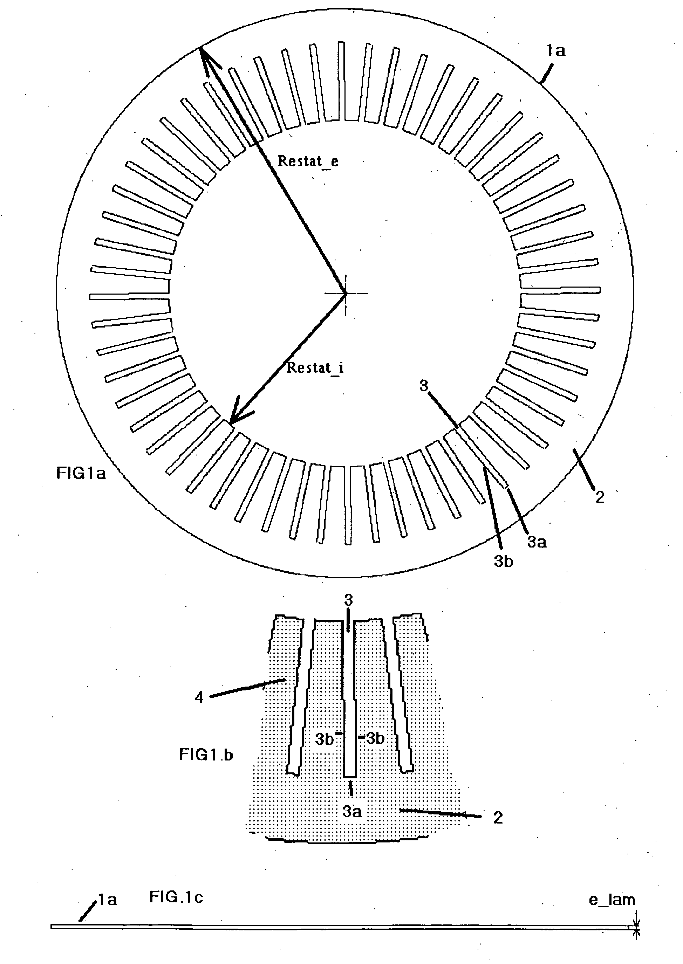

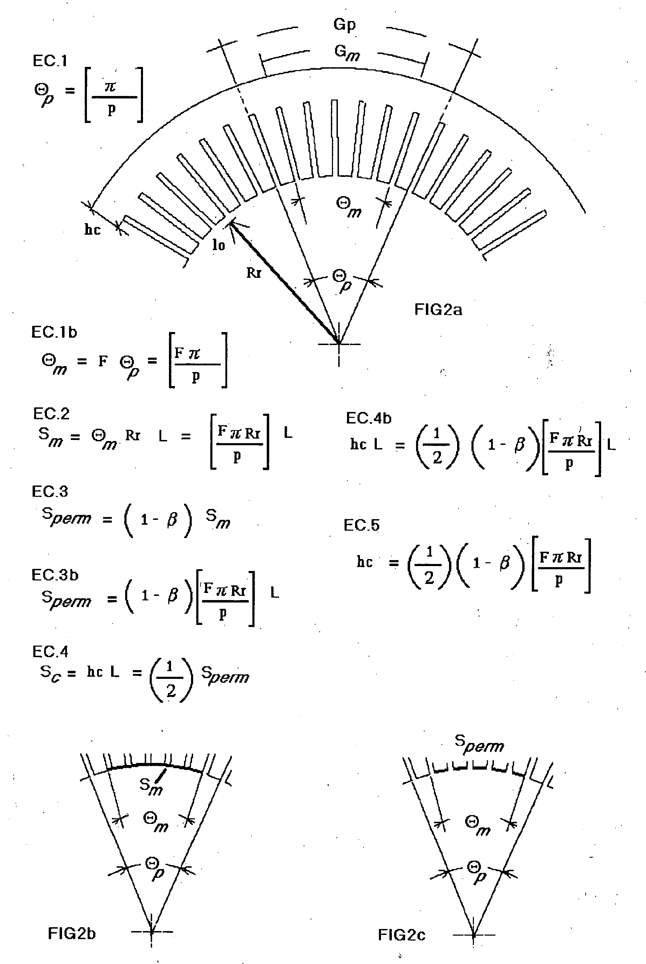

ALL THESE FUNCTIONS MUST BE COMPLIED WITH GREAT ECONOMY OF MATERIALS AND SIMPLICITY, DUE THE IMPOSED REQUIREMENTS OF REDUCED VOLUME AND WEIGHT.
TO COMPLY WITH THE FUNCTION OF PROVIDE A PART OF HIGH PERMEABILITY FOR THE MAGNETIC CIRCUIT, LAMINATED STEEL IS EMPLOYED FOR THE STATOR,OPERATING WITH HIGH FLUX DENSITY, IN A WAY COMPATIBLE WITH LOSSES AND PERMEAVBILITY DEVALUATION, FOR EXAMPLE: 5% SILICON STEEL OPERATING TO 1,57 T.
ITS SHAPE IS A DISK [1a] WITH INNER GROOVES FOR CONDUCTION[3] WHOSE NUMBER IS "G", A IDENTICAL NUMBERS OF TOOTH [4] ARE FORMED, WITH A INNER RADIO: $Restat\_i = Rr + lo$ , SEE FIGURE 1a, AND A OUTER RADIO: $Restat\_e = Rstat + PROF + hc$ , SEE FIGURE 1a,
[0119] THAT PUT FORWARD THE POLAR FACES [SOUTH] AND [NORTH] A PERMEABLE SURFACE "Sperm", GIVEN FOR THE ECUATION 3b, IN THE FIGURE 2. GIVING TO THE LONGITUDINAL SECTION OF THE STATOR FRAME[2] THE HALF OF THIS VALUE, ARISE FOR "hc" THE VALUE GIVEN FOR THE ECUATION 5 IN THE FIGURE 2.

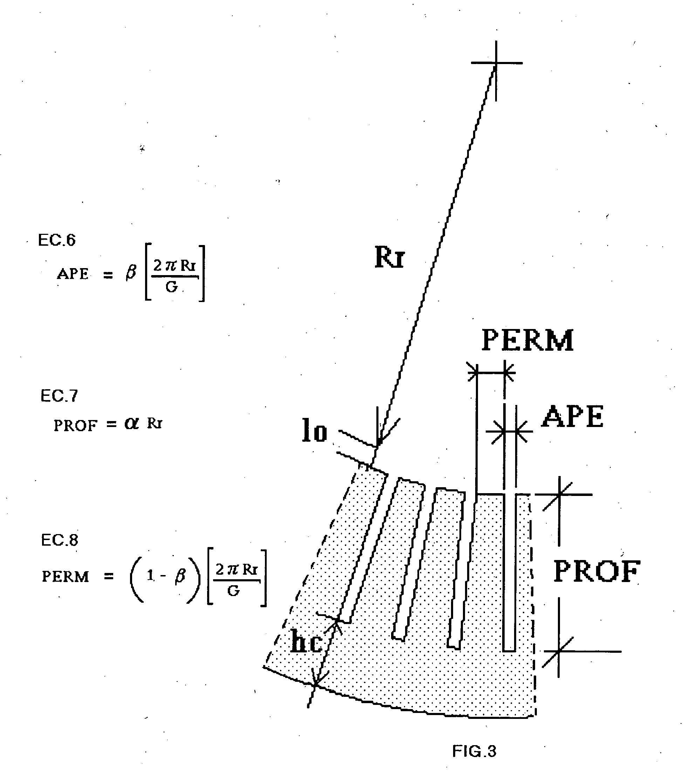

THE ECUATIONS 1, 2, 3 y 4 , ARE DEDUCTIVE. TO COMPLY WITH THE FUNCTION OF PROVIDE A PART OF HIGH CONDUCTIVITY FOR A ELECTRIC CIRCUIT IN A WAY COMPATIBLE WITH THE PRECEDENT, THE CONDUCTION GROOVE[3] IS DIMENTIONED IN A WAY THAT ITS MINOR SIDE[3a] PERPENDICULAR TO THE RADIO "Rr" TAKES A PROPORTION OF THE CIRCUMFERENCE OF RADIO "Rr", THIS VALUE IS GIVEN BY THE ECUATION 6, IN THE FIGURE 3, AND IT IS CALLED " APE".

THE COMPLEMENTARY PROPORTION IS LEFT FOR COMPLY SATISFACTORILY WITH THE MAGNETIC CIRCUIT PART. THIS VALUE IS GIVEN BY THE ECUATION 8 IN THE FIGURE 3.

THE MAYOR SIDE[3b] , PARALLEL TO THE RADIO, IS DIMENTIONED AS TO PRODUCE A SUITABLE CONDUCTION AREA. THE CORRESPONDING VALUE IS GIVEN BY THE ECUATION 7 IN THE FIGURE 3.

TO COMPLY WITH THE FUNCTION TO PROVIDE A SURFACE FOR FOR HEAT TRANSFERRING, AS FORCED AIR COOLING IS SPECIFIED FOR THIS MACHINE, THE CYLINDRICAL EXTERNAL SURFACE [5s] OF THE STATOR [5] IS FLANGED WITH CIRCULAR FLANGES [5c] IN A TRANSVERSAL DISPOSAL VIA THE INSERTING OF EXPANDED SURFACE STATORIC DISKS [1b], THAT DIFFER OF THE NORMAL DISKS [1a] ONLY IN THE EXTERNAL RADIO, GIVEN BY:

$$Rexp\_e = Restat\_e + hx \text{ WHERE:}$$
$$hx= 0.75 \text{ cm, REGARDLESS OF "Restat".}$$

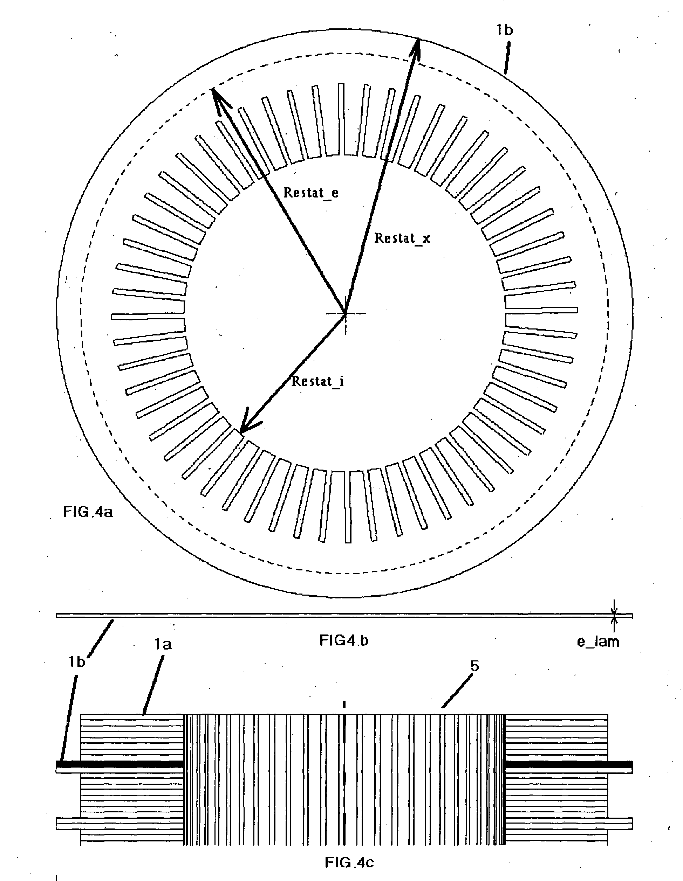

THESE ARE DISPOSED IN A NUMBER OF TWO SUCESSIVES EACH 8 NORMAL DISKS [1a] ACHIEVING A MULTIPLICATION OF THE EXTERNAL STATORIC SURFACE [5s] OF FOUR TIMES, MOREOVER GUARANTING A GOOD TERMAL CONTACT, DUE TO THE DEEP PENETRATION OF THE EXPANDED STATORIC DISKS [1b] IN THE HEAT SOURCE, THAT IS THE SAME BODY OF THE STATOR [5], SEE THE FIGURE 4c.

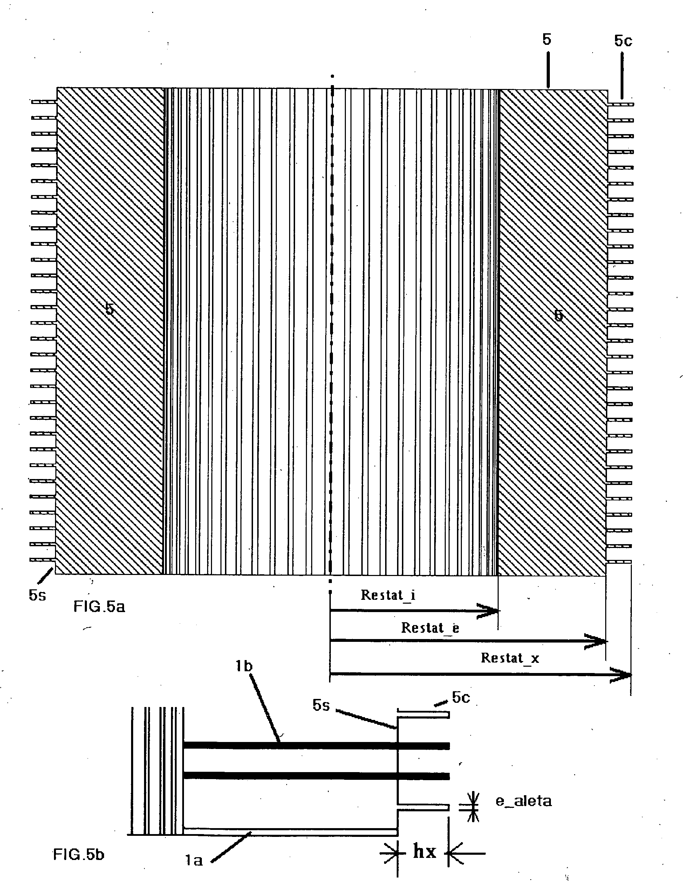

WITH THAT, IS ACHIEVED MECHANICAL SIMPLICITY AND COMPACITY IN COMBINATION, SEE THE FIGURE 5a, WITH A INSIGNIFICATIVE INFLUENCE ON THE MACHINE WEIGHT.

THIS INFLUENCE ON THE MACHINE WEIGHT, CAN BE ANULED TAKEN IN ACCOUNT THAT THE MATERIAL OF THE EXPANDED STATORIC DISKS [1b] IS MAGNETIC PERMEABLE AND THESE ENLARGE THE LONGITUDINAL SECCTION OF THE STATORIC FRAME [2]. THEN IF THE THICKNESS OF THIS FRAME IS SUITABILY REDUCED, IT IS PLENTY ANNUL THE WEIGHT INCREASE IMPLIED BY THE FLANGES [5b].

THE COMPLEXITY OF A TRANSVERSAL COOLING IS JUSTIFIED IN EXCESS, SINCE THE LONGITUDINAL COOLING REQUIRES A WINGED CARCAX WITH TERMAL CONTACT COMPLICATIONS, MORE VOLUME AND MORE WEIGT.

MOREOVER, WHEN THE MACHINE VELOCITY IS CONTROLLED FROM ZERO INCLUSIVE, INDE PPENDANT VENTILATION IS REQUIRED. THIS MAKES APPARENT THE ADVANTAGE OF LONGITU DINAL COOLING, SINCE THIS FACILITATE THE ASSEMBLY OF A CENTRIFUGAL FLOW TURBINE ON THE MOTOR SHAFT THAT PRODUCES DEPPENDANT VENTILATION.

TO COOLING, AIR SUPPLY INDEPPENDIENT VETILATION IS ESPECIFIED, WITH AN AIR VELOCITY OF 20 m/s, WITH A CAUDAL OF 1,5 m3/min , A TEMPERATURE DIFFERENCE WITH THE AIR OF 25 oC IS FORESEEN FOR THE EXAMPLE.

TO PROVIDE A LOWER THERMAL RESISTANCE FOR THE EVACUATION OF HEAT LOSSES OF THE CONVERTION, THE SPECIFIED DIMENTIONS FOR THE TOOTH[4] , THE FRAME [2], AND THE FLANGES[5c] OF THE STATOR[5] IN THE HEAT FLUX WISE, THAT ARE "PROF", "hc" AND , hx" RESPECTIVELY, ARE SUITABLY REDUCED AS TO PUT FORWARD THE A LOW TERMAL RESISTANCE PATH, REGARDLESS THE MEDIUM TERMAL CONDUCTIVITY OF THE STEEL, GIVEN FOR:

$$\verb|k_fe = 0.2 W / oC cm|$$

THE TEMPERATURE DROPS ARE:

| | |
|---|---|
| IN THE TOOTHS[4] OF THE STATOR[5] : | 7.5 oC |
| IN THE FRAME [2] OF THE STATOR[5] : | 5 oC |
| IN THE FLANGE [5c] OF THE STATOR[5] : | 7.5 oC |
| ADDITION OF ALL DROPS OF THE STATOR[5] : | 20 oC |

DUE THE GREAT TERMAL RESISTANCE OF THE INSULATION OF THE COILS[12], MUST BE COSIDERED AN ADITIONAL STEP OF 20 oC BETWEEN THE LEAD [ ] AND THE TOOTH [4] OF THE STATOR.

TEMPERATURE DROP ON THE INSULATION [12b] OF THE COILS [12] =        20 oC
TEMPERATURE DROP ON THE ESTATOR [5] =        20 oC
DIFFERENCE ON THE INTERFACE FLANGE-AIR =        25 oC
TOTAL BETWEEN THE COILS AND THE AMBIENT=        65 oC

THESE TEMPERATURE PROFILES ARE FOR THE MACHINE OF THE EXAMPLE.

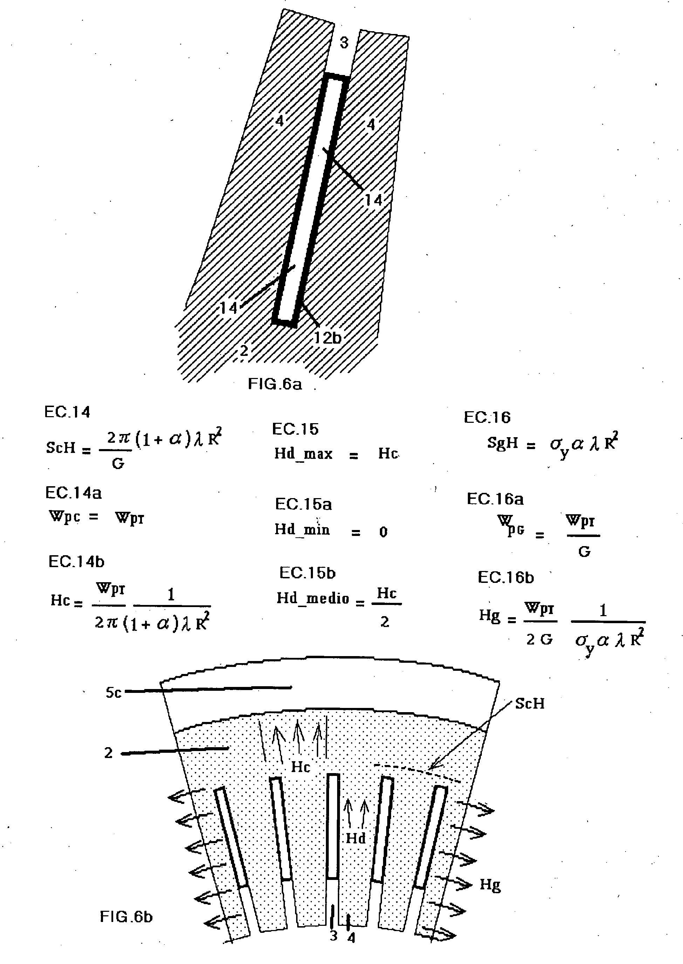

IN THE FIGURE 6 IS INDICATED THE HEAT FLUXES DISTRIBUTION IN THE DISTINCT ZONES OF THE STATOR [5].

THE ECUATIONS 14 TO 16b INCLUSIVE, SHOW THE RELATION BETWEEN THE HEAT FLUX AND THE MACHINE GEOMETRY.

TO COMPLY WITH THE FUNCTION OF PROVIDE SUPPORT TO ALL THE COMPONENTS AND TO GIVE STIFFNESS TO THE ASSEMBLY IN A WHOLE, THE STATORIC ASSEMBLY [90] MUST HAVE FEATURES OF MECHANICAL STRUCTURAL PARTS.

THE COMPONENTS OF THESE ASSEMBLY, EXCEPT THE BODY OF THE STATOR [5], ARE, THE SEPARATING RINGS [6] FOR STIFFNESS, FOR SEPARATE THE LIGHT MATERIAL OF THE CARCAXS [7],[8], WHICH FEATURES A HIGH ELECTRIC CONDUCTIVITY, FROM THE DISPERSION FIELD OF THE STATOR [5], DUE TO THE HIGH OPERATING FLUX DENSITY ON THAT, AND TO TRANSMIT TO THE INSTALATION THE REACTION FORCES OF THE STATOR [5], THE USE OF A SUPPLEMENTARY PIECE OF A SPECIFIC MATERIAL BETWEEN THE STATOR [5] AND THE LIGHT CARCAXES[7], [8] IS IMPOSED.

THIS MATERIAL MUST BE OF A LITTLE ELECTRICAL CONDUCTIVITY, GOOD STRUCTURAL RESISTANCE AND PREFERABLE NO MAGNETIC, THAT MUST BE A STAINLESS STEEL.

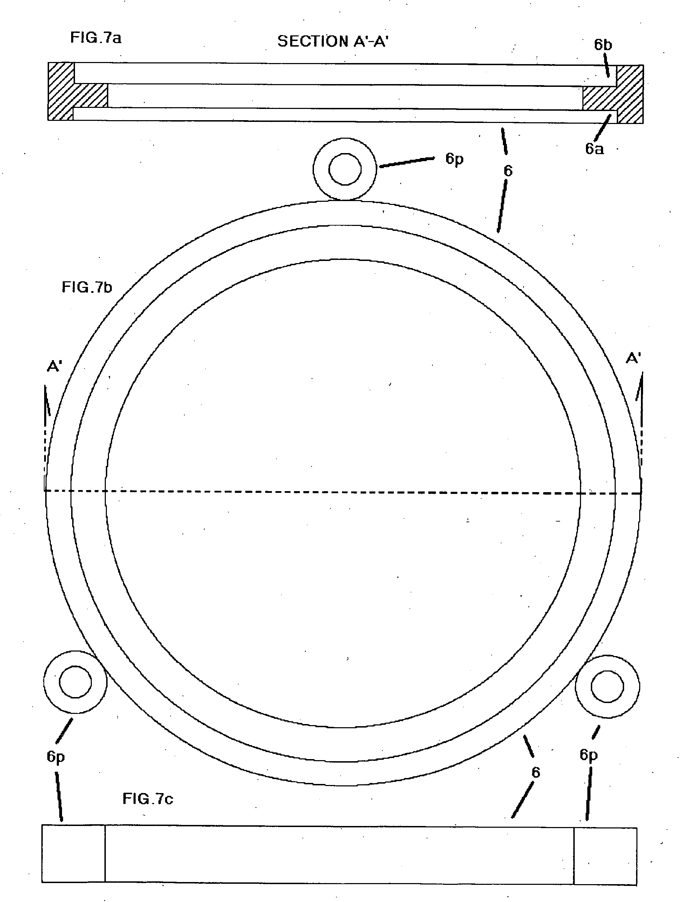

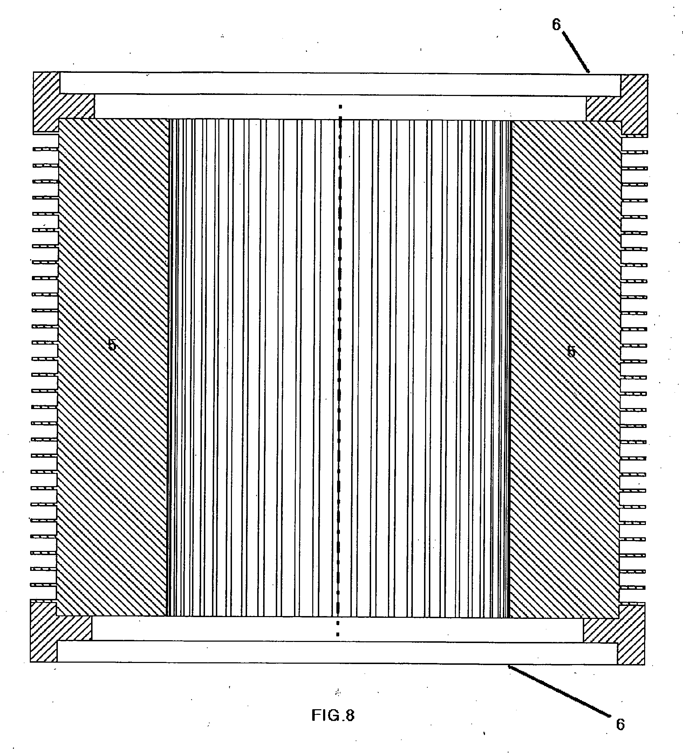

TO MINIMICE VOLUMEN, IT IS GIVEN IT THE SHAPE OF A RING [6], WITH ENGAGE ENGRAVEMENTS [6a] AND [6b], THEREFORE THE TRANSVERSAL SECTION TAKES A THE SHAPE OF A 'T', AND WITH PASSING HOLES[6p] FOR FASTENING DISTRIBUTED ON THE PERIPHERIA, AS IS DEPICTED IN THE FIGURE 7, AND IS SHOWED HOW ARE ASSEMBLED ON THE BODY OF THE STATOR[5] IN THE FIGURE 8. AS FOR THE MOTOR OF THE EXAMPLE THE REACCTION FORCE COULD BE OF 200 kgf AROUND, TO INSTALL THIS,IT WOULD BE PREFERABLE TO FASTEN THE MACHINE ON THE PASSING HOLES[6p] ON THE RING[6] FRAMES.

FOR THE FOR DIMINISHING WEIGHT WOULD BE PREFERABLE TO MAKE UP OF THE RINGS [6] HOLOW.

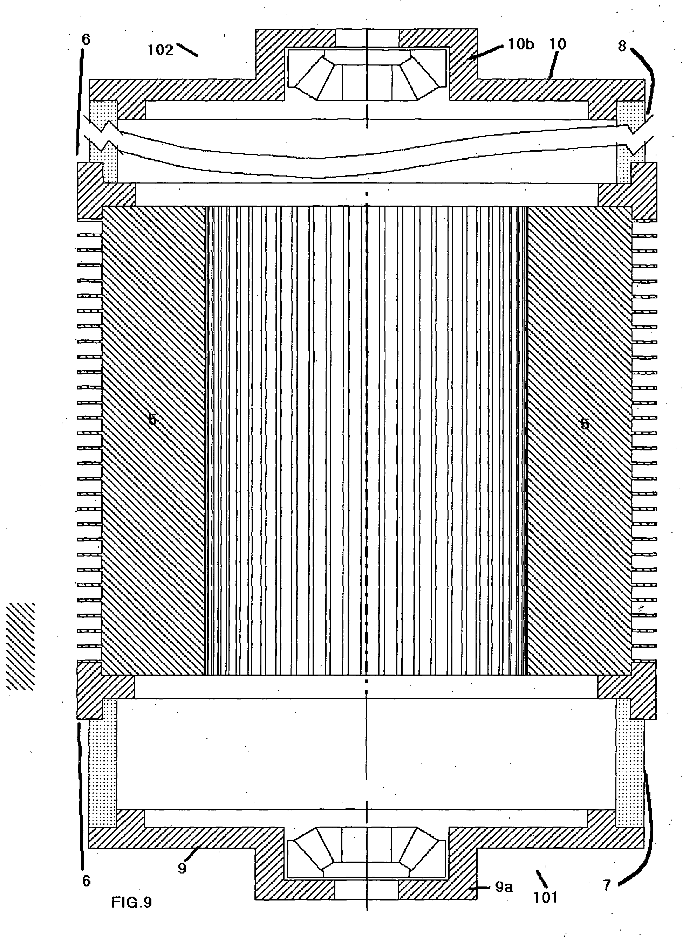

FOR PROVIDE HOLDING ELEMETS TO THE PIECES OF MOTOR AND ENCLOSING IT,ARE UTILICED CARCAXES [7], [8] CONSISTING IN INDEPENDANT CYLINDERS [7], [8] OF ALUMINIUM OR LIGHT ALEATION , ONE FOR EACH TOP [101],[102] OF THE MACHINE, WITH LATHED TRIMS [7a],[7b] TO ENGAGE INTO INTO THE ENGRAVES [6a], [6b] ON THE SEPARATING RINGS[6] IN THE FIGURE 9 ARE SHOWN BOTH CARCAXES ENGAGED IN THE CORRESPONDAT RINGS[6]. MOREOVER OF THE CARCAXES [7], [8], FOR SUPPORT AND CENTERING THE ROTORIC SHAFT[31], ARE UTILICED THE SHELLS [9],[10], THAT ARE A DISK OF ALUMINIUM OR LIGHT ALEATION, WITH A BEARING HOUSING [9a],[10a], ON EACH MACHINE TOP[101], [102].

THESE ARE SHOWED AREADY MOUNTED ON ITS RESPECTIVE CARCAXES[7],[8],IN FIGURE 9.

THE DESCRIPTION OF THAT LAST COMPONENTS, THE CARCAXES [7],[8] AND THE SHELLS [9],[10], HAS BEEN MADE OF A SUCCINT WAY, SINCE THESE MAKE NOT TO THE MACHINE OPERATION, NEVERTHELESS, HAS BEEN INCLUDED IN THIS SPECIFICATION FOR STIMATE THE INCIDENCE ON THE MACHINE SIZE AND WEIGHT, BECAUSE BOTH AFFECT DIRECTLY DE OBJECTIVS OF THE INVENTION.

HABING FINISHED WITH THE STATOR[5] BODY DESCRIPTION, IT CORRESPOND TO PASS TO THE COIL[12] DESCRIPTION FOR THE MACHINE.

THE INVENTION PRETENDS THAT EACH COIL[12] BE A SECCTION FULLY INDEPENDAT, ABLE TO RECEIPT OR O DELIVER ENERGY IN A INDIVIDUAL WAY.

THE INVENTION PRETEND TO POSSES THE MAYOR VARIETY OF OPTIONS FOR THE VOLTAGE AND CURRENT RATES FOR THE SAME MACHINE, BASED ON THE AVAILABILITY OF A PLURALITY OF INDEPENDANT GENERATORS(ONE BY EACH COIL), FOR THAT IT MUST BE ESTABLISHED THE MEASURES AND POLAR DISTRIBUTION OF THE COILS, IN A WAY THAT BE COMPATIBLE IN THE MAYOR DEGREE FOR ITS INTERCONNECTION, IT IS MADE UP SO:

ESTABLISHING THE POLAR STEP IN A INTEGER NUMBER OF GROOVES.

CONSTRUCTING THE COILS ALL IDENTICALLY.

GIVING TO THE COILS A WIDE EQUAL TO POLAR WIDE. BEING THE COILS DEFINITED CONSTRUCTIVELY IDENTICAL, THAT DETERMINES THAT THE ELECTROKINEMATIC FORCE DEVELOPED ON, WILL BE OF IDENTICAL WAVEFORM AND IDENTICAL MAGNITUDE, AND THAT THE CURRENT AND VOLTAGE RATES AS WELL BE IDENTICAL FOR ALL ONES.

INSTEAD, FROM THE VIEW POINT OF THE INTERCONNECTABILITY, DIFFER IN ITS LOCA TION UNDER THE POLAR STEP, EXISTING A PHASE DISPLACEMENT BETWEEN THE COILS.

THEN, EACH GROOVE UNDER THE POLAR STEP DETERMINES A PHASE, AND BY THE PARTICULAR WAY OF THE COIL DISPOSAL,A REPEATED PHASE IN EACH HOMOLOG GROOVE IS FORMED ,BEING THE NUMBER OF HOMOLOG GROOVES EQUAL TO THE NUMBER OF POLES PAIRS "p". SIMILARLY, COUNTERFACES ARE FORMED IN THE CORRESPONDING GROOVES [3] IN EACH ANTIPOLE AND ITS HOMOLOG GROOVES.

HAVING FIXED A INTEGER NUMBER OF COILS "Gp" UNDER THE POLAR STEP, THEN THERE WILL BE "Gp" PHASES, AND THE SAME COUNTERPHASES, ALL REPEATED A NUMBER OF TIMES "p".

IN THIS WAY, THE COILS[12] CAN BE INTERCONNECTED IN PRINCIPLE IN PARTIAL HOMOPOLAR SERIES, THE HOMOPOLAR SERIES, WITH AS MUCH AS PHASES AS GOOVES FIT INTO A POLAR STEP, AND THE HOMOATIPOLAR SERIE WITH THE SAME QUANTITY OF COUNTERPHASES, BOTH FORMING SERIES FROM ONE UP TO "p" COILS EACH ONE.

AS A LIMIT, IT WILL BE POSSIBLE INTERCONNECTING THE TWO FULL SERIES, THE HOMOLOG WITH THE ANTIHOMOLOG, THIS PROVIDES THE MINOR NUMBER OF PHASES ON THE EXTERNAL BORNES, EQUAL TO "Gp".

FINALLY, AS IS AN OBJECTIV OF THE INVENTION TO ACHIEVE CONSTRUCTIONS OF VERY HIGH POWER, DEPARTING FROM VERY LOW SUPPLY VOLTAGES INCLUSIVE, IT IS NECESSARY TO CONSIDER ROUGH AND STIFF COILS[12]; THEN,TO MAKE FEASIBLE TO EJECUTATE IT, TO ASSEMBLE IT, AND INTERCONNECTING IT, IT IS INDISPENSABLE A SUITABLE SHAPE FOR THIS COILS[12].

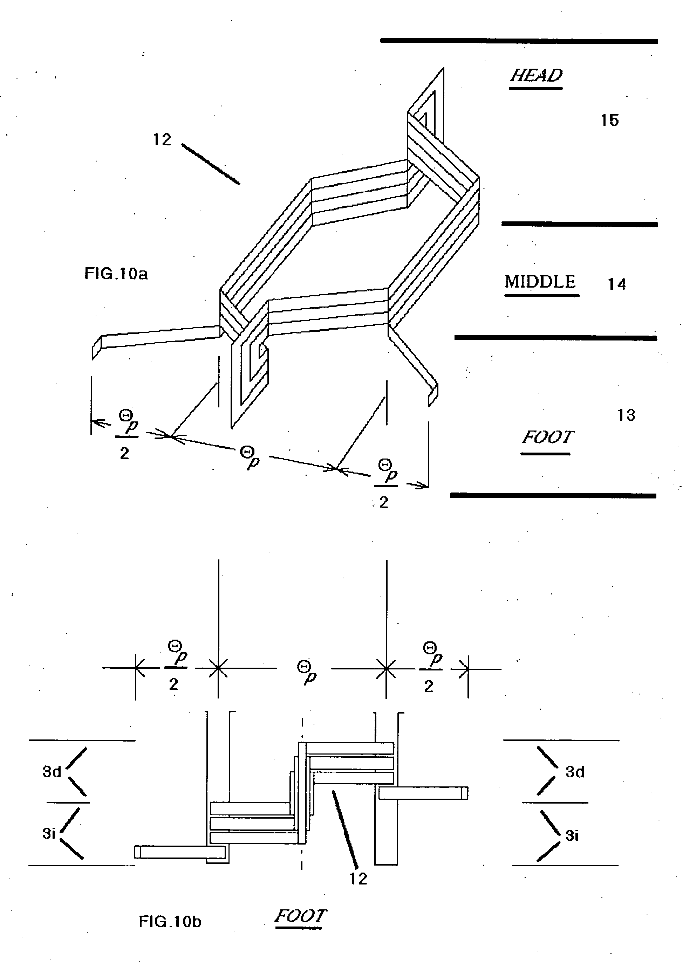

FOR COMPLY WITH THESE CONDITIONS, IS PROPOSED FOR THE COILS[12] A SHAPE AS IS SHOWED IN THE FIGURE 10. THE SPIRE NUMBER IS DESIGNED WITH "N", THAT IN THE FIGURE 10 AND THE FOLLOWING IS TAKEN OF FOUR SPIRES:

N= 4, ONLY BY WAY OF EXAMPLE.

THE NUMBER OF COILS TO CONSTRUCT IS FORMED FROM THE PHASE NUMBER "Gp", MULTIPLIED BY TWO TIMES THE POLE PAIRS "p":

$$G = 2 * p * Gp$$

THAT SIMULTANEUSLY IS ECUAL TO THE NUMBER OF CONDUCTION GROOVES[3] ON THE STATOR[5].

IT IS ESTABLISHED AS WIDE OF THE COIL[12] THE POLAR STEP, FIGURE 10. TO SOLVE MECHANICALLY THE CONSTRUCTION, ASSEMBLY AND INTERCONNECTION, EACH SPIRE OF THE COIL[12] IS COMPOSED IN TWO PARTS, "N" LEFT HEMIESPIRES [In], AND "N" RIGHT HEMIESPIRES REFERENCED AS [Dn], WHERE:

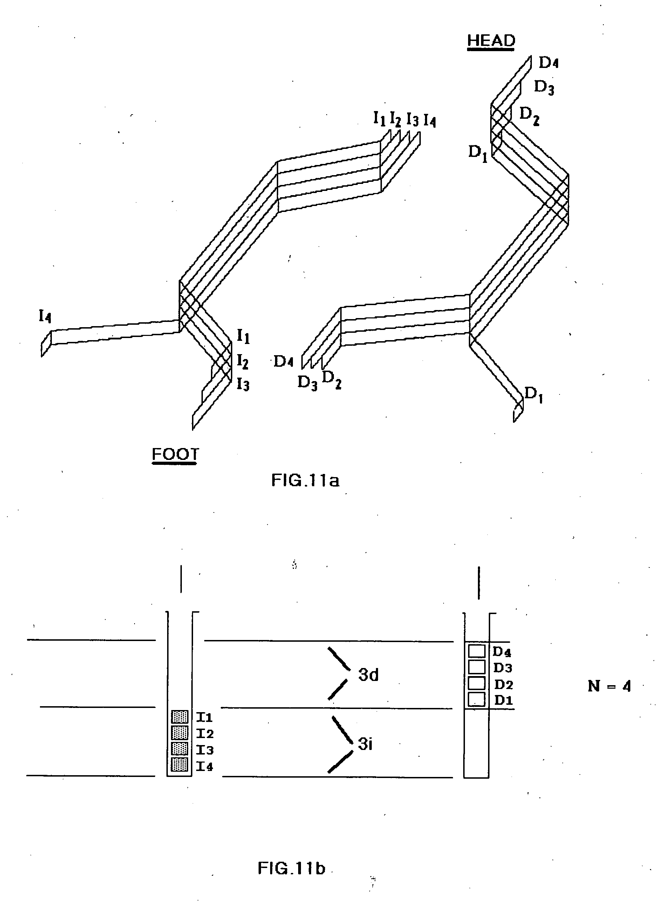

n= 1,2,....N , SEE THE FIGURE 11.

LESS A PAIR OPENED, WITH REFERENCE [IN] AND [D1], ALL THE OTHER HEMIESPIRES ARE ENCLOSED ON THE COIL[12], THEREBY FOUR TYPES OF PIECES TO CONSTRUCT THE COILS ARE REQUIRED:

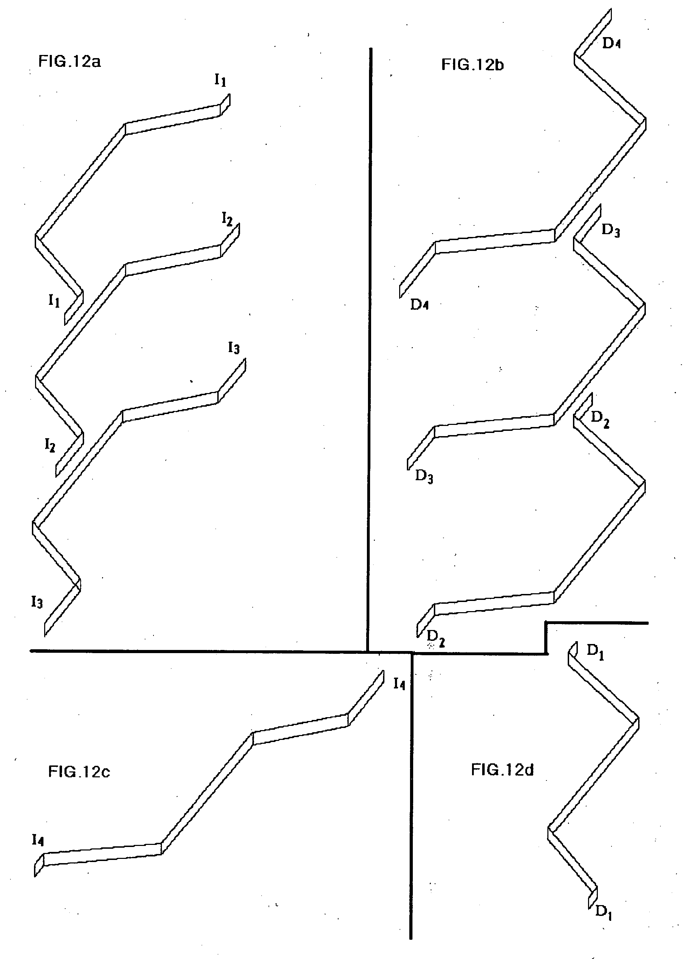

A OPEN LEFT HEMIESPIRE, TO POSSES A INTERCONNECTION TERMINAL TO THE LEFT, WITH NUMERATION [IN], THAT IS LOCATED IN THE SUB-LAYER [IN], SEE THE FIGURE 12c.

N-1 CLOSED LEFT HEMIESPIRES, NUMBERED [IN-1]....[I2],[I1], THAT ARE LOCATED ON THE CORRESPONDENT SUB-LAYERS, SEE THE FIGURE 12a.

A OPEN RIGHT HEMISPIRE, TO POSSES A INTERCONNECTION TERMINAL TO THE RIGHT, WITH NUMERATION [D1], THAT IS LOCATED ON THE SUB-LAYER [D1], SEE THE FIGURE 12d.

N-1 CLOSED RIGTH HEMIESPIRES, NUMBERED [D2]....[D3],[DN], THAT ARE LOCATED ON THE CORRESPONDENT SUB-LAYERS, SEE THE FIGURE 12b.

EACH ONE OF THAT PIECES IS FORMED DEPARTING FROM A STRAIGHT LEAD BAR, OF RECTANGULAR SECTION, WHOSE DIMENTIONS ARE:

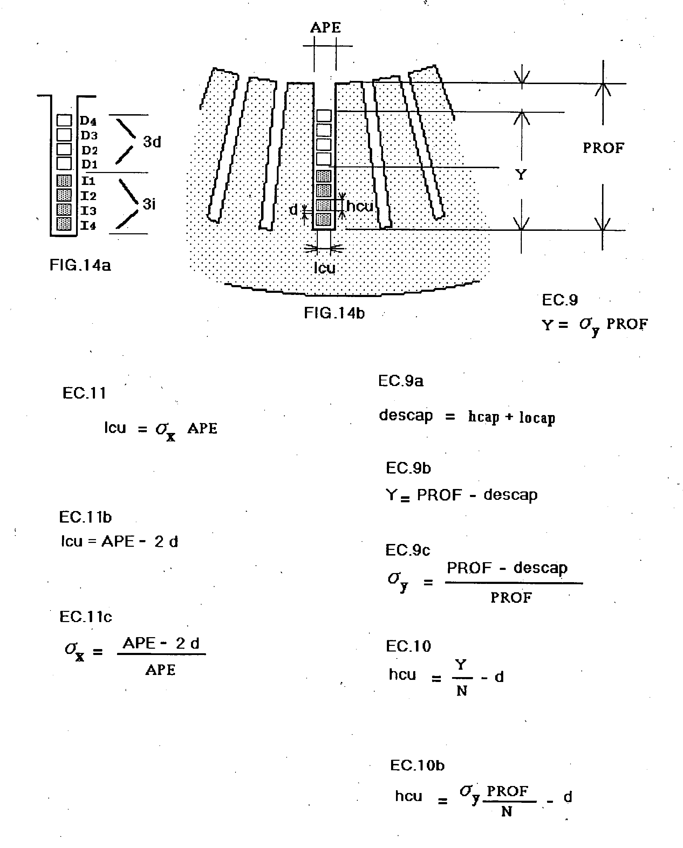

THE BASE "1cu", GIVEN BY THE ECUATION 11, AND THE HEIGH "hcu", GIVEN BY THE ECUATION 10b; SEE THE FIGURE 14.

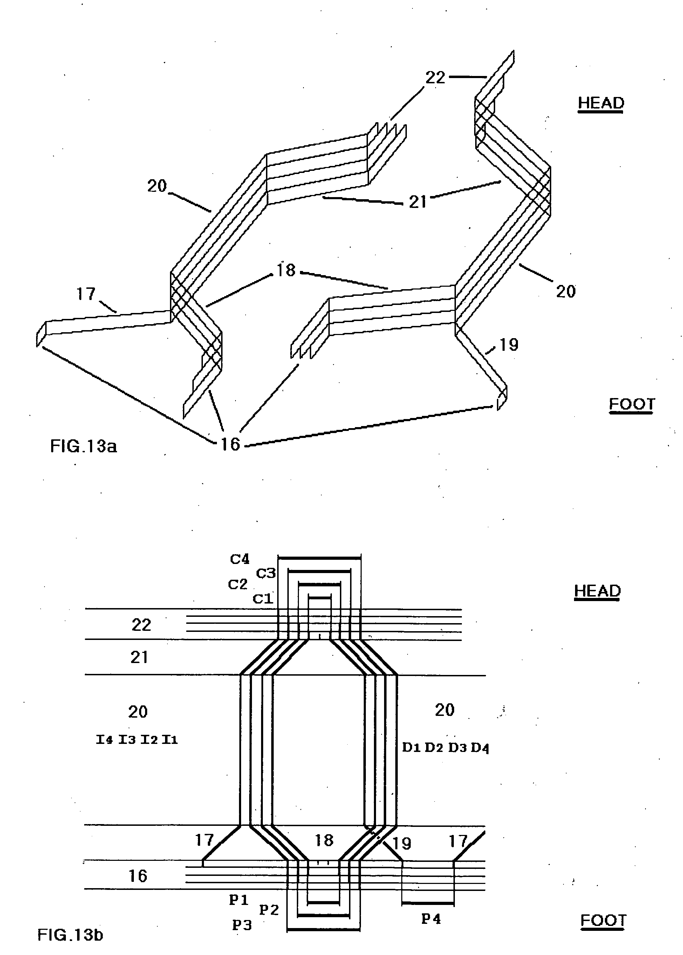

FORMING THE LEAD BAR IN A WAY THAT ITS BODY FEATURE FIVE ZONES OF THE HEMSPIRE, DEFINED IN THE FIGURE 13:

THE SIDE [12],
THE ENCLOSE [21],

THE TERMINAL FOR HEAD CONNECTION [22],
THE FOOT ENCLOSE [18], OR FOOT OPENING [17] AND [19],
THE TERMINAL FOR FOOT CONNECTION [16],
THE SHAPE DEFINITIONS AND MEASURES FOR THAT ZONES ARE:
THE SIDE IS A STRAIGHT SEGMENT PARALEL TO THE SHAFT, IT MEASURE IS AS THE LONGITUD "L" OF THE STATOR [5], BEING COMMON TO ALL THE PIECES.
THE SHAPE OF THE ENCLOSING OF THE LEFT HEMISIRES [In], WHEN:

$$n < N$$

ARE OF A SECTOR OF RIGHT HELIX , FOR THE FOOT ENCLOSE[18].
OF A SECTOR OF LEFT HELIX , FOR THE HEAD ENCLOSE[21].

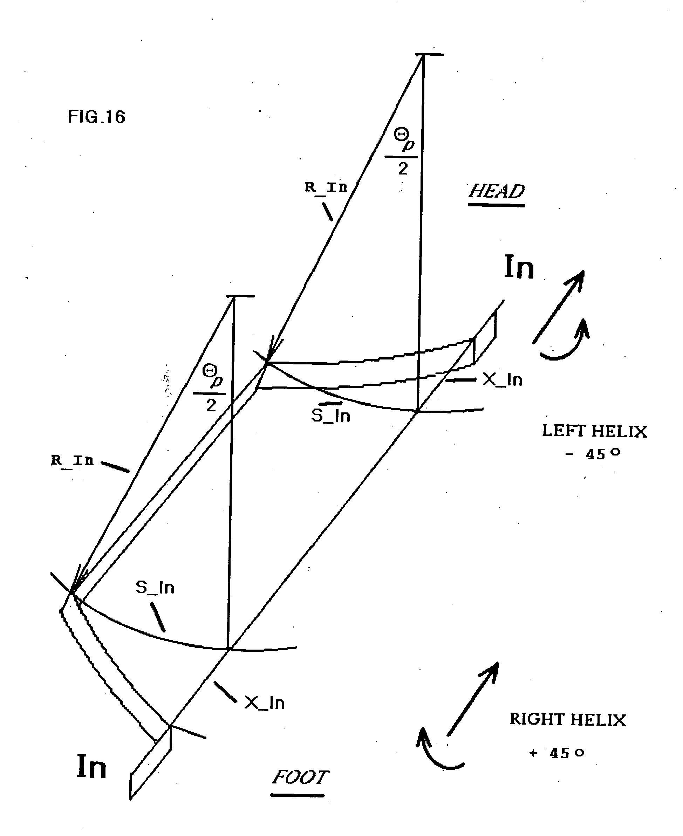

THE LONGITUD OF THESE SECTORS IS THE CORRESPONDING TO THE ADVANCE OF THE POLAR SEMIANGLE, ON A CYLINDER OF RADIO "R_In", SEE FIGURE 16.
BEING THE RADIO FOR THE ENCLOSING OF THE LEFT HEMIESPIRES :

$$R\_In = Rr + lo + PROF - ( N +1 - In ) * (hcu + d ), \text{ SEE FIGURE 15a.}$$

THE SHAPES FOR THE ENCLOSING OF THE RIGHT HEMIESPIRE [Dn], WHEN:

$$n > 1$$

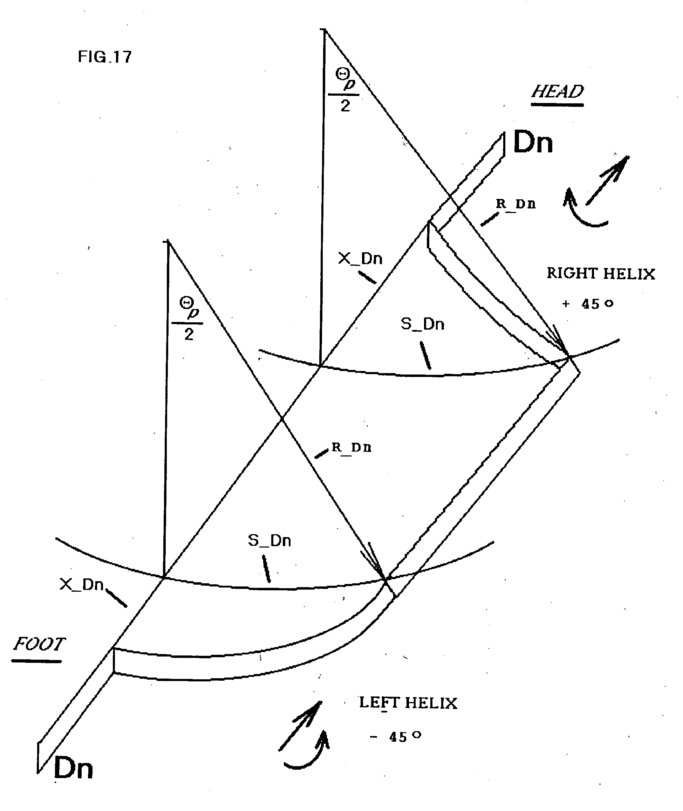

ARE OF A SECTOR OF LEFT HELIX FOR THE FOOT ENCLOSE [18]. OF A SECTOR OF RIGHT HELIX FOR THE HEAD ENCLOSE [21].
THE LONGITUD OF THESE SECTORS IS THE CORRESPONDING TO THE ADVANCE OF THE POLAR SEMIANGLE, ON A CYLINDER OF RADIO "R_Dn", SEE FIGURE 17.
BEING THE RADIO FOR THE OF THE RIGHT HEMIESPIRES :

$$R\_Dn = Rr + lo + PROF - ( N + Dn ) * (hcu + d ), \text{ SEE FIGURE 15a.}$$

IN THE PRECEDING FORMULAS THEY HABE:

In = NUMERATOR INDEX FOR THE nth LEFT HEMIESPIRA (FROM CENTER DOWNWARD)
Dn = NUMERATOR INDEX FOR THE nth RIGHT HEMIESPIRA(FROM CENTER UPWARD)
N = SPIRE NUMBER

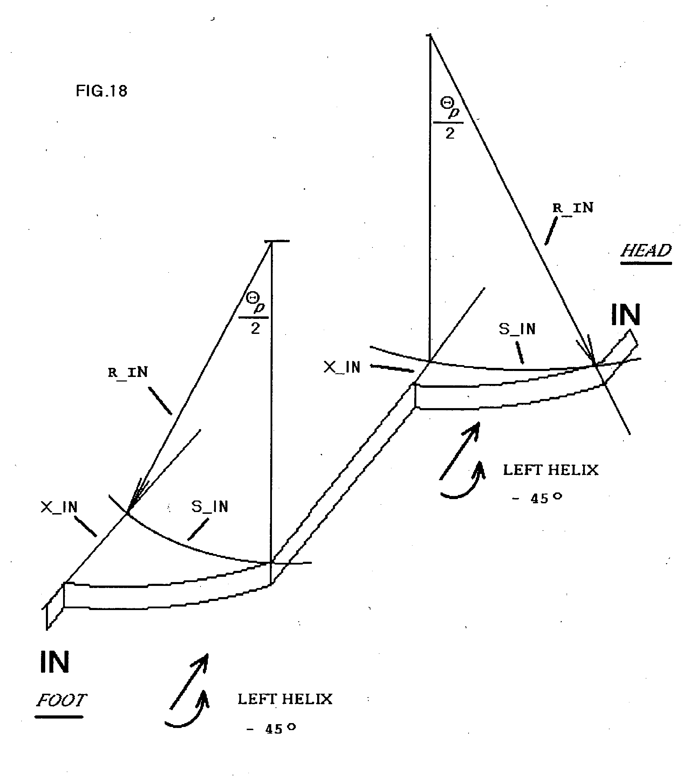

"hcu" GIVEN FOR THE ECUATION 10b IN THE FIGURE 14.
d = THICKNESS OF THE INSULATING MATERIAL[12b]
THE POLAR SEMIANGLE IS THE HALF OF THE VALUE GIVEN FOR THE ECUATION 1. THE ABSOLUTE VALUE FOR THE ADVANCE ANGLE IS OF 45 SEXAGESIMAL DEGREE FOR ALL THE HELIXES, THIS MEAN THAT IS ADVANCED THE SAME ON THE CYLINDER GENERATRIZ THAT ON IT CIRCUMFERENCE.SEE FIGURES 16, 17, 18 AND 19.
THE SHAPES FOR THE OPENING AN ENCLOSING OF THE OPEN LEFT HEMISPIRE [IN], SEE FIGURE 18, ARE:

OF A SECTOR OF A LEFT HELIX, FOR THE FOOT OPENING [17].
OF A SECTOR OF A LEFT HELIX, FOR THE HEAD ENCLOSING [21].

THE RADIO IS GIVEN FOR THE FORMULA FOR "R_In", WITH:

$$n= N \quad , \quad \text{SEE THE FIGURE} \quad 15a.$$

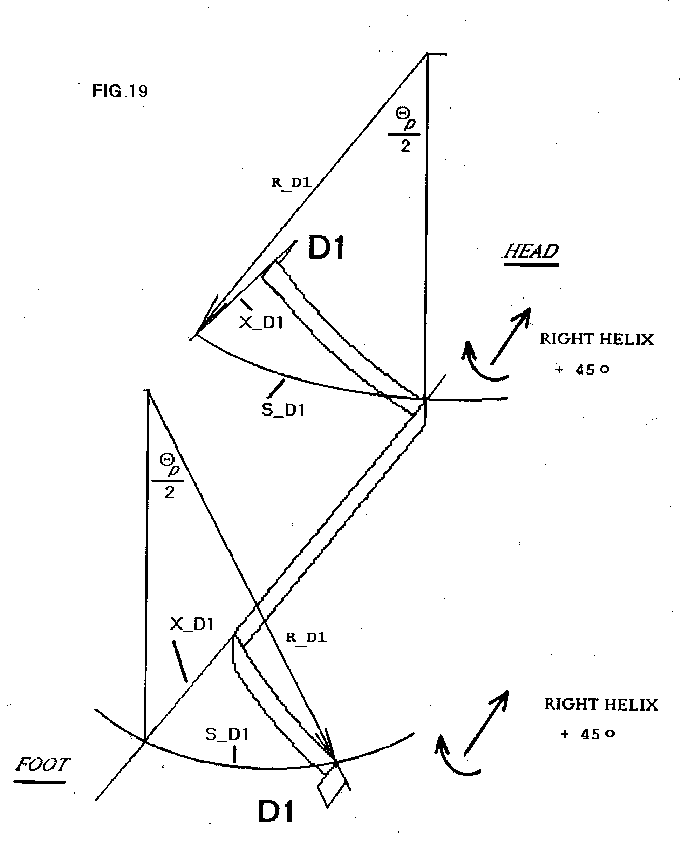

THE SHAPES FOR THE OPENING AND ENCLOSING OF THE OPEN RIGTH HEMISPIRES [D1] SEE THE FIGURE 19, ARE:

OF A SECTOR OF A RIGTH HELIX, FOR THE FOOT OPENING [17].
OF A SECTOR OF A RIGTH HELIX, FOR THE HEAD ENCLOSING [21].

THE RADIO IS GIVEN FOR THE FORMULA FOR "R_Dn", WITH:

$$n= 1 \quad , \quad \text{SEE THE FIGURE} \quad 15a.$$

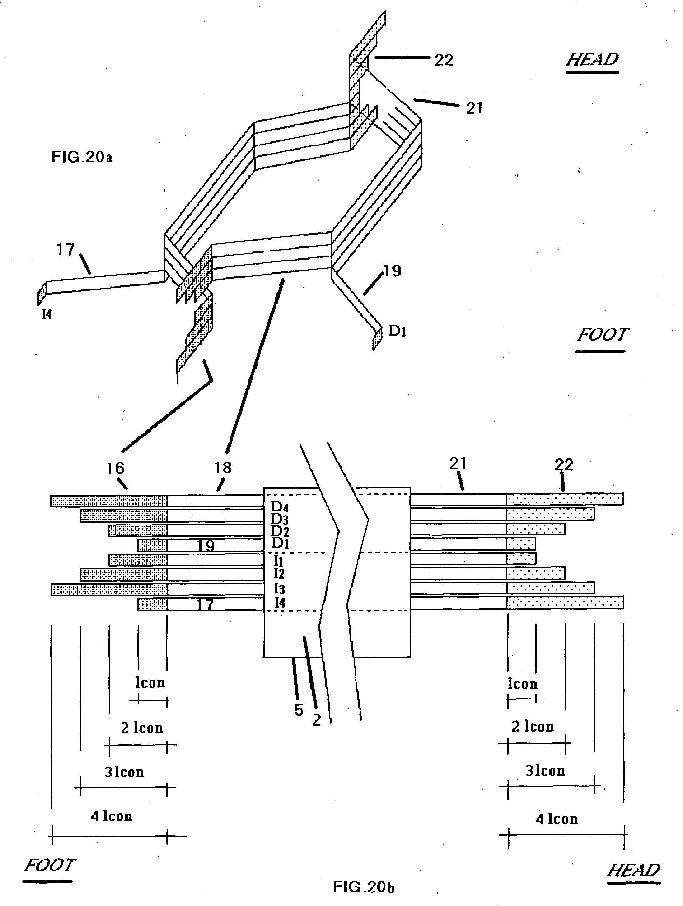

THE SHAPE FOR THE CONNECTION TERMINALS [16], [22] ARE STRAIGHT SEGMENTS PARALLEL TO THE SHAFT AND PERPENDICULAR TO THE RADIO.
IT IS SHOWN REMARKED IN PERSPECTIVE IN THE FIGURE 20a
THE LONGITUD OF THE CONNECTION TERMINALS [16], [22] FOR A LEFT HEMIESPIRA IS DISTINCT AT THE FOOT THAT AT THE HEAD OF THE PIECE.
THE LONGITUD AT THE HEAD , SEE FIGURE 20b, IS:

$$lTc\_In \ = In * lcon \qquad In = 1,2......N$$

THE LONGITUD AT THE FOOT , SEE FIGURE 20b, IS:

$$lTp\_In \ = ( \ In + 1 \ ) * lcon \qquad In < N \ \text{(ENCLOSED HEMIESPIRES)}$$

$$lTp\_In \ = \ lcon \qquad In = N \ \text{(OPEN HEMIESPIRES)}$$

THE LONGITUD OF THE CONNECTION TERMINALS [16], [22] FOR A RIGHT HEMIESPIRA IS ECUAL AT THE HEAD THAT AT THE FOOT.
THE LONGITUD AT THE HEAD ,IS:

$$lTc\_Dn = Dn * lcon \qquad Dn = 1,2....N \qquad \text{SEE THE FIGURE 20b.}$$

THE LONGITUD AT THE FOOT ,IS:

$$lTp\_Dn = Dn * lcon \qquad Dn = 1,2....N \qquad \text{SEE THE FIGURE 20b.}$$

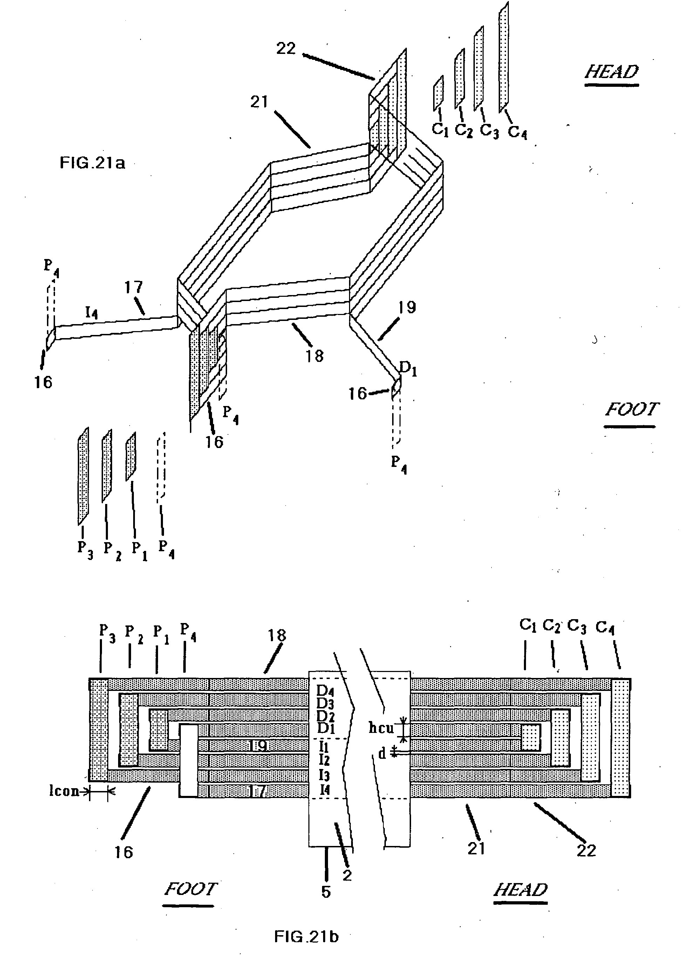

BEING "lcon" THE LENGHT OF THE TERMINAL CONNECTION JUNCTION OF THE HEMISPIRA , THAT IS LIKE THE WIDE OF THE CONNECTION JUMPERS, SEE FIGURE 21b.
APART FROM THESE PRINCIPAL PIECES, AS WELL SOME SMALL AND SIMPLES PIECES OF UNION ARE NECESSARY FOR SELFCONNECTION, AND IN MUCH LESS CUANTITY. ARE REQUIRED PIECES FOR THE INTERCONNECTION, THAT WE WILL CONSIDER NOW.
THE SHAPE FOR THE CONNECTION JUMPERS ARE STRAIGHT SEGMENTS PARALLEL TO THE RADIO AND PERPENDICULAR TO THE SHAFT,THEREFORE ARE COPLANAR WITH THE CONNECTION TERMINALS.

THE SELFCONNECTION BRIDGES, CONNECT LAYERS OF DISTINCT NUMETATION OF THE SAME COIL, THAT MEANS THE COIL IS INDEED FINISHED, AND ARE REFERENCED WITH THE NUMERATION OF THE LEFT INFERIOR LAYER.

THE ASSEMBLED SELFCONNECTION BRIDGES ARE SHOWED IN PERSPECTIVE IN THE FIGURE 21a. THE LENGHT OF THE SELFCONNECTION BRIDGES AT THE HEAD Cn, FIGURES 21a AND 21b ARE:

$$l\_Cn = ( In * 2 ) * ( hcu + d ) \qquad Cn = In = 1,2......N$$

AND CONNECT THE RIGHT HEMIESPIRA [Dn] = m WITH THE LEFT HEMIESPIRE [In]= m
THE LENGH OF THE SELFCONNECTION BRIDGES AT THE FOOT , FIGURAS 21a AND 21b:

$$l\_Pn = ( ( In * 2 ) + 1 ) * ( hcu + d ) \qquad Pn = In = 1,2......N$$

AND CONNECT THE LEFT HEMIESPIRA [In] = m WITH THE LEFT HEMIESPIRE [Dn]= m+1 TO THE INTERCONNECTION JUMPER AT THE FOOT [PN], CORRESPOND A LENGTH OF:

$$lp= ( N + 1 ) * ( hcu + d ) \qquad Pn = In = N , \text{ SEE THE FIGURES 21a AND 21b:}$$

THAT JUMPER CONNECT THE COILS ALREADY FINISHED, TO FORM A HOMOLOG SERIES, POLAR OR ANTIPOLAR, IT CAN BE CALLED HOMOGENEOUS INTERCONNECTION JUMPER, AND NOT ARE PART OF THE BODY OF THE COIL, AND SERVES FOR THE HOMOGENEOUS CONNECTION OF THE COILS.

THE QUANTITY OF THAT JUMPERS, DEPEND ON THE SCHEMA OF INTERCONNECTION ADOPTED. BY PRACTICITY, I HAVE INCLUDED IT , AND NUMBERED IT INTO THE GROUP OF SELF CONNECTION JUMPERS OF A COIL, WITH NUMERATION [IN], WITHOUT BELONG TO THAT COIL.

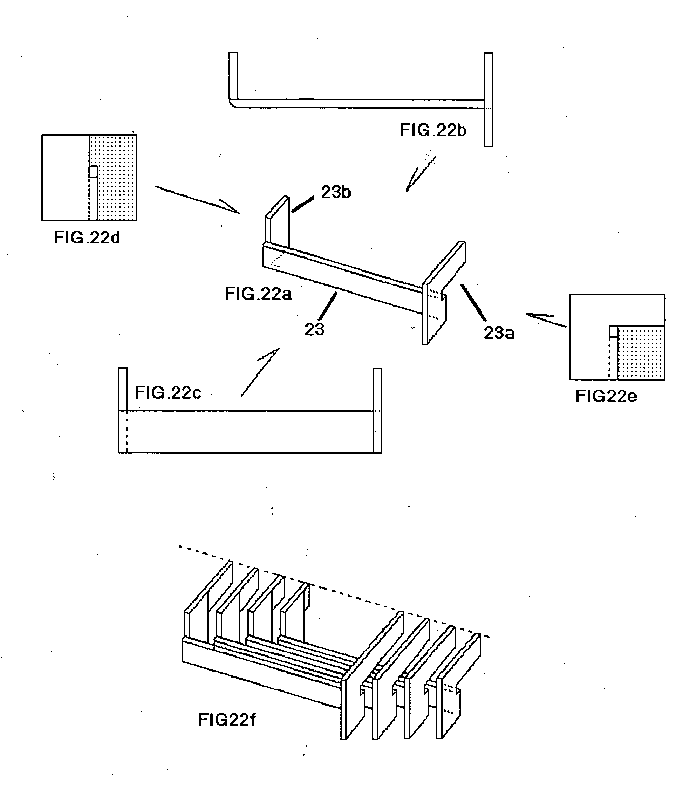

IN THE HETEROGENEOUS CONNECTION, A COIL IN THE POLAR GROUP MUST BE CONNECTED IN SERIAL WITH A COIL THAT BELONG TO THE ANTIPOLAR GROUP, AND MUST BE UTILICED A JUMPER THAT I HAVE BEEN CALLED INTERPOLAR JUMPER[23], AND IT IS REPRESENTED IN FIGURE 22.

IT BODY IS A SECTOR OF DISK [23a] OF A CONDUCTIVE LAMINA OF THICKNESS "e_cip" IT PLANE IS PERPENDICULAR TO THE MOTOR SHAFT. THE SECTOR ANGLE IS ECUAL TO THE POLAR ANGLE, GIVEN BY THE ECUATION 1, AND IT WIDE IS "h_cip", SEE THE FIGURE 22, AND IT SHIELDS A CONDUCTIVE BRIDGE BETWEEN THE TERMINALS [16] OF THE HEMISPIRES [In] TO CONNECT, THAT BY THE ARRANGEMENT ADOPTED, THEY ARE ALWAYS ALLOCATED IN THE LOWER LAYER[3i].
FOR MAKE CONTACT WITH THESE TERMINALS, THE SECTOR[23] OF DISK IS FINISHED IN IT TOPS BY TWO PLAIN TERMINATIONS [23a] AND [23b] BOTH NORMAL TO ITS PLANE.

IT CAN CONNECT THE DISPLACED TERMINALS [IN] OF DISTINCT COILS (BUT ANTIHOMOLOG COILS).

THESE TERMINATIONS [23a] AND [23b], ARE ARRANGED IN A WAY THAT ARE NOT INTERFERRING ONE WITH OTHER.

THE INSTALATION OF SEVERAL INTERPOLAR JUMPERS IN A CONSECUTIVE WAY, AS IS SHOWED IN THE FIGURE 22f.

THE NEEDED QUANTITY OF EACH PIECE, EXEPT FOR THE INTERPOLAR JUMPERS AND THE JUMPERS WITH REFERENCE [PN], WHOSE QUANTITY DEPEND ON THE CONNECTION SCHEME PARTICULARLY CHOCEN, ALL OTHER PARTS MUST BE CONSTRUCTED EACH ONE IN A REPEATED NUMBER OF "Gp" TIMES, EQUAL TO THE NUMBER OF COILS[12], THAT COINCIDES WITH THE NUMBER OF GROOVES [3] ON THE STATOR [5].

EACH PART IS CONSTRUCTED BY SEPARATE WITH ITS PARTICULAR DIMENTIONS AND SHAPES AS ABOVE SPECIFIED.
ONCE PREPARATED, WE HAVE COMPLETED THE FIRST STEP FOR THE COIL CONSTRUCTION, RE MAINING THE OPERATIONS FOR ASSEMBLY AN INTERCONNECTION, THAT WE WILL CONSIDER NOW.
THE COILS[12] ASSEMBLY, IS NOT MADE WITH IT FINISHED, INSTEAD, DEPARTING FROM THE PREFORMED PIECES [In], [Dn], THE ASSEMBLY IT IS PERFORMED INTO THE SAME STATOR[5] SIMULTANEOUSLY WITH ITS MOUNTING.

FOR THESE REASONS ALL THE CONDUCTION GROOVES [3] PRACTICED ON THE STATOR[5] BODY,

ARE CONSIDERED DIVIDED INTO TWO PARTS OF EQUAL SECTION.

THE ONE ON THE CLOSED SIDE OF THE GROOVE[3], THAT NAME IT INFERIOR LAYER [3i] AND THE OTHER ON THE OPEN SIDE, THAT NAME IT SUPERIOR LAYER [3d]; SEE FIGURE 11b AND FIGURE 14a.

THEN, THE COILS [12] ARE ENGAGED INTO GROOVES [3] DISTANCED A POLAR STEP, DISPOSAL BETWEEN A INFERIOR LAYER [3i] AND OTHER SUPERIOR[3d], SEE FIGURE 10b AND FIGURE 11b; BOTH LAYERS ARE DIVIDED EN "N" SUB-LAYERS, NUMBERED AS FOLLOW:

THE "N" OF THE INFERIOR LAYER, FROM BOTTOM UPWARD: [IN], [IN-1],.....[I1],

THE "N" OF THE SUPERIOR LAYER, FROM TOP DOWNWARD: [D1],[D2],.......[DN]

FIRST THE INFERIOR LAYER [3i] OF THE GROOVES [3] OF THE ESTATOR [5] IS FILLED IN A COMPLETE WAY, LOCATING FIRST ALL THE OPENED LEFT HEMISPIRES [IN], AND LOCATING IN A CONSECUTIVE WAY FOLLOWING THE REGRESIVE NUMBERING ORDER, ALL THE ENCLOSED LEFT SPIRES, FROM THE [IN-1] TO THE [I1].

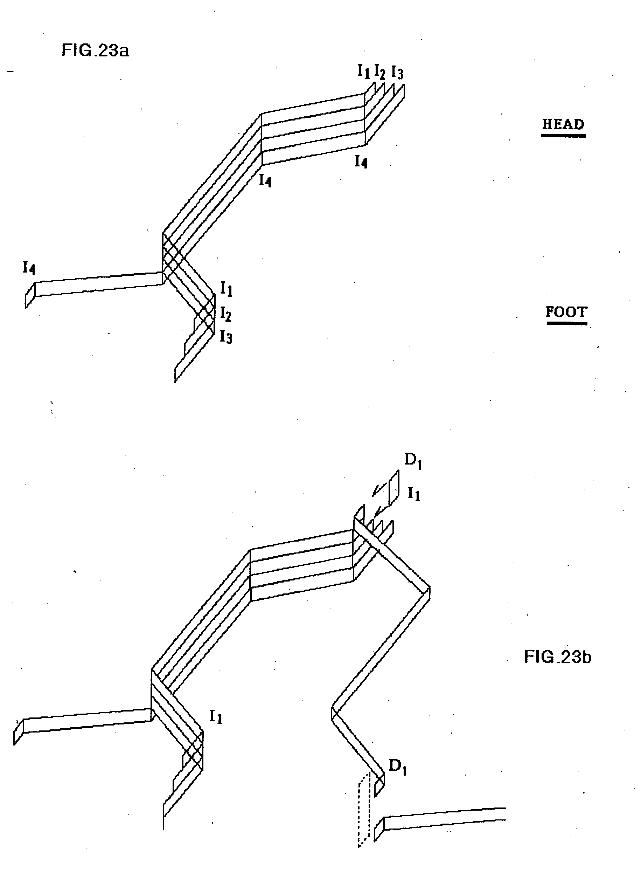

IN THIS WAY AND A ONCE TIME, THE INFERIOR LAYER [3i] IS FILLED, FIGURE 23a.

THEN ARE FILLED ONE AT A TIME IN CONSECUTIVE ORDER, THE SUB-LAYERS [Dn] OF THE SUPERIOR LAYER [3d], DEPARTING FROM ALL THE OPENED RIGHT HEMISPIRES [D1], SEE FIGURE 23b.

INMEDIATLY THE CONNECTION OF ITS TERMINALS [16],[22] ARE PERFORMED, WITH THE TERMINALS [16],[22] OF THE CORRESPONDANT LEFT HEMISPIRE [In], VIA THE USE OF THE JUMPERS WITH DENOMINATION [Cn] AND [Pn], WHOSE NUMBERING CORRESPOND TO THE LEFT HEMIESPIRA [In].

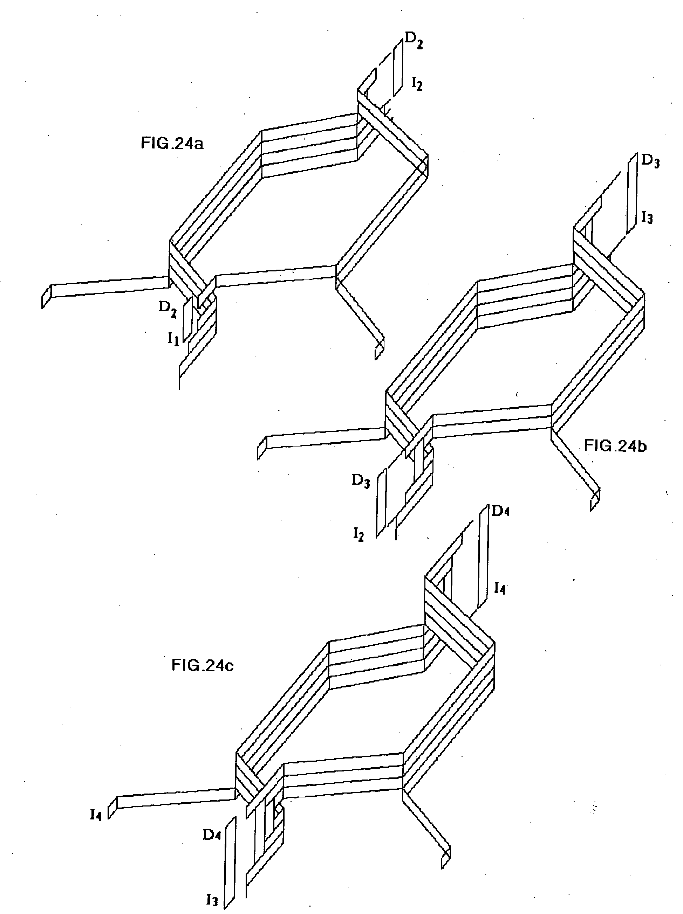

THIS OPERATION IS REPEATED WITH THE PREVIOUS, SUBLAYER [Dn] BY SUBLAYER [Dn], AS IT IS SHOWN IN THE FIGURES 24a,24b,24c, AND HAVING REACHED THE INDEX[DN], WE HAVE FINISHED TWO DISTINCT OPERATIONS, THE CONSTRUCTION OF THE COIL AND IT MOUNTING ON THE STATOR[5].

THE LAST STEP IS THE INTERCONNECTION IN THE COILS, EXISTING SEVERAL SCHEMES, DEPENDING ON THE DESIRED VOLTAGE AND CURRENT LEVELS, THE SIMPLICITY OF THE POWER SUPPLY CIRCUIT, THE NUMBER OF EXTERNAL CONNECTION BORNES AND THE NUMBER OF EXTERNAL CONNECTION CABLES.

THIS INVENTION DEFINES EACH COIL AS A SECTION FULLY INDEPENDANT, ABLE TO RECEIPT OR DELIVER ENERGY IN A INDIVIDUAL WAY, REPRESENTING IT AS A PHASE, AND THE VOLTAGE AND CURRENT RATES ARE ESTABLISHED IN A IDENTICAL WAY FOR ALL COILS.

LONGER THE NUMBER OF AVAILABLE SECTIONS, LONGER THE CURRENT DEMANDED TO THE POWER SUPPLY, SINCE THAT ARE ADDED, AND LESSER IT OPERATING VOLTAGE, AS WELL THE LONGER EXTERNAL CONECTION BORNES, BECAUSE OF THE GREATER NUMBER OF POWER SUPLY PHASES REPEATED.

IN CASE OF CHOICE THE LESSER OPERATING VOLTAGE AND THE LONGER CURRENT,NOT ONE INTERCONNECTION IS REQUIRED, BEING NECESSARY A SUPPLY BY EACH COIL, AND THE GREATER NUMBER OF EXTERNAL CONNECTION BORNES.

ALL THE REMAINDER OPERATING VOLTAGES THAT CAN BE CHOICED, REQUIRE THAT INTERCO NNECTIONS BETWEEN COILS BE EXECUTED, HOMOGENEAL INTERCONNECTIONS BETWEN THE PHASES (OR BETWEEN COUNTER-PHASES) AND HETEROGENEAL BETWEEN PHASES AND COUNTER-PHASES.

AS EXAMPLE, IN THE FIGURES 25,26, AND 27 ARE SHOWN THE SEVERAL CONNECTIONS BETWEEN TWO PHASES [P1],[P2], AND TWO COUNTERPHASES [AP1],[AP2] IN A MACHINE OF FOUR POLES WITH COILS OF ONE SPIRE, NAMING THE EXTERNAL CONECTION BORNES WITH:

$$[-P1], \quad [+P1], \quad [-AP1], \quad [+AP1], \quad [-P2], \quad [+P2], \quad [-AP2], \quad [+AP2],$$

FOR THE RESPECTIVES PHASES AND COUNTER-PHASES.

IN THE EXAMPLE ON THE FIGURE 25 TWO PHASES [P1],[P2] ARE SHOWN, AND TWO COUNTER-PHASES [AP1],[AP2] AS FOUR GENERATORS FULLY INDEPENDANT, WHOSE CURRENTS HAD TO BE ADDED, GIVING A TOTAL CURRENT:

$$It = 4 * Ib$$

AND A VOLTAGE

$$Et = Eb$$

IN THE EXAMPLE ON THE FIGURE 26 TWO PHASES [P1],[P2] ARE SHOWN INTERCONNECTED IN SERIE, AND TWO COUNTER-PHASES [AP1],[AP2], INTERCONNECTED FORMING OTHER SERIE, AS TWO GENERATORS FULLY INDEPENDANT. WHOSE CURRENTS HAD TO BE ADDED, GIVING A TOTAL CURRENT:

$$It = 2 * Ib$$

AND A VOLTAGE

$$Et = 2 * Eb$$

IN THE EXAMPLE ON THE FIGURE 27 IS SHOWED TWO PHASES [P1],[P2], INTERCONNECTED FORMING A SERIE, AND TWO COUNTER-PHASES [AP1],[AP2], INTERCONNECTED FORMING ANOTHER SERIE, AND SIMULTANEOUSLY THESE TWO SERIES FORMING A HETEROGENEOUS SERIE AS A ONLY GENERATOR, HAVING A CURRENT:

$$It = Ib$$

AND A VOLTAGE

$$Et = 4 * Eb$$

THE MECHANICAL EXECUTION OF THE HOMOPOLAR INTERCONECTIONS IS AS FOLLOWS:

THE HOMOGENEOUS INTERCONNECTION BETWEEN COILS ARE EXECUTED IDENTICALLY TO THE SPIRE STEP CONNECTION, BEING EXECUTING AT THE FOOT OF THE COIL, EMPLOYING A JUM PER OF THE SAME GROUP AND WITH THE SAME DENOMINATION SIGN [Pn].

THIS BRIDGE WITH NAME [PN], THE LAST OF THE GROUP, INSTEAD OF PASS OF THE END OF A SPIRE TO THE BEGINNING OF THE NEXT( STEP OF SPIRE ), ESTABLISHES A BRIDGE BETWEEN THE RIGHT OPENING [19] OF A COIL[12] , THAT EXTEND HALF POLE TO THE RIGH, AND THE LEFT OPENING[17] OF IT HOMOLOG COIL; THAT EXTEND HALF POLE TO THE LEFT, BEING THE INTERCONNECTED COILS SEPARATED BY A POLAR STEP.

BEING FORMED THE COILS IN A WAY THAT ITS TERMINALS [16] ARE ENCOUNTERED INTENTIONALLY IN A COPLANAR LOCATION, IN SUCH A WAY THAT IT CAN BE CONNECTED VIA A SIMPLE, SMALL, STARIGHT AN PLAIN JUMPER [PN], THAT CAN BE APPRECIATE IN THE FIGURE 21, IN THAT :

$$N=4 \quad , \quad THEN \; [PN] = 4$$

THE MECHANICAL EXECUTION FOR THE HETEROPOLAR INTERCONNECTION IS AS FOLLOWS: THE HETEROPOLAR INTERCONNECTION IS EXECUTED IN A WAY SOME DIFFERENT THAT THE HOMOPOLAR INTERCONNECTION, SINCE THE FIRST ESTABLISHES A BRIDGE BETWEEN THE RIGHT OPENING OF A COIL, AND THE LEFT OPENING OF IT HOMOLOG COIL, LOCATED A POLE TO ITS RIGHT.

AT THE SAME TIME, THE HETEROPOLAR INTERCONECTION CONECT OPENINGS THAT EXTEND
IN THE SAME DIRECTION, THEREBY DISENCOUNTERING ITS TERMINALS, SINCE IT IS ESTA BLISHED A POLAR DISTANCE THE ONE FROM THE OTHER.

THEN, FOR INTERCONNECTING THEM IT IS NECESSARY TO RESORT TO A INTERPOLAR JUMPER. BOTH THE TERMINALS TO BE INTERCONNECTED, BY THE ARRANGEMENT ADOPTED, ALWAYS LAY ON THE LOW LAYER AS IS SHOWED IN THE FIGURE [27b], AND TO CONNECT THEM, THE TWO NORMAL PLAIN ENDS OF [23a],[23b] OF THE INTERPOLAR JUMPER[23] ARE WELDED AS IT IS SHOWN IN THE FIGURE 27b.

FROM THE WAY THAT THE INTERPOLAR CONNECTOR IS DESIGNED, CAN BE CONNECTED SEVERAL TERMINALS OF ADJACENT COILS IF NECESARY, AS IS SHOWED IN THE FIGURE 22f.

THE INTERCONNECTION BETWEN THE COILS FEATURES THE FOLLOWING SINGULARITIES:

THE SERIES CAN BE DIFFERENT, BEING ESCENTIALLY INDEPPENDANT,

THE SERIES CAN'T BE NECCESARILY HOMOPOLAR u HOMO-ANTIPOLAR, SINCE THEY CAN BE COMPOSED BY BOTH TYPES OF COILS IN ANY PROPORTION,

THE NUMBER OF COILS THAT COMPOSE A COIL CAN BE EVEN OR ODD, A HETEROGENEAL SERIE CAN CAN BE EXECUTED EVEN ONLY TWO POLES. HABING EXPLAINED THE SHAPE OF THE COILS, IT MOUNTING AND INTERCONECTION, WE WILL CONSIDER THE POWER SUPPY FOR THE MACHINE, THAT IS AS FOLLOWS:

FOR THE MACHINE OPERATION AS MOTOR, IT IS INDISPENSABLE TO SUPPLY ENERGY TO EACH ONE OF ITS PHASES, WHOSE MINIMUM NUMBER WILL BE "Gp".

THAT NUMBER OF PHASES, MUST RECEIVE ITS ENERGY IN A FULL INDIVIDUAL WAY. AS THE MOTOR WIL WORK UNDER A REGIME OF VARIABLE VELOCITY, IN BOTH DIRECTIONS DELIVERING MAXIMUN FORCE AT VELOCITY ZERO INCLUSIVE, THEN THE FRECUENCY OF THE TRAPEZOIDAL WAVEFORM OF THE PHASES, WILL BE VARIABLE.

RELATING THE VOLTAGE WHEN THE MACHINE WORK AS MOTOR, AS THE EXITING IS CONTROLABLE, THE PHASES ON THE PHASES WILL VARY BETWEEN ALMOST ZERO AND THE MAXIMUM, EVEN WITH A REGIME OF VELOCITY DIFFERENT OF ZERO. RELATING THE INTERNAL IMPEDANCE OF EACH ONE PHASE OF THE MACHINE,

THIS HAS A VALUE EXTREMELLY LOW.

ALL THAT REASONS IN A WHOLE, IMPOSE THE USE OF A POWER CONTROLATOR FOR SUPPLY ENERGY OF CURRENT INJECTION REVERSIBLE, EMPHASING WITH THE ELECTROKINEMATIC VOLTAGE OF THE PHASES.

THE CURRENT MUST BE INJECTED PREFRRABILY IN THE MEANWHILE THE MAYOR ELECTROKINEMATIC VOLTAGE IS PRESENT ON THE PHASE, THAT COINCIDES WITH THE INTERVAL OF MAYOR MMF ON THE FIGURE 28b.

FOR THIS, THE MACHINE MUST BE ON MOVEMENT, CIRCUMSTANCE THAT NOT EVER IS REAL, AS FOR EXAMPLE, DURING START.

THEREFORE, THE ELECTRONIC CONTROLATOR TO INYECTATE CURRENT BETWEEN THE APPROPRIATE ANGLES, FROM ZERO VELOCITY, MUST DETECT THE SHAFT POSITION. FOR THE MACHINE WORKING AS GENERATOR,EVERYTHING I HAVE SAID IS VALID, EXEPT THAT NOW THE ELECTRONIC POWER CONTROL MUST CHANGE THE DIRECTION OF THE PHASE CURRENT, TAKING IN THIS WAY ENERGY FROM THE PHASE, MAKING IT WORK AS A GENERATOR.

THE MENTIONED ELECTRONIC POWER CONTROL IS NOT DESCRIBED IN THIS ESPECIFICATION. HAVING CONSIDERED ALL THE STATIONARY COMPONENTS OF THE MACHINE, WE WILL CONSIDER THE DESCRIPTION OF THE ROTORIC ASSEMBLY [100].

THE ROTARY PART OF THE MACHINE or ROTORIC ASSEMBLY [100], APART FROM THE FUNCTION OF MECHANICAL INLET/OUTLET FOR THE CONVERTION, HAVE ASSIGNED THE TASK OF MAGNETIZING THE STATOR [5] AND TO PROVIDE A WAY OF VARY IT, FOR EXITATION CONTROLING.

AS WELL, IT MUST BE INSTRUMENTED ON THE ROTORIC ASSEMBLY [100] THE MEDIA TO NEUTRALIZE THE REACTION FIELD UNDER LOAD, SINCE IT IS NOT POSSIBLE IN THE BODY OF THE STATOR [5], DUE ITS GREAT COMPACITY.

THE METHODS TO NEUTALIZALIZE THR REACTION FIELD EFFECTS ARE:

A CLASSIC METHOD TO FIGTH AGAINST THE REACTION FIELD EFECTS, APPLY LOAD PROPORTIONAL CURRENTS TO COILS SPECIALLY DISPOSAL,THAT PRODUCES IN EXCESS SIZE, WEIGHT, AND ENERGY DISPERSON IN THE MACHINE.

ALSO, ANOTHER CLASSIC RESOURSE CONSIST IN ENLARGE THE AIRGAP FOR COUTERACT THE REACTION, THAT IMPLIES A HUGE EXITATION POWER.

INCLUSIVE BOTH METHODS ARE COMBINED, WITH A CATASTROPHIC EFFECT ON THE EFFI CIENCY OF THE MACHINE RELATED IT WEIGHT AND SIZE.

INSTEAD, THE INVENTION TAKE IN ACOUNT THAT IN A GREAT DEGREE, THE REACTION FIELD REACH GREAT VALUES BY THE COMBINATION OF TWO FACTORS:

IN ONE HAND, THE HIGH PERMEABILITY OF THE MATERIALS UTILIZED; AND IN THE OTHER, THE GREAT LOAD CURRENTS.

AS THE LATTER CAN NOT BE ELIMINATED, THEREFORE THE FIRST CLASSIC METHOD OF COMPENSATION APPLY CURRENTS THAT COUNTERACT IT, ONLY REMAINS TO OPERATE ON THE SECOND FACTOR, AS THE SECOND CLASSIC METHOD, ENLARGING THE AIR GAP.

BUT BOTH METHOD ARE VERY INEFFICIENT.

TO ACHIEVE REPLACING THIS CLASSICAL MEDIA IN A EFFICIENT WAY, THE INVENTION APPEAL TO MATERIALS FOR THE ROTOR[35], OF THE EXTREMELY LOW PERMEABILITY, SIMILAR TO THE VACUUM. COMBINING THIS MATERIAL CHARACTERISTIC, WITH THE MAGNETIC CIRCUIT GEOMETRY, THE MAGNITUDE OF THE REACTION FIELD IS REDUCED IN A DRASTIC WAY, FALLING TO VALUES COMPLETELLY TOLERABLE.

EMPLOYING A MAGNETIC MATERIAL OF PERMEABILITY NEAR THE UNITY, ENFORCE TO UTILCE IT UNDER THE SHAPE OF PERMANENT MAGNET, THEREFORE THE MACHINE EXITATION DOES NOT REQUIRE CURRENT USE, BEING AN EXAMPLE OF SUCH A MATERIAL, THE NdSmFe (NEODYMIUM-SAMARIUM-IRON), AND OTHER COMPOSITES OF RARE HEARTS. TO OBTAIN THE MAXIMUM POWER WITH A MINIMUM VOLUME, IS IMPOSSED TO THE MMF FOR THIS MACHINE, THE SHAPE OF A ALTERNATIVE DISTRIBUTION ALONG THE ENTIRE STATORIC CIRCUMFERENCE, SEE THE FIGURE 28a, ZONES INDICATED WITH [NORTH] AND WITH [SOUTH],WITH OPPOSED POLARITYES; AND COMPLIYING MOREOVER WITH THE FOLLOWING CONDITIONS:

THE ANGLE SUSTAINED FOR THE ZONES [NORTE],[SOUTH], THAT IS RELATED WITH THE POLAR STEP ANGLE BY THE ECUATION 1b IN FIGURE 2, IT MUST BE THE LARGEST POSSIBLE, THAT IS, THE ACTIVITY FACTOR "F" MUST BE THE CLOSER POSSIBLE TO THE UNITY.

THE MAGNETIC FLUX DENSITY ON THESE ZONES [NORTH], [SOUTH] MUST BE THE HIGEST POSSIBLE, AMPLY SUPERIOR TO 1 T.

FINALLY, AND TO SATISFY AS WELL THE REQUIREMENTS IMPOSED OF SYMETRICAL OPERATION AS MOTOR OR GENERATOR, THE CONDITION OF BEING THE UNIFORMER POSIBLE THE MMF IN THE ZONES [NORTH][SOUTH] IS IMPOSED, AS IS SHOWED IN THE FIGURE 28b.

THE THREE PRECEDING CONDITIONS IN COMBINATION, PRODUCE ON EACH ONE OF THE COILS [12] AN ALTERNATIVE VOLTAGE, AS IS SHOWED IN THE FIGURE 28c, WHICH IS THE LONGEST POSIBLE DURING THE LONGEST TIME POSSIBLE.

TO SATISFACE THE CONDITION OF EVEN MAGNETIZATION ON THE SURFACES [NORTH],

[SOUTH] VIA PERMANENT MAGNETS, IT IS GIVEN TO THE POLAR FACES THE SHAPE OF CIRCLAR ARCS, PARALLEL TO THE INTERNAL CIRCUMFERENCE OF THE STATOR[5] WHICH IS MAGNETICED.

IN THIS WAY IT IS MAINTAINED AN AIR GAP [lo] EVEN AND SYMETRIC, IN CONTRAST TO ANOTHER CLASSIC METHOD OF NEUTRALIZATION THE REACTION FIELD, NOT MENTIONED, THAT INTRODUCE A UNEVEN AIR GAP, METHOD THAT TRAY THE INSUITABILITY TO PRODUCE A CONSIDERABLY ASIMETRY IN THE MACHINE OPERATING AS MOTOR AN GENERATOR.

WITH THE AIM OF GIVING THE BODY OF THE PERMANENT MAGNETS A SHAPE THAT ALLOWS LIMITATE THE DEMAGNETIZING FACTOR, MINIMIZE THE ESTRUCTURAL WEIGHT AND TO ADMI NISTRATE THE QUANTITY OF MAGNETIC MATERIAL UTILIZED, THE BODY OF THE ROTOR[35] IS SHAPED AS THE FIGURE 29a SHOWS.

THAT CAN BE CONSIDERED COMPOSED FOR A PLURALITY OF MAGNETS[24], IN A REAL OR CONCEPTUAL WAY.

THIS IS A PIECE WICH TRASVERSAL SECTION FEATURES THE SHAPE OF A 'U', FIGURE 29b, WHOSE TOPS [24a] [24b] REPRESENT, THE [24a] HALF POLAR HEAD [SOUTH] AN THE [24b] HALF ANTIPOLAR HEAD [NORTH] OF THE FIGURE 29a.

THESE PIECES ARE DISPOSAL ONE ASIDE THE OTHER, IN A WAY THAT THE POLAR HEAD [SOUTH] AND ANTIPOLARES [NORTH] ARE COMPLETELY FORMED, AS IS SHOWED IN THE FIGURE 30.

THE WIDE OF THE BODY OF THESE MAGNETS[24], IT IS AS THE LONG "L" OF THE BODY OF THE STATOR[5] AND IT LONG IS "lm" AND IS GIVEN BY THE ECUATION 24.

THE PROFILE OF THE MAGNETS IS COMPOSED FOR THE FOLLOWING ELEMENTS, SEE THE FIGURE 29c:

BY TWO ARCS OF CIRCUMFERENCE "c_c" OF RATIO "Rr", THAT DEFINE THE HEMIHEADS [24a] AND [24b], AND THAT SUSTAIN AN ANGLE OF A HALF OF THE POLAR FACE "z" WICH LONGITUD IS "Cpm" AND IS GIVEN FOR THE ECUATION 27.

BY TWO RECTILINEOUS LATERAL OUTER SIDES OF LONGITUD "he" PARALEL TO THE STRAIGHT SEGMENT "r-r" AND "s-s"; SPLICED BY AN ARC OF EXTERNAL CIRCUMFERENCE OF RADIO "Re" WITH CENTER "Xc" AND "Yc", THAT DETERMINES THE RADIO "Rc".

BY TWO RECTILINEOUS LATERAL INNER SIDES OF LONGITUD "he" PARALEL EACH ONE TO THE CORRESPONDENT OUTER SIDE, SPLICED BY AN ARC OF INTERNAL CIRCUMFERENCE OF RADIO "Ri" WITH CENTER AS WELL IN "Xc" AND "Yc".

THE VALUES OF "Rc","he","hi", "Re" AND "Ri" ARE GIVEN FOR THE ECUATIONS 18 TO 22 INCLUSIVELY, DEPENDING ALL THESE ON THE SHAPE FACTOR "DELTA", THAT HAVE A VALUE RANGE ESTABLISHED BY THE DESIGUALITYES DE LA ECUACION 17.

THE DEMAGNETIZING FACTOR "Desm" FOR THE MAGNET,IS THE RATIO BETWEEN TWO TIMES THE LENGHT OF THE AIR GAP"lo" AN THE LENGTH OF THE MAGNET "lm", ECUATION 25, AND CAN CONTROL IT BY THE SHAPE FACTOR "Delta".

IN THIS WAY, SYMULTANEOUSLY THAT IS VARIED THE DEMAGNETIZING FACTOR "Desm", IS VARIED AS WELL THE MAGNET VOLUME "Vol_m" IN INVERSE PROPORTION, SINCE IT IS DIRECTLY PROPORTIONAL TO "lm", AS IT IS SHOWN IN THE ECUATION 26.

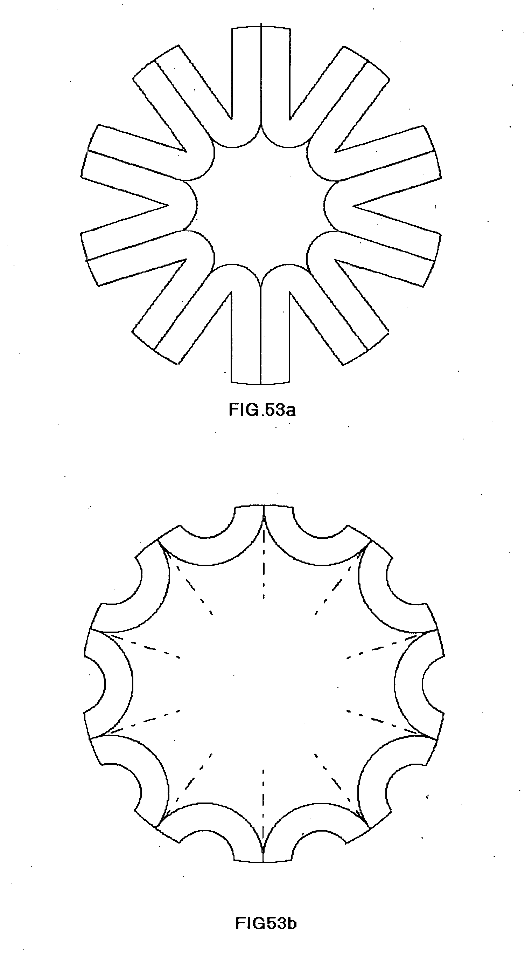

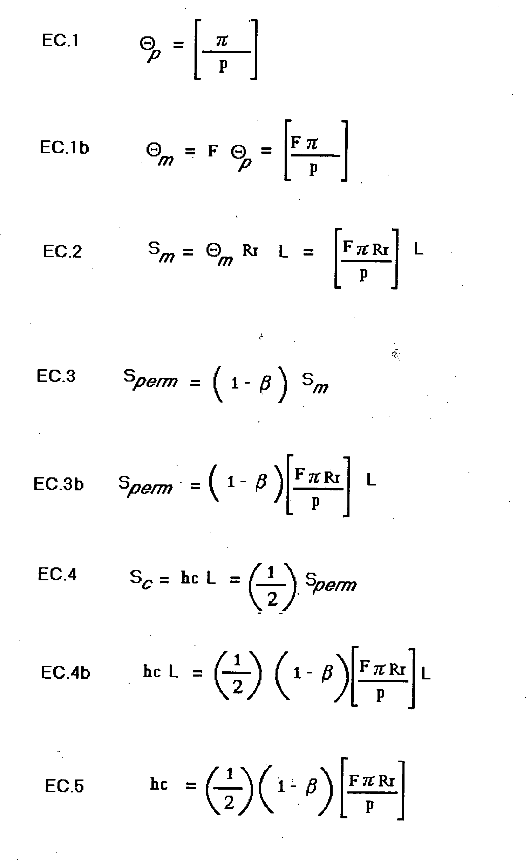

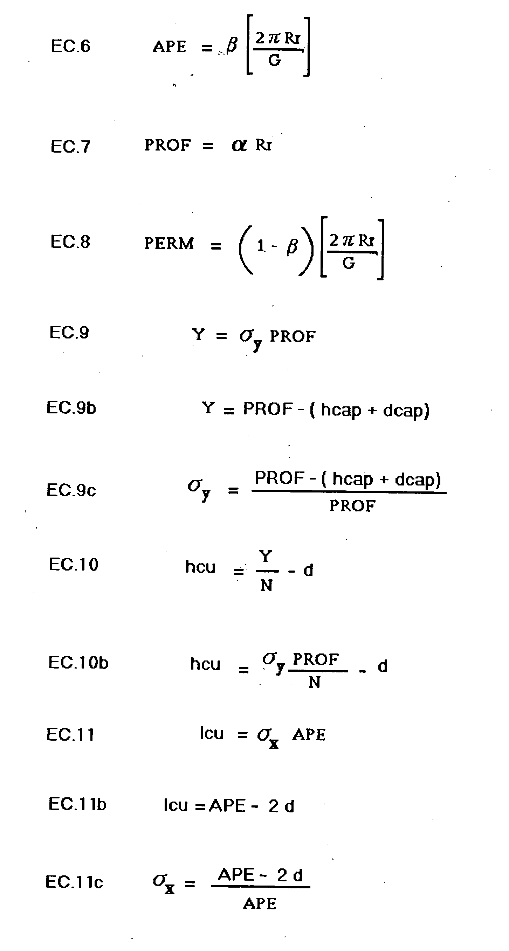

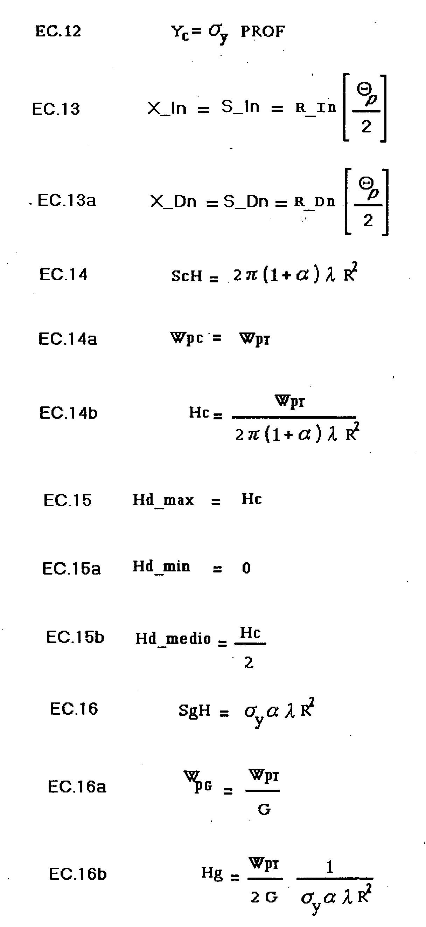

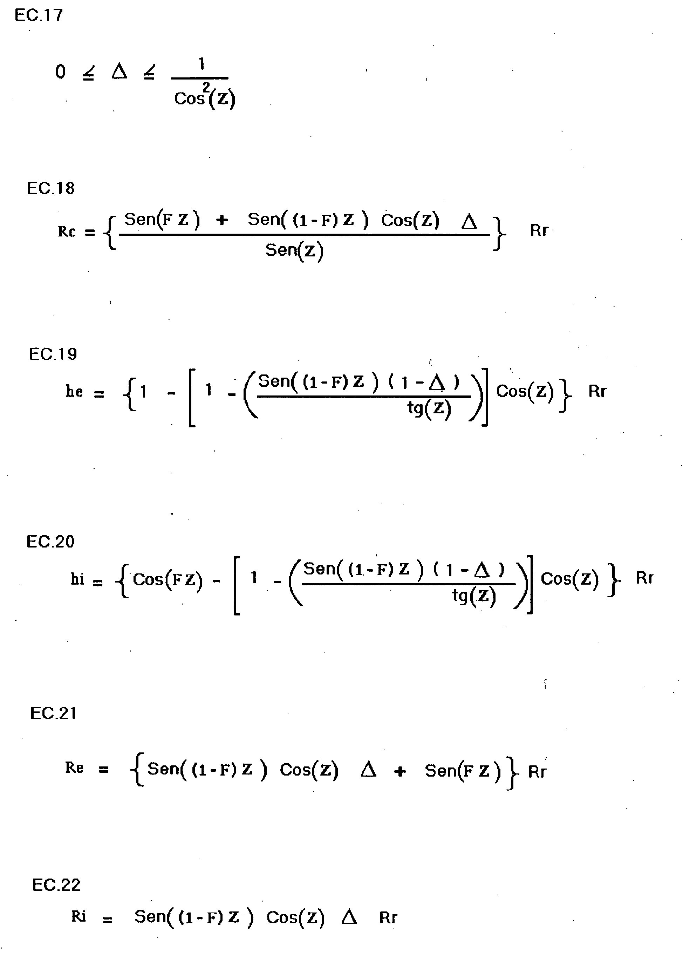

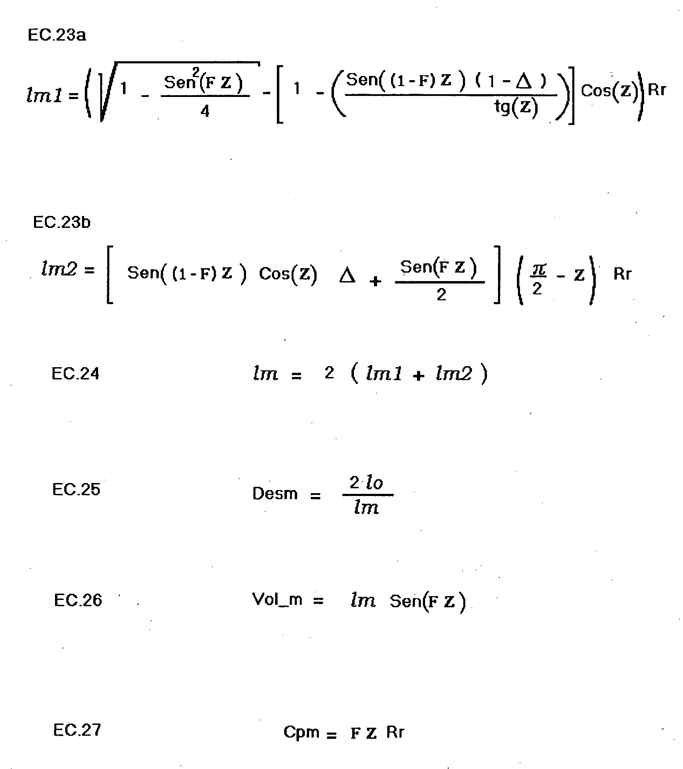

AS AN EXAMPLE OF THE EFFECT OF THE FACTOR "Delta", ON THE LONGITUD OF THE MAGNET, IS CONSIDERED A ROTOR IN THE FIGURES 53a AND 53b, IN WICH IS HAVING F=0,5 AND p=5 IN BOTH FIGURES, 53a AND 53b Delta=0 , THE MINIMUM, IN THE FIGURE 53a Delta=1.1 , THE MAXIMUM FOR p=5 , IN THE FIGURE 53b BEING THE LONGITUD OF THE MAGNET "lm" THE TWICE IN THE FIGURE 53a THAT IN THE FIGURE 53b; THAT IMPLIES DOUBLE VOLUME, AND HALF DEMAGNETIZATION IN THE FIGURE 53a THAT IN THE FIGURE 53b. HABING LET EXPOSED THE MAGNET GEOMETRY, WE CONSIDER NOW THE THEMA OF THE MACHINE EXITATION VIA THE SAME.

BY UTILIZING MAGNETS IT IS ACHIEVED THE ELIMINATION OF WEIGHT AN DISIPATIVES COILS, AND IS TAKING IN ACCOUNT THE DISPOSAL OF THESE ON THE ROTOR SHAFT[31], AS WOULD BE FOR THE CASE, IS SPARED AS WELL THE USE OF FRICTION CONTACTS FOR SUPPLY EXITATION CURRENT. IF WELL ALL THIS RESULT IN A IMPORTANT REDUCTION OF MACHINE VOLUME AND WEIGHT, BESIDE THE SYMULTANEOUS ENHANCING OF THE MACHINE EFFICIENCY, IN THE OTHER HAND, BEING THE MATERIAL OF PERMANENT MAGNETIZATION, AT FIRST SIGHT IS LOSSED THE POSSIBILITY OF CONTROLLING THE MACHINE EXITATION.

ALTHOUGHT, MUST BE CONFERRED IT THE FIELD CONTROLLED CARACTERISTIC.

THE INVENTION SOLVE THIS PROBLEM MOUNTING THE MAGNETS ON A SLIDIG CAR [30], AND VIEWS OF THIS ARE SHOWED IN THE FIGURE 32, FIGURE 33 AND THE FIGURE 34. THIS CAR, IS MECHANICALY JOINED TO A PARAXIAL STEM[32], THAT IT IS SHOWN IN THE VIEWS ON FIGURE 34.

VIA THIS MECHANISM, IT IS POSSIBLE TO DISPLACE THE MAGNETS [24] THAT COMPOSE THE ROTORIC BODY[35] INTO THE BODY OF THE STATOR[5] FROM THE EXTERIOR SIDE.

THIS METHOD, IF WELL DO NOT REGULATE THE OPERATING FLUX DENSITY INTO THE STATOR [5] ALTHOUGHT CONTROL THE TOTAL AMMOUNT OF FLUX, PRODUCING A EQUIVALENT NET EFFECT.

THE MAGNET CARRIER CAR [30] IT IS DISPOSED FOR MOUNTING THE MAGNET PIECES[24] ON THE PERIPHERY OF THE ROTOR[35] IN A DISTRIBUTED WAY, FEATURING A RADIAL SYMETRY, AS IT IS SHOWN IN THE FIGURE 30.

IT IS COMPOSED OF TWO FRAMES [30a], IN A SHAPE OF DISKS OF NO MAGNETIC MATERIAL WITH A ENGRAVED CONTURN [30b] ACCORDING TO THE MAGNETS [24] PROFILE, IN A WAY THAT THESE CAN BE ENGAGED AND FASTEN BY STICKING OR WELDING, OR AS WELL MAINTAINED PRESSED VIA RAILS [40], SEE FIGURE 31.

THESE FRAMES ARE MOUNTED IN PERPENDICULAR WAY ON A CYLINDRICAL HOLOW BRIDGE [30c] OF NO MAGNETIC MATERIAL, WHICH INTERNAL DIAMETER ALLOWS TO BE CROSSED FOR THE ROTOR SHAFT [31] , AND HAVE LONGITUDINAL [30d] CHANNELS OR STRIAS[30d] THAT ALLOWS TO TRANSMIT THE MOTOR COUPLE.

FORMED THE MAGNET CARRIER CAR[30] IN THIS WAY, THIS CAN DESLIZATE IN A PARAXIAL WAY ON THE ROTORIC SHAFT[31], TRANSMITING THE MOTOR COUPLE IN A ANGULAR WAY.

THE FIGURE 35 SHOWS VIEWS AND SECTIONS OF THE ROTOR SHAFT[31], THAT IT IS HOLOW AND WITH A LONGITUDINAL GROOVE[31a] TO ALOW CROSS THE UNION LOCK [32b] OF THE PARAXIAL STEM[32] WITH THE MAGNET CARRIER CAR [30]. THE LONGITUDINAL GROOVE [31a] MUST BE AS LONG AS THE MAGNET CARRIER CAR[30].

THE ROTOR SHAFT[31] MUST TO POSSESING TABS OR STRIAS[31b], FOR ENGAGE IN THE BRIDGE [30c] STRIAS [30d] FOR COUPLE TRANSMISSION OF THE MAGNET CARRIER CAR[30].

THE SLIDING PARAXIAL EXTRACTOR CONSIST OF A INNER STEM[32] THAT IS CONCENTRIC WITH THE HOLOW ROTOR SHAFT[31], IT IS PREFERRABILY CYLINDRICAL, AND IT SLIDES IN A FREELY WAY ALONG IT, BUT ACOMPANIYING ITS ROTATIONAL MOVEMENT.

THIS STEM [32] IS FINISHING IN ITS INTERNAL TOP, IN A ENGAGE[32a] FOR THE UNION LOCK [32b], WHICH CROSSING THE LONGITUDINAL GROOVE[31a] PERFORMED ON THE ROTORIC SHAFT[31], JOINT RIGIDILY THE STEM[32] TO THE SLIDING CAR [30].

THE EXTERNAL TOP [32c] OF THE STEM, IT IS EXTENDED OVER THE END OF THE ROTORIC SHAFT [31], AND WITH THIS IT IS ACCESIBLE FROM THE OUTSIDE, ALLOWING IN THIS WAY TO CONTROL THE MACHINE EXITATION .

THE CONTROL OF THE MACHINE EXITATION INSTRUMENTED VIA SLIDE CAR[30], INTRO DUCES IN A SUBTLE WAY A GREAT PROBLEM,THAT IS THAT THE EXTRACTION OF THE MAGNETS [24] OUT OF THE ENCLOSED MAGNETIC CIRCUIT OF HIGH PERMEABILITY PROPORCIONED BY THE BODY OF THE STATOR [5], CAUSES IT A PERMANENT DESMAGNETIZATION THAT INUTILIZES THEM.

THE INVENTION, FOR SOLVE DEFINITIVELY THIS PROBLEM, DISPOSAL ON THE SAME ROTORIC SHAFT [31], A DEMAGNETIZING CASE [33], FASTENED BY A HUB [33a].

THIS CASE IS A HOLLOW CYLINDER WITH A WALL[33b] OF CONSTANT THICKNESS "hcap", THAT IS CENTERED WITH THE ROTORIC SHAFT[31] AND IS SOLIDARY TO IT.

IT INNER DIAMETER "dc" IS SLIGTLY MAYOR THAT TO THE OUTER DIAMETER OF THE MAGNET CARRIER CAR[30] AND IT IS PERFORMED WITH MASSIVE MAGNETIC MATERIAL.

ONLY BY WAY OF EXAMPLE, THE CASE CAN BE EXECUTED IN SWEET IRON, SINCE THIS MATERIAL FEATURES A NOTABLE PERMEABILITY STILL WITH FLUX DENSITIES OF 3T, THAT ALOWS A SLIGHT AND DENSE DESIGN, MOREOVER IT IS A AVAILABLE AND EASY OF TOOLING MATERIAL.

INTO THE CASE [33], IT IS INTRODUCED THE SLIDING CAR [30] IN THE DEGREE THAT THE EXTRACTOR AXIAL [32] DISPLACES IT OUT OF THE BODY OF THE STATOR [5].

THEN, THE CASE [33] GIVES THE MANGNETS [24] A ENCLOSED MAGNETIC CIRCUIT WITH ENOUGH PERMEABILITY TO MAINTAIN INTACT ITS MAGNETIZATION.

THE FIGURE 39, AND THE FIGURE 40, SHOWS RESPECTIVELY, A PLAN VIEW AND A PERS PECTIVE OF A SECTION OF THE ANTIDESMAGNETIZING CASE.

IN THE DESCRIPTION OF THE MEASURES TO CONSTRUCT THE COIL[12], FOR CALCULATE THE BASE "lcu" AND THE HIGH "hcu" OF THE LEAD RECTANGULAR SECTION, GIVEN BY THE ECUATIONS 11 AND 10b RESPECTIVELY, IT HAD BEEN INTRODUCED TWO CLEARANCE FACTORS, WHICH HAD NOT BEEN EXPLAINED IN THE OCASSION.

THESE ARE "Sigma sub-x", ECUACION 10b, AND "Sigma sub-y" , ECUATION 10b BOTH ARE MINOR THAT THE UNITY,AND THEY REPRESENT THE CLEARED PART OF THE SECTION THAT THEY AFFECT TO.

THE FACTOR "Sigma sub-x" IS DETERMINED PRINCIPALLY FOR THE THICKNESS "d" OF THE INSULATING MATERIAL [12a] UTILIZED, INSTEAD THE FACTOR "Sigma sub-y" IT IS DETERMINED PRINCIPALLY FOR THE FREE SPACE "descap" OF THE CASE [33], AS IT IS SHOWN IN FIGURE 14 AND ATTACHED ECUATIONS.

THESE CLEARANCE IS DISPOSAL WITH TO ALLOW APROXIMATE THE CASE [33] TO THE STATOR [5] TO A ENOUGH SHORT DISTANCE "gcap", FOR THAT, THE HEADS [12] CAN NOT INTERFERRING WITH THE COILS [12].

THIS IS THE SIMPLER CONSTRUCTIVE WAY. FOR ENHANCE THE EFFICIENCY, MUST BE RESORT TO MORE COMPLEX CONSTRUCTIONS.

THE FACTOR LOST OF SECTION CAN BE COMPENSATED IN TWO WAYS:

IN COILS OF ONE OR TWO SPIRES, THE SECTION LOSE CAN BE ATENUATED BY FILLING THE GROOVE [3] SECTION AT THE SIDE OF THE LAST RIGHT HEMISPIRE [DN], GIVING IT AN ADDITIONAL HEIGH[50] OF "hcap", AS IT IS SHOWN IN FIGURE 42. WITH THIS IS NOTABILY ENLARGED THE EFFECTIVE VALUE OF THE FACTOR "Sigma sub-y"

FOR AN EFFECTIVE COMPENSATION WHEN THE COIL IS COMPOSED OF MORE SPIRES, A CONSTRUCTION WITH STAIRS [12c] MUST BE ADOPTED, AS IS SHOWED IN THE FIGURE 43, IN WHICH THE HIGH "hcap" IS DIVIDED BETWEEN ALL THE HEMIESPIRES,THEN THE FACTOR "Sigma sub-y" AFFECT ONLY THE HEADS [15], NEAR THE CASE[33], AS THE ECUATION 12 IN THE FIGURE 43 INDICATES.

IT IS NECCESARY LET EXPRESED ANOTHER FUNCTON OF THE DEMAGNETIZING CASE[33], SINCE IT IS NOT A LESS IMPORTANT FACT, THAT IT IS NECESSARY AS WELL FOR HANDLING AND TRANSPORTING THE MAGNETS, BEFORE AND AFTER OF THE PROCESS OF IMANATE THEM AND FOR INSTALLATE THEM INTO THE MACHINE.

TO GUIDE THE THE DISPLACEMENT OF THE SLIDING CAR[30] CENTERED INTO THE ANTIDE MAGNETIZING CASE[33], TO MAINTAIN THIS CONCENTRIC WITH THE ROTORIC AXLE[31], AN GIVE THE CASE , TO SUPPORT THE CENTRIFUGAL FORCE PRODUCED ON THE MAGNETS [24] IN SUCH A WAY THAT ATTENUATE THE TENSYLE EFFORTS INTO THE MASS OF THEM IN CASE THEY ARE FASTENED TO THE FRAMES [30a], WE CAN CROSS INSIDE THE INTERPOLAR CHANNEL [24c] OF THE MAGNETS[24], SOME GUIDE RAILS[40] RESTING ON A TOP ON ENGROOVES [33d] OF THE FRAME[33c] OF THE CASE [33], AN ON THE OTHER TOP ENGAGED IN A COUNTER-FRAME [34] MOUNTED AT THE OTHER TOP OF THE SLIDE CAR [30], ALSO SOLIDARY FIXED TO THE SHAFT [31].

IN THE FOLLOWING, IT IS DENOMINED HARD MAGNETIC MATERIAL,THE MATERIA THAT POSSES THE PROPARTY OF MAINTAIN THE IMANTATION WITHOUT NECESSITY OF ELECTRIC CURRENTS, AND THEREFORE ARE UTILICED TO CONSTRUCT MAGNETS.

THE DISPOSAL OF THE HARD MAGNETIC MATERIAL IS :

THE MOUNTING OF THE MAGNETS [24] ON THE SLIDING CAR [30], MUST BE PERFORMED WITH THESE IN A STATE OF COMPLETE DEMAGNETIZATION,AND HAVE SOME MONTAJE OPTIONS:

IF THE HARD MAGNETIC MATERIAL IS COMPOSED OF A PLURALITY OF PIECES [24], AND THESE ARE WELDED OR STIKED TO THE CAR[30], WITH OR WITHOUT UTILIZING THE GUIDE RAILS [40]; IT IS CONVENIENT THAT THIS OPERATION BE PERFORMED BEFORE PREVIOUSLY THE OPERATION OF MOUNTING THE ROTORIC ASSEMBLY [100].

IT CAN BE CHOICED TO NOT FASTEN THIS PIECES TO THE CAR[30], AND SIMPLY REST THEM ON THE ENGRAVES [30b] OF THE FRAMES [30a] INSTEAD, MAINTAINING THEM PRESSED VIA THE GUIDE RAILS [40] AS IT HAS BEEN INDICATED INDICATED, THIS DISPOSAL PRODUCE EFORTS IN THE MASS OF THE MAGNETS [24] VERY DIFFERENT THAT IF ARE WELDED OR ADHERED, THAT CAN BE SUITABLE IN CASE OF INTENSE CENTRIFUGAL ACELERATIONS.

IN THIS MONTAGE, WOULD BE JUSTIFIED TO LOCATE THE MAGNETS [24] ON THE SLIDING CAR [30] ALREADY ASSEMBLED ON THE SHAFT[31], DURING THE SAME OPERATION OF MOUNTING THE ROTORIC ASEMBLY[100].

IF INSTEAD OF DISPOSAL THE HARD MAGNETIC MATERIAL IN A PLURALITY OF MAGNETS [24], IT IS CHOSEN FOR A INTEGER PIECE WITH SHAPED WITH THE SAME GEOMETRY, AS IT IS SHOWN IN FIGURE 29a, ITS MOUNTING CAN BE PERFORMED BEFORE OR DURING MOUNTING THE ROTORIC ASEMBLY[100].

HAVING CONSIDERED THE MOUNTING OF THE HARD MAGNETIC MATERIAL, THE MOUNTING OF THE ROTORIC ASSEMBLE [100] IS INDICATED IN THE FOLLOWING SIX STEPS:

IT IS MOUNTING THE COUNTER-FRAME[34] FOR RESTING THE GUIDE RAILS[40], IN CASE OF CHOICED ITS USE.

IT IS MOUNTING THE SLIDING MAGNET CARRIER CAR[30] ON THE SHAFT [31], ENGAGING IT IN THE STRIAS[31b] OF THE SAME.

IT IS INTRODUCED THROW THE HOLLOW SHAFT [31], THE EXTRACTOR AXIL STEM [32], UPTO THE TOP [32c].

THE CAR[30] WITH THE STEM[32] ARE UNITED VIA THE LOCK[32b]. IF THE HARD MAGNE TIC MATERIAL WAS MOUNTED PREVIOUSLY TO ASSEMBLY THE ROTORIC ENSEMBLE[100], THEN IT IS READY THE BODY OF THE ROTOR [35].

IT IS MOUNTING ON THE SHAFT [31] THE CASE [30], WHOSE FRAME [33b] CAN HAVE ENGROVEMENTS [33d] FOR ENGAGING THE GUIDE RAILS[40].

IF GUIDE RAILS [40] ARE USED, THESE ARE ENGAGED ON A TOP INTO THE COUNTER-FRAME [34] AND ON THE OTHER TOP INTO THE FRAME [33] OF THE CASE [33] AND IF IT HAS BEEN CHOICED MAINTAIN THE MAGNETS [24] PRESSED VIA THE GUIDE RAILS [40] THEY MUST BE MOUNTED SIMULTANEOUSLY IN THIS OPERATION.

ALREADY FINISHED THE MOUNTING OF ALL THE COMPONENTS OF THE ROTORIC ENSSEMBLE [100], THE PROCESS OF IMANTATION FOLLOWS, WICH IS REALICED BY A DEVICE NOT REPRE SENTED IN THIS SPECIFICATION , BUT IT IS ENOUGH TO SAY THAT HAVE A DISPOSAL MECHANICALY ANALOG TO THE ESTATORIC ENSSEMBLE [90]. THE PROCCESS OF IMANTATION IS AS FOLLOW:

THE ROTORIC ENSSEMBLE IS WHOLY INTRODUCED IN THE IMANTING DEVICE, WITH THE ROTORIC BODY [35] WHOLY INTRODUCED IN THE CASE[33].

THE ROTORIC BODY [35] IS INTRODUCED INTO THE IMANTING MAGNETIC CIRCUIT; EXTRACTING THEM COMPLETELY FROM THE ANTIDESMAGNETIZING CASE [33] VIA THE STEM [32].

IT IS START TO IMANATE ALL THE MAGNETS [24] IN A WHOLE.

FINISHED THIS, THE CAR[30] WITH THE MAGNETS[24] ALREADY FULLY MAGNETIZED IS INTRODUCED COMPLETELY INTO THE ANTIDEMAGNETIZING CASE[33].

IT IS EXTRACTED THE WHOLE ROTORIC ENSEMBLE[100] FROM THE IMANTING DEVICE. WITH THIS IT IS CONSIDERED FINISHED THE IMANATION PROCESS.

ALREADY FINISHED THE IMANATION PROCESS, THE INSTALLATION OF THE ROTORIC ENSSEMBLE [100] INTO THE MOTOR FOLLOWS, THAT IS AS FOLLOW:

WITH THE STATORIC ENSSEMBLE [90] MOUNTED, BUT WITHOUT THE REAR SHELL [10], WICH IS MOUNTED ON THE REAR TOP [10] OF THE SHAFT [31], THE ROTORIC ENSSEMBLE [100] IT IS INTRODUCED BY THE REAR[102] OF THE MACHINE , WITH THE TOP[31c] TOWARD THE FRONT OF THE MACHINE [101], WHICH IS ENGAGED INTO THE BEARING OF THE IN FRONT SHELL [9], AND IT IS MOVED IN UPTO THE REAR SHELL STOPS AGAINST THE RIM OF THE REAR CARCAX [8], WITH THIS THE ENTYRE MOTOR IS ASSEMBLED, REMAINING TO TIE THE FIXING NUTS THAT BE DISPOSAL.

BEEN ALREADY FULLY DESCRIBED THE MACHINE THAT THIS INVENTION DEAL WITH, FOR ILLUSTATION, AND FOLLOWING THE FIGURES THAT ACCOMPANY THIS SPECIFICATION

AN EXAMPLE IS GIVEN , IN THE SHAPE OF LISTING WHERE ARE SHOWED ALL THE VALUES FOR A COMPLETE MACHINE, THAT HAVE PRESTACION OF NEAR 1 kW PER EACH kgf OF WEIGHT WITH A EFFICIENCY OF 98% AROUND,DEMONSTRATING THE ACOMPLISHMENT OF THE OBJECTIVS OF THE INVENTION .

EXAMPLE OF VALUES FOR A MACHINE OF 20000W-30000W

| | |
|---|---|
| Si 4%, LAMINATE THICKNESS | e_lam = 0.5 mm |
| TOTAL NUMBER OF STATORIC LAMINATES : | 300 |
| NUMBER OF NORMAL STATORIC LAMINATES : | 260 |
| NUMBER OF EXPANDED STATORIC LAMINATES: | 40 |
| ROTOR RADIO : | Rr = 5 cm |
| AIR GAP : | lo = 0.5 mm |
| INNER STATOR RADIO : | Restat i = 5.05 cm |
| OUTER STATOR RADIO : | Restat_e = 8.50 cm |
| FLANGES HIGH : | h_aleta = 0.75 cm |
| EXPANDED STATOR RADIO : | Rstat_x = 9.25 cm |
| FRAME HIGH : | hc = 0.98 cm |
| STATOR LENGTH : | L = 14 cm |
| SPIRE NUMBER : | N = 2 |
| GROOVE NUMBER : | G = 56 |
| TOOTH STEP : | APE + PERM = 5.6 mm |
| ANGULAR CONDUCTION FRACTION : | Beta = 0.3 |
| RADIAL CONDUCTION FRACTION : | Alfa = 0.5 |
| GROOVE DEEP : | PROF = 25 mm |
| GROOVE OPENING : | APE = 1.68 mm |
| COIL INSULATOR CLEARANCE : | Sigma_x = 90% |
| WALL CASE CLEARANCE : | Sigma_y = 64% |
| EFFECTIVE CLEARANCE : | Sigma_ef = 70% |
| COOPER BAR HIGH : | h cu = 4mm |
| COOPER BAR WIDTH : | l_cu = 4mm |
| TERMINAL CONECCTION PAD : | h_con= 6mm |
| STATOR WEIGHT : | 15 kgf |
| PAIRS OF POLES : | p = 4 |
| POLE FILLING FACTOR : | F = 5/7 = 0.7143 |
| MAGNET SHAPE FACTOR : | Delta = 0.5 |
| MAGNETS QUANTITY : | 2 x p = 8 |
| MAGNET LENGTH : | L = 14 cm |
| EIGTH MAGNETS WEIGHT : | 5.04 kgf |
| SLIDE CAR FRAME WEIGHT : | 0.5 kgf |
| SLIDE CAR COUNTER-FRAME WEIGHT : | 0.5 kgf |
| SLIDE CAR HOLLOW BRIDGE WEIGHT : | 0.5 kgf |
| SLIDE CAR TOTAL WEIGHT : | 1.5 kgf |
| ROTORIC SHAFT MAYOR DIAMETER : | 25 mm |
| SHAFT FORCE INTAKES DIAMETER : | 20 mm |
| ROTORIC SHAFT MEAN DIAMETER : | 22 mm |
| ROTORIC SHAFT LENGTH : | 480 mm |
| MAXIMUM WEIGHT OF THE ROTORIC SHAFT : | 1.4 kgf |
| OUTER DIAMETER OF THE BALLBEARING : | 50mm |
| INNER DIAMETER OF THE BALLBEARING : | 20mm |
| BALLBEARING WIDTH : | 15mm |
| BALLBEARING WEIGHT : | 0.1 kgf |
| BALLBERAING QUANTITY : | 2 |
| BALLBEARINGS WEIGHT : | 0.2 kgf |
| CASE LENGTH : | Lcap = 16 cm |
| CASE WALL : | 0.75 mm |
| CASE INNER DIAMETER : | dicap= 100mm + 0.2 mm |

(continued)

| | |
|---|---|
| CASE OUTER DIAMETER : | decap= 115mm + 0.2 mm |
| CASE CYLINDER WEIGHT : | 3.2 kgF |
| HUB AND FRAME OF THE CASE WEIGHT : | 0.5 kgF |
| CLEARANCE OF THE WALL CASE : | Sigma_y = 64% |
| INNER DIAMETER OF THE CARCAXS : | |
| MEAN DIAMETER OF THE CARCAXS : | 17 cm |
| CARCAX THICKNESS : | Hcar = 1 cm |
| LIGHT FRONT CARCAX LENGHT : | 4 cm |
| LIGHT FRONT CARCAX WEIGHT : | 0.576 kgf |
| LIGHT REAR CARCAX LENGTH : | 18 cm |
| LIGHT REAR CARCAX WEIGHT : | 2.595 kgf |
| INNER DIAMETER OF THE SEPERATING RING : | dintani = 16 cm |
| ENGROVE DIAMETER OF THE SEPERATING RING : | dentani = 17 cm |
| OUTER DIAMETER OF THE SEPERATING RING : | dexntani = 18.5 cm |
| SEPARATING RING HIGH : | alni = 2 cm |
| SEPARATING RING SECTION : | 2 cm2 |
| SEPARATING RING WEIGHT : | 0.83 kg |
| OUTER DIAMETER OF THE SHELL : | 18.5 cm |
| MEAN THICKNESS DIAMETER OF THE SHELL : | 1 cm |
| SHELL WEIGTH : | 0.725 kgf |
| AXIAL STEM DIAMETER : | 12 mm |
| AXIAL STEM LENGHT : | 25 cm |
| AXIAL STEM WEIGHT : | 0.212 kgf |
| TOTAL WEIGHT OF THE MACHINE : | 31.7 kgf |
| PHASES NUMBER : | 7 PHASES |
| SYMULTANEOUS ACTIVE PHASE : | 5 PHASES |
| PHASE VOLTAGE WAVE FORM : | TRAPEZOIDAL ALTERNATIVE |
| VOLTAGE FRECUENCY AT 2000 RPM(33/s) : | p x f = 133 Hz |
| VOLTAGE FRECUENCY AT 3000 RPM(50/s) : | p x f = 200 Hz |
| CURRENT WAVE FORM : | SQUARE ALTERNATIVE INJECTED |

REGIME TO 2000 R.P.M.

| | |
|---|---|
| IDDLE MACHINE RPM | 2000 RPM |
| PHASE TRAPEZOIDAL PEAK VOLTAGE AT 2000 RPM | 50 V |
| PHASE PEAK CURRENT | 80 A |
| SYMULTANEOUS MAXMUM CURRENT | 400 A |
| SUPPLY POWER AT 2000 RPM | 20 kw |
| EFFICIENCY | 96.5% |
| MECHANICAL POWER | 19.3 kw |
| COUPLE | 98.35 Nm, 10 kgfm |
| COIL TEMPERATURE DIFFERENCE | 65 oC |
| REGIME TO 3000 R.P.M. | |
| IDDLE MACHINE RPM | 3000 RPM |
| PHASE TRAPEZOIDAL PEAK VOLTAGE AT 2000 RPM | 75 V |
| PHASE PEAK CURRENT | 80 A |
| SYMULTANEOUS MAXMUM CURRENT | 400 A |
| SUPPLY POWER AT 2000 RPM | 30 kw |
| EFFICIENCY | 97.5% |
| MECHANICAL POWER | 29.25kw |

(continued)

| | |
|---|---|
| REGIME TO 3000 R.P.M. | |
| COUPLE | 98.35 Nm , 10 kgfm |
| COIL TEMPERATURE DIFFERENCE | 65 oC |

**Claims**

1. AN ELECTRIC ROTATIVE MACHINE OF EXITATION CONTROLABLE TO OPERATE AS MOTOR AS GENERATOR IDENTICALLY, COMPRISSING SUCH MACHINE A STATORIC ENSSEMBLE STATIC IN REFERENCE TO THE INSTALLATION, AND A ROTORIC ENSSEMBLE, THAT ROTATES INTO THE FIRST, WICH IS CHARACTERICED BECAUSE IT IS SPETIALLY PREPARED TO BE OPERATING BY MEANS OF A ELECTRONIC POWER CONTROL THAT INJECTS DIRECTLY A BIDIRECTIONAL CURRENT.

2. AN ELECTRIC ROTATIVE MACHINE THAT IN CONCORDANCE WITH THE CLAIM 1 CHARACTERICED BECAUSE SUCH CONTROLABLE EXITATION COMPRISES ONE OR A PLURALITY OF MAGNETS OF PERMANENT IMANTATION, MOUNTED OR MOUNTED ON THE ROTORIC ASSEMBLE

3. AN ELECTRIC ROTATIVE MACHINE THAT IN CONCORDANCE WITH THE CLAIM 2 IT IS CHARACTERICED BECAUSE THE MATERIAL OF SUCH MAGNETS IS OF A PERMEABILITY SIMILAR TO THE VACCUUM.

4. AN ELECTRIC ROTATIVE MACHINE THAT IN CONCORDANCE WITH THE CLAIM 2 IT IS CHARACTERICED BECAUSE THE SHAPE OF THE BODY OF SUCH MAGNETS IS SUCH THAT ENABLES TO CONTROL ITS DEMAGNETIZING FACTOR, WITHOUT AFFECTING THE GENERAL DIMENTION OF THE MACHINE, AN AT THE SAME TIME TO MAINTAIN INTO A MINIMUM ITS VOLUME.

5. AN ELECTRIC ROTATIVE MACHINE THAT IN CONCORDANCE WITH THE CLAIM 2 IT IS CHARACTERICED BECAUSE THE SHAPE OF THE POLAR FACES OF SUCH MAGNETS, IT IS SUCH THAT PRODUCES A SYMETRIC DISTRIBUTION OF MMF,GIVING IT IDENTICAL CHARACTERISTICS AS MOTOR AS GENERATOR.

6. AN ELECTRIC ROTATIVE MACHINE THAT IN CONCORDANCE WITH THE CLAIM 1,2 IT IS CHARACTERICED BECAUSE SUCH EXITATION CONTROL COMPRISES A MAGNET CARRIER CAR DISPLAZABLE ON THE SHAFT, WITH THE MAGNETS MOUNTED ON ITS PERYFERIA, AN ANTI DEMAGNETIZING CASE STIFFY MOUNTED ON THE SAME SHAFT AND A PARAXIAL CAR POSITIONA TING MECHANISM, HANDLED FROM THE OUTSIDE OF THE MACHINE .

7. AN ELECTRIC ROTATIVE MACHINE THAT IN CONCORDANCE WITH THE CLAIM 6 IT IS CHARACTERICED BECAUSE SUCH CAR POSITIONATING MECHANISM, COMPRISES A STEM MECHANICALY UNITED TO THIS, IN A TELESCOPICAL DISPOSAL IN THE HOLLOW OF THE ROTORIC SHAFT, STANDING OUT BY A TOP OF THE SAME AND BEING DISPLAZABLE OUTWARD AND INWARD FROM THE OUTSIDE.

8. AN ELECTRIC ROTATIVE MACHINE THAT IN CONCORDANCE WITH THE CLAIM 6, IS CHARACTERICED BECAUSE SUCH ANTIDEMAGNETIZING CASE COMPRISES A HOLLOW CYLINDER WITH A WALLS THICKNESS ESSENTIALLY UNIFORM, OF A MATERIAL PERMEABLE AT A REGIME, OF HIGH FLUX DENSITY, AND CAN CONTAIN THE SLIDING CAR NARROWLY.

9. AN ELECTRIC ROTATIVE MACHINE THAT IN CONCORDANCE WITH THE CLAIM 1, IT IS CHARACTERICED BECAUSE SUCH STATORIC BODY BEAR THE POWER COILS, AND SUPPORT EXCLUSIVELY THE ELECTRIC PART OF THE CONVERSION.

10. AN ELECTRIC ROTATIVE MACHINE THAT IN CONCORDANCE WITH THE CLAIM 9, IT IS CHARACTERICED FOR THE SHAPE OF SUCH POWER COILS AND THE METHOD FOR CONSTRUCT IT AN MOUNT IT.

11. AN ELECTRIC ROTATIVE MACHINE THAT IN CONCORDANCE WITH THE CLAIM 10 IT IS CHARACTERICED BECAUSE THE CONFORMATION OF SUCH POWER COILS MAKES THAT THESE BEHAVES AS VOLTAGE GENERATORS OF EXTRMELLY LOW IMPEDANCE, THAT OPERATING IN A COMPLETELY INDEPENDANT WAY.

**12.** AN ELECTRIC ROTATIVE MACHINE THAT IN CONCORDANCE WITH THE CLAIM 9, IT IS CHARACTERICED FOR THE POLAR DISTRIBUTION OF SUCH POWER COILS, MAKING IT INTER CONNECTABLES IN SEVERAL DISPOSALS TO DIFFERENT OPERATIV VOLTAGES AND CURRENTS.

**13.** AN ELECTRIC ROTATIVE MACHINE THAT IN CONCORDANCE WITH THE CLAIMS 1, 9, 10, 11 AND 12 IS CHARACTERICED BECAUSE SUCH POWER COILS OF EXTREMELLY LOW IMPEDANCE AND ITS INTERCONNECTIONS ARE IDEAL FOR DIRECT INJECTION OF CURRENT.

**14.** AN ELECTRIC ROTATIVE MACHINE THAT IN CONCORDANCE WITH THE CLAIMS 11, 12 IT IS CHARACTERICED BECAUSE TRHOUGH SUCH POWER COILS THAT OPERATE INDEPENDANTLY AND ITS INTERCONNECTIONS, THE CURRENT CAN CIRCULATE WHEN ON THESE ARE PRODUCED THE LARGER ELECTROKINEMATIC VOLTAGES, STAYING WHITOUT CURRENT WHEN THE ELECTROKINEMATIC VOLTAGE IS LOW OR NULL.

**15.** AN ELECTRIC ROTATIVE MACHINE THAT IN CONCORDANCE WITH THE CLAIM 9 IT IS CHARACTERICED BECAUSE SUCH STATORIC BODY DEPLOY THE HEAT INTERCHANGE SURFACE FOR THE HEAT OF LOSSES EXPELED BY SUCH POWER COILS, THAT COMPRISES THE INSERTION AT REGULAR INTERVALS, ALONG THE STATORIC BODY, OF SURFACE EXPANDING LAMINATES, THAT ARE IDENTICAL IN A WHOLE, EXCEPT IN THE OUTSIDE RADIO, WHICH IS SLIGTLY LARGER.

**16.** AN ELECTRIC ROTATIVE MACHINE THAT IN CONCORDANCE WITH THE CLAIM 9 AND 10 IT IS CHARACTERICED BECAUSE THE CONFORMATION OF SUCH COILS MAKES THAT THE HEAD OF THESE PROVIDES AN AMPLE SURFACE SUITABILY DISPOSED FOR COOLING BY VENTILATION FOR THE LOSSES HEAT EXPELED BY SUCH COILS,IN THE CASE OF AN OPENED CONSTRUCTION.

**17.** AN ELECTRIC ROTATIVE MACHINE THAT IN CONCORDANCE WITH THE CLAIMS 2 AND 6 IT IS CHARACTERICED BECAUSE SUCH MAGNETS CAN BE WELDED OR FASTENED TO THE MAGNET CARRIER CAR OR CAN BE AS WELL BE MAINTAINED PRESSED TO THE SAME FOR COMPRESSION BY GUIDING RAILS, THESE CAN BE USING AS WELL FOR STABILIZING THE ANTIDEMAGNETIZING CASE.

Restat_e

Restat_i

3

2

3a

3b

FIG1a

1a

3

4

FIG1.b

3b  3b

3a

2

1a  FIG.1c

e_lam

EC.1

$$\Theta_p = \left[\frac{\pi}{p}\right]$$

FIG2a

EC.1b

$$\Theta_m = F\ \Theta_p = \left[\frac{F\pi}{p}\right]$$

EC.2

$$S_m = \Theta_m\ Rr\ L = \left[\frac{F\pi\,Rr}{p}\right]L$$

EC.4b

$$hc\ L = \left(\frac{1}{2}\right)\left(1-\beta\right)\left[\frac{F\pi\,Rr}{p}\right]L$$

EC.3

$$S_{perm} = \left(1-\beta\right)S_m$$

EC.5

$$hc = \left(\frac{1}{2}\right)\left(1-\beta\right)\left[\frac{F\pi\,Rr}{p}\right]$$

EC.3b

$$S_{perm} = \left(1-\beta\right)\left[\frac{F\pi\,Rr}{p}\right]L$$

EC.4

$$S_c = hc\ L = \left(\frac{1}{2}\right)S_{perm}$$

FIG2b

FIG2c

EC.6

$$\text{APE} = \beta \left[\frac{2\pi R_I}{G}\right]$$

EC.7

$$\text{PROF} = \alpha R_I$$

EC.8

$$\text{PERM} = \left(1 - \beta\right)\left[\frac{2\pi R_I}{G}\right]$$

R<sub>I</sub>

PERM

APE

lo

PROF

hc

FIG.3

FIG.4a

FIG4.b

FIG.4c

FIG.5a

Restat_i

Restat_e

Restat_x

FIG.5b

e_aleta

hx

FIG.6a

EC.14

$$ScH = \frac{2\pi(1+\alpha)\lambda R^2}{G}$$

EC.15

$$Hd\_max = Hc$$

EC.16

$$SgH = \sigma_y \alpha \lambda R^2$$

EC.14a

$$Wpc = Wpr$$

EC.15a

$$Hd\_min = 0$$

EC.16a

$$Wpc = \frac{Wpr}{G}$$

EC.14b

$$Hc = \frac{Wpr}{2\pi(1+\alpha)\lambda R^2}$$

EC.15b

$$Hd\_medio = \frac{Hc}{2}$$

EC.16b

$$Hg = \frac{Wpr}{2G} \frac{1}{\sigma_y \alpha \lambda R^2}$$

FIG.6b

FIG.7a

SECTION A'-A'

6b

6p

6

6a

FIG.7b

6

A'

A'

6p

6p

6

FIG.7c

6p

FIG.8

FIG.9

FIG.10a

HEAD 15

MIDDLE 14

13

FOOT

$$\frac{\Theta_p}{2} \qquad \Theta_p \qquad \frac{\Theta_p}{2}$$

$$\frac{\Theta_p}{2} \qquad \Theta_p \qquad \frac{\Theta_p}{2}$$

3d

3i

3d

3i

12

FIG.10b       FOOT

FIG.11a

FIG.11b

FIG.12a

FIG.12b

FIG.12c

FIG.12d

FIG.13a

HEAD

FOOT

FIG.13b

HEAD

FOOT

FIG.14a

FIG.14b

EC.9

$$Y = \sigma_y \ PROF$$

EC.11

$$Icu = \sigma_x \ APE$$

EC.9a

$$descap = hcap + locap$$

EC.9b

$$Y = PROF - descap$$

EC.11b

$$Icu = APE - 2\ d$$

EC.11c

$$\sigma_x = \frac{APE - 2\ d}{APE}$$

EC.9c

$$\sigma_y = \frac{PROF - descap}{PROF}$$

EC.10

$$hcu = \frac{Y}{N} - d$$

EC.10b

$$hcu = \frac{\sigma_y \frac{PROF}{N}}{} - d$$

FIG.15a

FIG.15b

EC.13

$$X\_In = S\_In = R\_In \left[ \frac{\Theta_p}{2} \right]$$

EC.13a

$$X\_Dn = S\_Dn = R\_Dn \left[ \frac{\Theta_p}{2} \right]$$

FIG.16

FIG.17

FIG.18

$$\frac{\Theta_p}{2}$$

R_IN

HEAD

**IN**

X_IN

S_IN

LEFT HELIX

− 45°

R_IN

X_IN

S_IN

**IN**

*FOOT*

LEFT HELIX

− 45°

**FIG.19**

$$\frac{\Theta_p}{2}$$

R_D1

D1

X_D1

S_D1

*HEAD*

RIGHT HELIX

+ 45 o

$$\frac{\Theta_p}{2}$$

X_D1

R_D1

S_D1

*FOOT*

D1

RIGHT HELIX

+ 45 o

HEAD

FIG.20a

17

I4

22

21

19

D1

FOOT

16

18

D4
D3
D2
D1
I1
I2
I3
I4

19

17

21

22

5  2

1con

2 lcon

3lcon

4 lcon

1con

2 lcon

3lcon

4 lcon

FOOT

HEAD

FIG.20b

FIG.21a

HEAD

FOOT

FOOT

HEAD

FIG.21b

FIG.22b

FIG.22d

23b

FIG.22a

23

FIG.22c

23a

FIG22e

FIG22f

FIG.23a

$I_1$ $I_2$ $I_3$

HEAD

$I_4$

$I_4$

$I_4$

$I_1$

$I_2$

$I_3$

FOOT

$D_1$

$I_1$

FIG.23b

$I_1$

$D_1$

FIG.24a

FIG.24b

FIG.24c

FIG.25a

FIG.25b

FIG.26a

FIG.26b

FIG.27a

FIG.27b

FIG.28a

FIG.28b

FIG.28c

FIG.29a

FIG.29b

FIG.29c

FIG.30

FIG.31a

30e

30d

30b

30a

FIG.31b

30b

FIG.31c

30e

30c

A"

30

FIG.32a

A"

30a

30e

30a

30c

30d

SECTION A" - A"

FIG.32b

30a

30c

30a

31b

30e

31

31c

FIG.33

30a

30c

30a

32b

30e

31a

31b

31

32c

FIG.34

FIG.35a

31
31a
31
31c
A'''
A''

FIG.35b
SECTION A''' – A'''
31a
31b
B''
B'''

FIG.35c
31b

FIG.35d
SECTION B''' – B'''
31
31a
31
31c

31a

31b

31

31c

FIG.36

FIG.37a

FIG.37b

FIG.37c

FIG.38a

FIG38b

FIG.38c

FIG.39

FIG.40

FIG.41

SECTION A-A

EC.9 bis

$Y = \sigma_y$ PROF

FIG.42

SECTION A-A

EC.12

$Y_c = \sigma_y$ PROF

15

$Y_c$

12c

12c

12c

12c

12c

12c

12c

12c

12c

12c

12c

12c

PROF

12

12

SECTION A-A

FIG.43

FIG.44    SECTION A-A

FIG.45

SECTION B-B

FIG.46

SECTION A-A
FIG.47

SECTION A-A

FIG.48

EP 1 953 900 A1

SECTION B-B

FIG.49

FIG.50a            FIG.50b

| THE GREEK CHARACTER: | IS REFERENCED IN THE SPECIFICATION TEXT AS : |
|---|---|
| $\alpha$ | Alfa |
| $\beta$ | Beta |
| $\lambda$ | Lambda |
| $\pi$ | Pi |
| $\sigma_x$ | Sigma Sub-x |
| $\sigma_y$ | Sigma Sub-y |
| $\xi$ | Ji |
| $\Theta_p$ | Angle of the polar step |
| $\Theta_m$ | Angle of the polar face |

TABLE I

SECTION A-A

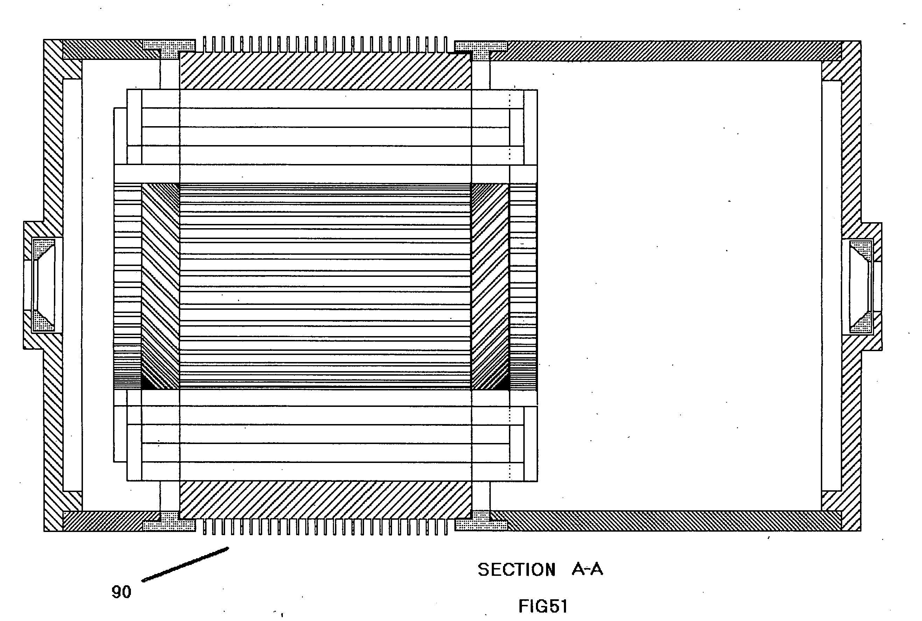

FIG51

90

SECTION A-A

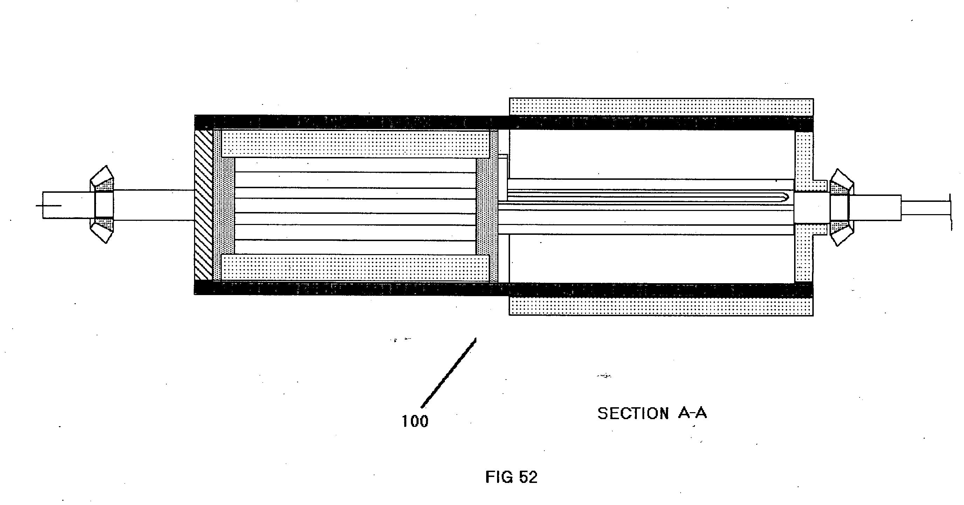

FIG 52

100

FIG.53a

FIG53b

EC.1
$$\Theta_\rho = \left[ \dfrac{\pi}{p} \right]$$

EC.1b
$$\Theta_m = F\,\Theta_\rho = \left[ \dfrac{F\,\pi}{p} \right]$$

EC.2
$$S_m = \Theta_m\,R_I\;L = \left[ \dfrac{F\,\pi\,R_I}{p} \right] L$$

EC.3
$$S_{perm} = \left( 1 - \beta \right) S_m$$

EC.3b
$$S_{perm} = \left( 1 - \beta \right)\left[ \dfrac{F\,\pi\,R_I}{p} \right] L$$

EC.4
$$S_c = hc\;L = \left( \dfrac{1}{2} \right) S_{perm}$$

EC.4b
$$hc\;L = \left( \dfrac{1}{2} \right)\left( 1 - \beta \right)\left[ \dfrac{F\,\pi\,R_I}{p} \right] L$$

EC.5
$$hc = \left( \dfrac{1}{2} \right)\left( 1 - \beta \right)\left[ \dfrac{F\,\pi\,R_I}{p} \right]$$

EC.6 $\qquad$ $APE = \beta \left[ \dfrac{2\pi R\imath}{G} \right]$

EC.7 $\qquad$ $PROF = \alpha\ R\imath$

EC.8 $\qquad$ $PERM = \left( 1 - \beta \right) \left[ \dfrac{2\pi R\imath}{G} \right]$

EC.9 $\qquad$ $Y = \sigma_y\ PROF$

EC.9b $\qquad$ $Y = PROF - ( hcap + dcap )$

EC.9c $\qquad$ $\sigma_y = \dfrac{PROF - ( hcap + dcap )}{PROF}$

EC.10 $\qquad$ $hcu = \dfrac{Y}{N} - d$

EC.10b $\qquad$ $hcu = \dfrac{\sigma_y\ PROF}{N} - d$

EC.11 $\qquad$ $lcu = \sigma_x\ APE$

EC.11b $\qquad$ $lcu = APE - 2\ d$

EC.11c $\qquad$ $\sigma_x = \dfrac{APE - 2\ d}{APE}$

EC.12 $\qquad Y_c = \sigma_y \ \ PROF$

EC.13 $\qquad X\_In \ = \ S\_In \ = \ R\_In \left[ \dfrac{\Theta_p}{2} \right]$

EC.13a $\qquad X\_Dn \ = S\_Dn \ = R\_Dn \left[ \dfrac{\Theta_p}{2} \right]$

EC.14 $\qquad ScH = 2\pi (1 + \alpha) \lambda R^2$

EC.14a $\qquad Wpc = Wpr$

EC.14b $\qquad Hc = \dfrac{Wpr}{2\pi (1 + \alpha) \lambda R^2}$

EC.15 $\qquad Hd\_max \ = \ Hc$

EC.15a $\qquad Hd\_min \ = \ 0$

EC.15b $\qquad Hd\_medio = \dfrac{Hc}{2}$

EC.16 $\qquad SgH = \sigma_y \alpha \lambda R^2$

EC.16a $\qquad W_{pG} = \dfrac{Wpr}{G}$

EC.16b $\qquad Hg = \dfrac{Wpr}{2G} \ \dfrac{1}{\sigma_y \alpha \lambda R^2}$

EC.17

$$0 \leq \Delta \leq \frac{1}{Cos^2(Z)}$$

EC.18

$$Rc = \left\{ \frac{Sen(F\,Z) + Sen((1-F)\,Z)\,Cos(Z)\,\Delta}{Sen(Z)} \right\}\ Rr$$

EC.19

$$he = \left\{ 1 - \left[ 1 - \left( \frac{Sen((1-F)\,Z)\,(1-\Delta)}{tg(Z)} \right) \right] Cos(Z) \right\}\ Rr$$

EC.20

$$hi = \left\{ Cos(F\,Z) - \left[ 1 - \left( \frac{Sen((1-F)\,Z)\,(1-\Delta)}{tg(Z)} \right) \right] Cos(Z) \right\}\ Rr$$

EC.21

$$Re = \left\{ Sen((1-F)\,Z)\,Cos(Z)\ \Delta + Sen(F\,Z) \right\}\ Rr$$

EC.22

$$Ri = Sen((1-F)\,Z)\,Cos(Z)\ \Delta\ Rr$$

EC.23a

$$lm1 = \left( \sqrt{1 - \frac{Sen^2(F\,Z)}{4}} - \left[ 1 - \left( \frac{Sen((1-F)\,Z)\,(1-\Delta)}{tg(Z)} \right) \right] Cos(Z) \right) Rr$$

EC.23b

$$lm2 = \left[ Sen((1-F)\,Z)\;Cos(Z)\;\;\Delta + \frac{Sen(F\,Z)}{2} \right] \left( \frac{\pi}{2} - Z \right) Rr$$

EC.24
$$lm = 2\,(lm1 + lm2)$$

EC.25
$$Desm = \frac{2\,lo}{lm}$$

EC.26
$$Vol\_m = lm\;Sen(F\,Z)$$

EC.27
$$Cpm = F\,Z\,Rr$$

**European Patent Office**

**EUROPEAN SEARCH REPORT**

Application Number

EP 07 02 1893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 28 27 859 A1 (ECKERT RUDOLF) 10 January 1980 (1980-01-10) | 1-6,9, 10,17 | INV. H02K7/12 H02K21/14 |
| Y | * page 3, line 1 - page 4, line 17 * * page 8, line 1 - line 39; figure 1 * ----- | 6-8 | ADD. H02K1/27 |
| X | WO 03/077403 A (ZEPP LAWRENCE P [US]; MEDLIN JERRY W [US]) 18 September 2003 (2003-09-18) | 1-5, 9-11,16, 17 | |
| Y | * page 10, paragraph 2 - page 12, paragraph 5; figures 2-4,6-8 * ----- | 6-8, 11-13 | |
| X | US 2004/041485 A1 (HORBER RALPH W [US]) 4 March 2004 (2004-03-04) | 1-6, 8-10,12, 14,15,17 | |
| Y | * page 3, paragraph 35 - page 4, paragraph 41; figures 1-4 * ----- | 11-13 | |

TECHNICAL FIELDS SEARCHED (IPC)

H02K

The present search report has been drawn up for all claims

| Place of search | Date of completion of the search | Examiner |
|---|---|---|
| Munich | 19 May 2008 | von Rauch, Marianne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 02 1893

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2008

| Patent document cited in search report | | Publication date | Patent family member(s) | | Publication date |
|---|---|---|---|---|---|
| DE 2827859 | A1 | 10-01-1980 | NONE | | |
| WO 03077403 | A | 18-09-2003 | AU | 2003217963 A1 | 22-09-2003 |
| | | | CN | 1639947 A | 13-07-2005 |
| | | | EP | 1483821 A1 | 08-12-2004 |
| | | | JP | 2005520471 T | 07-07-2005 |
| US 2004041485 | A1 | 04-03-2004 | NONE | | |